(19) Europäisches Patentamt
European Patent Office
Office européen des brevets

(11) Publication number: **0 026 669**
**B1**

(12) **EUROPEAN PATENT SPECIFICATION**

(45) Date of publication of patent specification: **22.05.85**

(51) Int. Cl.$^4$: **G 06 K 9/78**

(21) Application number: **80303443.8**

(22) Date of filing: **30.09.80**

(54) **Character recognition apparatus and method, using waveform analysis.**

(30) Priority: **01.10.79 US 81491**
**01.10.79 US 80952**

(43) Date of publication of application:
**08.04.81 Bulletin 81/14**

(45) Publication of the grant of the patent:
**22.05.85 Bulletin 85/21**

(84) Designated Contracting States:
**DE FR GB**

(56) References cited:
**GB-A-1 219 334**
**US-A-3 187 305**
**US-A-3 605 092**
**US-A-4 058 706**

**INSTITUTE OF ELECTRICAL AND ELECTRONICS ENGINEERS; Proceeding of the 2nd Intern. Joint conference on pattern recognitions; August, 13-15; 1974, Copenhagen DK, Proc. 2, Washington (USA). HAND et al.: "A Preliminary Note on Pattern Classification using incomplete vectors", pages 15-17.**

(73) Proprietor: **NCR CANADA LTD - NCR CANADA LTEE**
**6865 Century Avenue**
**Mississauga Ontario, L5N 2E2 (CA)**

(72) Inventor: **Nally, Robert Blaize**
**72 Norman Street**
**Waterloo Ontario (CA)**
Inventor: **Akister, James Francis**
**36 Rosling Avenue South**
**Waterloo Ontario N2L 2G8 (CA)**
Inventor: **Hulford, David**
**455 Lee Avenue**
**Waterloo Ontario N2K 2N6 (CA)**
Inventor: **Trohatos, George**
**180 Rodney Street**
**Waterloo Ontario N2J 1G3 (CA)**

(74) Representative: **Robinson, Robert George**
***International* Patent Department NCR Limited**
**206 Marylebone Road**
**London NW1 6LY (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 026 669 B1

## Description

Technical field

This invention relates to a character recognition apparatus of the kind in which a character to be recognized is scanned so as to provide a voltage waveform representative thereof, said waveform including a plurality of peaks. It relates also to a method of recognizing such characters.

Background art

In a known magnetic ink character recognition system of the kind specified, a single analog input waveform is obtained by passing the characters to be sensed, normally printed on a document, beneath a magnetic read head at least as wide as the height of the characters and having a single flux gap. The signal generated by the read head is a derivative waveform representing the rate of change of magnetic flux traversing the head as the characters are scanned. The distribution of ink, and thus flux, associated with each different character of a set of characters is unique, and the waveform derived for each different character uniquely identifies that character.

To simplify the timing of the waveform analysis process, the characters are provided with predefined geometric features which impart anticipatable timing characteristics to the derived waveforms. Thus, for the American Bankers Association E-13B font, each character is divided into a predetermined number of vertical segments corresponding to bar portions of the character. The characters are designed such that the distribution of ink undergoes significant change only at boundaries of such segments. Hence, peak fluctuations in the derived waveform caused by these variations in ink distribution can occur at only predetermined times during a character scan. Since the exact location in time of each peak in the waveform is critical to the recognition of the unknown character, it is imperative that the start of the analog waveform be determined as accurately as possible since any variation in the determination of the start will shift the location of the peaks from their true position, thereby reducing the accuracy of the recognition operation.

U.K. Patent Application 2 007 000 discloses a circuit for determining the start of a waveform by comparing the voltage level of the waveform with a fixed threshold level. However, although such known circuit operates satisfactorily where the intensity of the ink of the characters remains substantially constant, the start of a derived waveform may not accurately be determined with such a circuit in circumstances where the intensity of the ink of the characters varies significantly, since this will cause a variation in the rise time of the waveform.

U.S. Patent No. 3 605 092 discloses a character regognition apparatus including scanning means arranged to scan a character to be recognised and to provide a voltage waveform representative thereof, said waveform including a plurality of peaks, and processing means for evaluating samples of said waveform to provide an output representative of a recognised character. The apparatus has means for determining a start point of said waveform including means for sampling at a plurality of time intervals the first peak of said waveform to output signals representing the voltage amplitudes of the samples taken. A comparator included in the apparatus allows character recognition circuits to be enabled when the voltage of the most delayed sample is a certain percentage of the other samples. However, since the first peak may vary in shape, there is again a problem with this apparatus in that the start of a derived waveform may not accurately be determined.

U.K. Patent No. 1 219 334 discloses a character pattern scanning system using a variable threshold level which is dependent on the average of a number of sample values. This average value is produced by adding the samples and dividing the sum by the number of samples. However, this variable threshold is not utilized in determining the start point of a character waveform.

Disclosure of the invention

It is an object of the invention to provide an inexpensive character recognition system wherein the start of a derived waveform may be accurately determined.

According to one aspect of the present invention there is provided a character recognition apparatus including scanning means arranged to scan a character to be recognized and provide a voltage waveform representative thereof, said waveform including a plurality of peaks, means for determining a start point for said waveform, and processing means for evaluating said waveform commencing at said start point to provide an output representative of a recognized character, said means for determining a start point including means for sampling at a plurality of time intervals the first peak of said waveform to output signals representing the voltage amplitudes of the samples taken, and means for deriving an adaptive threshold voltage responsive to said samples taken from said first peak, and said processing means being arranged to apply said adaptive threshold voltage to each voltage amplitude of the samples taken to determine which sample represents said start point, characterized in that said means for determining a start point further includes first counting means for counting said samples, second counting means for counting a first predetermined number (e.g. two) of samples exceeding a fixed threshold, means for resetting said first and second counting means if the voltage amplitude of a sample is less than a fixed threshold with said second counting means having counted said first predetermined number and said first counting means having counted a second predetermined number (e.g. five) of samples greater than said first predetermined number, and means for recognizing a valid character start when said first counting means has counted a third predetermined number (e.g. sixteen) of samples greater than said second predetermined number, and characterized by an accumulator coupled to receive the voltage amplitude of each sample whose voltage amplitude is greater than a fixed threshold, and a storage means coupled to receive the output of said accumulator, the output of the storage means being coupled to the input of said accumulator thereby to enable said accumulator to add the voltage amplitudes of the samples taken, the processing means being arranged to divide the sum of these voltage amplitudes by the number of samples taken so as to derive said adaptive threshold voltage and to determine said start point.

According to another aspect of the invention there is provided a method of recognizing characters including the steps of scanning a character to be recognized so as to provide a voltage waveform representative thereof, said waveform including a plurality of peaks, determining a start point for said waveform, and evaluating said waveform commencing at said start point to provide an output representative of a recognized character, the step of determining said start point including sampling at a plurality of time intervals the first peak of said waveform to output signals representing the voltage amplitudes of the samples taken, deriving an adaptive threshold voltage value from the sample taken from said first peak and applying said adaptive threshold voltage to each voltage amplitude of the samples taken to determine which sample represents said start point, characterized in that the step of determining said start point further includes counting said samples by a first counting means, separately counting a first predetermined number of samples exceeding a fixed threshold by a second counting means, resetting said first and second counting means if the voltage amplitude of a sample is less than a fixed threshold with said second counting means having counted said first predetermined number and said first counting means having counted a second predetermined number of samples greater than said first predetermined number, and recognizing a valid character start when said first counting means has counted a third predetermined number of samples greater than said second predetermined number, adding the voltage amplitude of the samples greater than a fixed threshold, counting the number of samples taken, dividing the sum of the voltage amplitudes of the samples taken by the number of samples taken to derive said adaptive threshold voltage and to determine said start point.

In accordance with the invention, the start of each character waveform may accurately be determined, whereby the position in time of the subsequent peaks in the waveform may accurately be determined.

Brief description of the drawings

One embodiment of the invention will now be described with reference to the accompanying drawings, wherein:

Fig. 1 shows a system block diagram of a character recognition apparatus in accordance with the invention;

Fig. 2 is a schematic diagram of the first peak in a typical analog waveform generated as a result of scanning a magnetic character, showing the location of fixed and adaptive thresholds for high and low intensity peaks;

Figs. 3A—3I inclusive taken together disclose logic circuits included in the apparatus of Fig. 1 for generating signals representing the amplitude and position of a number of samples of the first peak of a generated analog waveform and of the overall waveform;

Fig. 4 is a diagram showing the manner in which Figs. 3A—3I inclusive are arranged with respect to each other to form said logic circuits;

Figs. 5A and 5B together define a schematic representation of the samples taken of the analog waveform at predetermined intervals before and after sample amplitude smoothing;

Fig. 6 is a schematic representation of the windows generated in accordance with the present invention showing their location along the waveform for extracting the sample with the maximum amplitude together with its location within each window;

Fig. 7 is a flowchart of the general overall operation of the character recognition apparatus of Fig. 1;

Fig. 8 is a flowchart of the general overall operation of said character recognition apparatus in extracting the samples having maximum amplitudes in each window and normalizing the extracted samples;

Figs. 9A—9F inclusive are a detailed flowchart showing the operation of said character recognition apparatus in ascertaining the start of a character waveform, extracting the samples having maximum amplitudes in each window and normalizing the extracted samples;

Fig. 10 is a schematic diagram of a template stored by the template matching unit representing the character 0 showing the location of the windows with respect to an unknown character waveform in which are located the features of the unknown character corresponding to the peak positions of the unknown character waveform;

Figs. 11A and 11B taken together disclose a block diagram of the template matching unit of the recognition system;

Figs. 12A—12G inclusive taken together disclose a portion of the logic circuits for establishing the values of the templates in accordance with the features of the unknown character waveform;

Fig. 13 is a diagram showing the manner in which Figs. 12A—12G inclusive are arranged with respect to each other to form the logic circuits;

Figs. 14A—14C inclusive taken together disclose another portion of the logic circuits for matching the windows of the templates with the features of the unknown character waveform;

Fig. 15 is a diagram showing the manner in which Figs. 14A—14C inclusive are arranged with respect to each other to form the logic circuits;

Figs. 16A—16D inclusive taken together further disclose a portion of the logic circuits for comparing the minimum distances;

Fig. 17 is a diagram showing the manner in which Figs. 16A—16D inclusive are arranged with respect to each other to form the logic circuits;

Fig. 18 discloses a logic circuit of the clock generator used in the template matching logic circuits;

Fig. 19 discloses a logic circuit for the output buffer used in the template matching logic circuits;

Fig. 20 discloses an output buffer which outputs the two minimum values for each template;

Fig. 21 discloses logic circuits for selecting the data outputted by the template matching logic circuits;

Fig. 22 discloses a logic circuit for generating the clock signals used in transferring the minimum values into the character recognition processor;

Figs. 23A and 23B inclusive taken together disclose a flowchart of the operation of the template matching operation;

Figs. 24A and 24B inclusive taken together disclose a flowchart of the character recognition operation in which thresholds are applied to the minimum distances.

Best mode for carrying out the invention

Referring now to Fig. 1, the character recognition apparatus shown therein includes a single gap magnetic read head 20 which is positioned adjacent the path of movement of a document having characters printed thereon in magnetic ink.

While the characters of the present embodiment are printed in the form of the E-13B character font which has been adopted by the American Bankers Association for use with handling of checks, which characters are well known in the art and illustrated in numerous prior references, it is obvious that the recognition system of the present invention can be used with any character font which results in a unique analog waveform when scanned by the read head 20. As the document moves past the read head 20 in the direction indicated by the arrow in Fig. 1, the read head 20 will generate an analog electrical signal corresponding to the time derivative of the change in flux of the magnetized ink defining each character, which signal includes a first peak generally indicated by the numeral 32 (Fig. 2). The character waveform is transmitted from an amplifier 22 through an analog filter 24 for filtering out noise to an analog/digital (A/D) converter 26 which digitizes the analog signals and outputs from block 30 (system operation flowchart of Fig. 7) a byte or eight bits of binary data each representing a sample of the character waveform to a comparator circuit 28 (Fig. 1) used in generating a threshold for determining the actual start of the character waveform in a manner that will be described more fully hereinafter with respect to Fig. 3A—3I inclusive. The sampling rate of the A/D converter 26 used in the present embodiment is 128 KHz. The analog/digital converter 26 is commercially available as Part No. MN5141 from the Micro Network Corporation of Worcester, Massachusetts.

As shown in Fig. 2, the first peak 32 of the character waveform may, because of the intensity of the ink, take the form of a high intensity peak 34 or a low intensity peak 36. If applying a fixed threshold ($T_F$) to either of the peaks 34 and 36, it will be seen that the location of the start of the intensity peaks $P_H$ and $P_L$ for the respective peaks 34 and 36 will vary which severely degrades the recognition operation since the peak positions of the waveform are shifted horizontally out of their proper windows. The present invention thus includes the generation of adaptive thresholds ($T_{AH}$) ($T_{AL}$) for the respective peaks 34 and 36 which, as shown in Fig. 2, will intersect the character waveform in the same location ($P_A$) regardless of the intensity of the waveform. For purposes of simplifying the present disclosure, the intensity peak line $P_A$ of Fig. 2 has also been designated as representative adaptive threshold ($T_A$) so as to hereinafter define either one or both of the high and low intensity peaks 34 and 36 illustrated. In addition, such adaptive threshold in each instance reduces the effects of respective noise peaks 34a and 36a which may normally be encountered in the first peak of the character waveform.

Again referring to Fig. 1, the comparator circuit 28 will compare the amplitude of each sample outputted by the 8-bit A/D converter 26 with a fixed threshold and will output the amplitudes of those samples which exceed the fixed threshold for storage in an accumulator circuit 38 under the control of logic circuit 39. A counter 40 will count the number of samples that are stored in the accumulator 38. The comparison of the samples being outputted by the A/D converter 26 will continue until the end of the peak 32 (Fig. 2) is detected, at which time the count outputted by the counter 40 is stored in a buffer 42 while the sum appearing on the output of the accumulator 38 is stored in a buffer 44. A processor 46, such as a SIGNETICS 8X300, coupled to the buffers 42 and 44 will divide the sum of the samples stored in the buffer 44 by the count appearing in the buffer 42 to arrive at the value level of the adaptive threshold ($T_a$). As shown in the flowchart of Fig. 7, after receving the data by block 30 from the buffers 42, 44 (Fig. 1), the processor 46 will subtract the amplitude of the adaptive threshold from each of the samples outputted by the A/D converter 26 until the start of the character waveform (block 48) is detected. The processor 46 will then store the amplitudes of the samples taken by the A/D converter 26 of the character waveform (Fig. 6). The samples stored are then smoothed and reduced (blocks 50 and 52 of Fig. 7) by adding the amplitudes $Y_1$ and $Y_2$ of two adjacent samples and dividing by two (Fig. 5B) to arrive at the mean amplitude ($Y_1'$) of the samples, which value is to be subsequently used in determining the peaks of the unknown character waveform 32 (Fig. 2).

To perform recognition or classification of E-13B character waveforms, features or segments must be extracted from the waveforms. These features must contain all the relevant information to allow any one E-13B character waveform to be distinguished from any other such waveform despite severe distortion of the waveforms. As shown in recognition system flowchart of Fig. 8, in extracting and normalizing the maximum amplitude samples or features from the samples outputted by the A/D converter 26 (Fig. 1), the processor 46 has determined that a valid character is present as a result of the generation of the adaptive threshold (block 56). The processor 46 will then apply a plurality of windows to the features extracted from the waveform 32, the location of each of which windows is shown in Fig. 6. The features extracted from the segmented E-13B character waveform 32 (Fig. 2) are the maximum values corresponding to the peaks in the waveform 32 and their positions in the windows. The features are separated into positive and negative values for recognition and it is to be noted that the feature position in each window is measured relative to the first (i.e. character start) sample ($Y_1$).

As shown in Fig. 6, there are seven positive and seven negative windows. Positive window #1 ($+W_1$) is five samples wide due to the character start thresholding of a portion of the first peak. As further shown in Fig. 6, between the windows are also "dead samples". The purpose of this intercharacter dead time is to cover up noise or character waveform overflow beyond the character window (i.e. between characters) which might cause false character starts and hence performance degradation. In extracting the maximum features in each of the windows $W_1$—$W_7$ (Fig. 6), the processor 46 will select the seven positive maximum values in windows $+W_1$—$+W_7$ and the seven negative maximum values in windows $-W_1$—$-W_7$ (blocks 58 and 60 of Fig. 8) and store the values.

As is well-known in the art, E-13B characters are printed with ink that results in the waveforms which represent the characters, each waveform having "built-in" amplification factors. The actual amplitude of character waveforms can vary from character to character due to ink intensity. The amplification factor, due to ink intensity alone, does not carry any information as to identification of the character represented by the waveform. The majority of the information in the waveform, which defines the character, consists of the relative amplitudes and positions of the waveform peaks. Any peak amplitudes in a E-13B waveform are a function of two variables, shape and ink intensity. In order to eliminate ink intensity as a factor in the recognition operation, a normalization factor (N.F.) is generated which enables that the amplitude of every peak or feature in the waveform is exactly equal to the amplitude of every equivalent peak or feature in the same waveform where the ink intensity is at a 100% level. In normalizing the features stored as a result of the feature extraction operation just performed, the processor 46 will select the two maximum positive values of the features stored (block 64 of Fig. 8) and the two maximum negative values (block 66). The processor will then sum the four values (block 68) and divide the sum by four to arrive at a normalization factor (NF) (Block 70). The processor will then divide each of the seven positive and seven negative values by the normalization factor (NF) (block 72) and then multiply the normalized values by a scaling factor (block 74). The scaling factor in the present embodiment has the value of fifty-four which brings the normalized values back into full scale. The processor 46 will then store the values (block 76 of Fig. 8) for subsequent transmission to a template matching unit 47 (Fig. 1) which will correlate each of the normalized features outputted by the processor 46 to a plurality of templates each representing a known character (block 78 of Fig. 7).

The template matching unit 47 will correlate a plurality of templates each representing a known character to the features outputted by the processor 46. The template matching unit 47 will also output data representing the distances between the features of the unknown character waveform and windows defined by the templates where the features is found to be outside the window of a template. This data is transmitted to a character recognition process 49 which applies a plurality of thresholds to the distances outputted by the template matching unit 47 to recognize the unkown character.

Referring now to Figs. 3A—3I inclusive, as arranged in the manner shown in Fig. 4, there are disclosed logic circuits generating the signals representing the sum of the amplitudes of the samples taken under the peak 32 (Fig. 2) by the A/D converter 26 together with the number of samples taken. These signals are transmitted to the processor 46 (Fig. 1) which divides the sum of the amplitudes of the samples by the number of samples to arrive at the voltage level of the adaptive threshold ($T_a$). As shown in Fig. 3A, the A/D converter 26 will output eight bits of data over lines 90a—90h inclusive representing a sample of the analog waveform outputted by the read head 20 (Fig. 1) representing the unknown character. The least significant bit (LSB) of the data appears on line 90a while the most significant bit (MSB) is transmitted to an inverter 92 and appears on line 90h. The A/D converter 26 will also output an end-of-conversion signal $\overline{EOC}$ which when low signals the end of the A/D converter 26 operation.

The signal $\overline{EOC}$, which is high at this time, is transmitted through an inverter 94 over line 96 (Figs. 3B and 3C) to the processor 46 (Fig. 1) notifying the processor that the A/D converter 26 is starting to output samples of a character waveform. The inverter signal EOC is also transmitted over line 96 to the D input of a #7474 flip-flop 98 (Fig. 3A) which, upon receiving the clock signal MCLK over line 100 from a master clock source 102, clocks the high signal EOC out of the Q output to a #74164 shift register 106. The shift register 106 receives the clock signal MCLK transmitted over line 100 through an inverter 108 (Fig. 3D) and over line 110 to the shift register 106 which outputs a plurality of phase clock signals $Q_1$—$Q_7$ inclusive for use in clocking various logic circuits in a manner which is well-known in the art. The shift register 106 also receives a control signal from a #7474 flip-flop 112 (Fig. 3D) which is reset by the signal EOC appearing on line 104 enabling a low signal appearing on the $\overline{Q}$ output of the flip-flop to be transmitted over line 114 to the shift register 106 (Fig. 3A). The flip-flop 112 is set by the clock signal $\overline{Q_1}$ which is the output of an inverter 116 (Fig. 3B) connected to the $Q_1$ clock line 118 of the shift register 106.

The eight bits of data appearing on the data lines 90a—90h inclusive and representing a sample of the character waveform are transmitted (Figs. 3A, 3B and 3C) to an output buffer comprising a pair of #8T98 tri-state buffers 115 and 117 (Fig. 3C) which continuously transfer the output data from the A/D converter 26 over output lines 120a—120h inclusive to the processor 46 (Fig. 1), which in turn stores each 8-bit sample outputted by the converter 26 in a RAM located in the processor 46. As will be described more fully hereinafter, the processor 46 will apply the adaptive threshold ($T_a$) (Fig. 2) to each of the samples stored in such processor RAM to arrive at the start of the character waveform.

The data bits appearing on lines 90a—90h inclusive (Figs. 3A and 3B) are also transmitted to a pair of #7485 4-bit comparators 122 and 124 (Fig. 3D) which will compare each 8-bit sample appearing at the A inputs with a fixed threshold appearing at the B inputs. In the present example, the comparators 122 and 124 are wired to initiate a comparison operation with the amplitude value of 2 appearing at the B inputs. If the value of the data representing the amplitude of the sample is greater than 2, a high signal will appear on the output line 126 (Figs. 3E and 3G) of the comparator 124, which signal is transmitted to the D input of a #7474 flip-flop 128 (Fig. 3G). Upon the occurrence of the next clock signal $Q_2$, a high signal will appear at the Q output of the flip-flop 128 for transmission over line 130 (Figs. 3G and 3E) to the B inputs of the comparator 122 which changes the signal level from a 2 to a 3. Subsequent data samples appearing at the A inputs of the comparators 122 and 124 will keep the signal high on line 126 indicating that the samples being outputted by the converter 28 are samples of the first peak of a valid character waveform. The amplitude value of 3 is selected to distinguish between the actual peak of the character waveform or noise. If, when comparing the data samples appearing at the A input of the comparators 122 and 124 with the signal level appearing at the B input, a high signal appears on line 132 (Fig. 3E and 3G) of comparator 124 indicating the amplitude of the sample appearing at the A inputs of the comparators 122 and 124 is less than 3 and is therefore a noise peak of the type (34a or 36a) shown in Fig. 2, the high signal appearing on line 132 will be transmitted to an inverting input of an AND gate 134 (Fig. 3G) whose output signal clock accumulator (CLK ACCUM) will be low, thereby disabling the character start operation in a manner than will be described more fully hereinafter. The logical elements disclosed in the present application are commercially available from the Texas Instruments Corporation of Dallas, Texas.

If the signal on line 126 remains high indicating the samples outputted by the A/D converter 26 (Fig. 1) represent the first peak 32 (Fig. 2) of a valid character waveform, the high signals are transmitted over line 126 (Fig. 3D) to a #74161 counter 136 (Fig. 3B) which starts counting the samples outputted by the converter 26 (Fig. 1) found to have an amplitude above the value of 3. Upon the count reaching 2, the $Q_1$ output line of counter 136 will go high which signal is transmitted over line 138 to the D input of a #7474 D-type flip-flop 140 (Fig. 3E). Upon the occurrence of the next clock signal $Q_4$ on line 142 (Figs. 3D and 3E), the flip-flop 140 will clock a high signal over its Q output line 144 (Figs. 3E and 3H) to an input whose NAND gates 146 and 148 (Fig. 3H) condition the gates for operation in a manner that will be described hereinafter.

As described previously, upon the amplitude of the samples appearing at the A inputs of comparators 122 and 124 being greater than 3, the signal appearing on line 132 (Figs. 3D and 3G) will be low, which signal is transmitted to an inverting input of the AND gate 134 on whose other inputs will appear the low signal CHSTART on line 150 and the clock signal $\overline{Q_1}$. Upon the occurrence of these low signals, the AND gate 134 will output the high signal CLKACUM over line 152 to the clock inputs of a pair of #74174 flip-flops 154 (Figs. 3B and 3E) and 156 (Figs. 3E) which will latch the outputs of a plurality of #74283 adders 158, 160 and 162 (Figs. 3B and 3E) during the time the clock signal $\overline{Q_1}$ goes low.

As shown in Figs. 3B, 3E and 3H, the inputs to the adders 158—162 inclusive are coupled to the output of the flip-flops 156 and 154 and the input lines 90a—90h inclusive over which appears the amplitudes of the samples outputted by the A/D converter 26. It is thus seen that the adders 158—162 inclusive and the flip-flops 152 and 154 function to accumulate the amplitude of the samples outputted by the A/D converter 26, which sum is transmitted over the output lines 164a—164f and 166a—166f inclusive (Figs. 3B, 3C, 3E and 3F) to a pair of #8T98 tri-state buffers 168 and 170 (Fig. 3C and 3F).

As previously described, the counter 136 (Fig. 3D) will latch the flip-flop 140 (Fig. 3E) upon reaching a count of 2 after the comparators 122 and 124 (Fig. 3D) have started comparing the amplitudes of the incoming samples with a fixed threshold of 3. Upon the outputting of the first sample by the A/D converter 26 over lines 90a—90h inclusive (Fig. 3A and 3D), a second #74161 counter 172 (Fig. 3G) will start to count the samples upon the occurrence of the $Q_2$ clock appearing on line 174. Upon the output count of the counter 172 reaching the count of 5, a high signal will appear on the output lines 176, 178 which are inputted into a NAND gate 180 resulting in the outputting of a low signal over line 182 to the D input of a #7474 flip-flop 184 (Fig. 3H). Upon the occurrence of the rising edge of the next clock pulse $Q_3$ appearing on line 186 (Figs. 3G and 3H), the flip-flop 184 will ouptut a high signal over its $\overline{Q}$ output line 188 to an input of the NAND gate 148. At this time a high signal will appear on the input line 144, of the NAND gate 148 which will be enabled when a high signal appears on the $\overline{Q}$ output line 190 (Figs. 3G and 3H) of flip-flop 128 (Figs. 3G). This condition occurs when a low signal appears on line 126 of the comparator 124 (Fig. 3B) indicating that the amplitude of the input sample is less than the fixed threshold of 2 which in effect senses the end of the peak 32 (Fig. 2). Enabling of the NAND gate 148 will output a low signal to the inverting input of an OR gate 192 (Fig. 3H) whose output high signal over line 194 to the clock input of a #7474 flip-flop 196 (Fig. 3H) results in the outputting of a high signal CHSTART over its Q output line 150 and a low signal $\overline{CHSTART}$ over its $\overline{Q}$ output line 200. The signal CHSTART is transmitted over line 150 to the inverting inputs of AND gates 134 and 202 (Fig. 3G) disabling the signal CLKACUM and generating the signal RESET outputted by the NOR gate 204 (Fig. 3G) over line 206. The RESET signal resets the counters 136 (Fig. 3D), 172 (Fig. 3G) and the flip-flops 140 (Fig. 3E), and 184, 208, 196 (Fig. 3H) conditioning the logic circuits for another character start operation upon the signal $\overline{EOC}$ transmitted from the A/D converter 26 (Fig. 3A) going low.

If during the sampling of the first peak by the A/D converter 26, the counter 172 (Fig. 3G) reaches the count of 15, it will indicate that the peak being sampled is a high intensity peak 34 (Fig. 2). Upon reaching this count, the counter will output a high signal over line 210 to the D input of the flip-flop 208 (Fig. 3H) which in turn outputs a high signal over its Q output line 212 upon the occurrence of the rising edge of the next clock pulse $Q_2$ representing a sample count of 16 over line 214 (Figs. 3G and 3H).

The high signals appearing on lines 210 and 212 are inputted into a NAND gate 216 whose output low signal over line 218 will disable the counter 172. The high signal appearing on line 212 is also transmitted to one input of the NAND gate 146 enabling the gate since the other inputs to the gate are high at this time. Enabling of the gate 146 results in a low signal being transmitted to the inverting input of the OR gate 192 which outputs a high signal over line 194 to clock the flip-flop 196 resulting in the generation of the character start signals CHSTART and $\overline{CHSTART}$ in the manner described previously.

The high signal appearing on line 212 is also coupled to one input of a #74273 flip-flop 220 (Fig. 3H) which is coupled to the output of the counter 172 over lines 175—178 inclusive. The flip-flop 220 is enabled by a clock signal generated by the clocking of the flip-flop 196 (Fig. 3H) in the manner described previously in which the signal $\overline{CHSTART}$ appearing on line 150 enables a NAND gate 222 whose other input is high at this time to output a low signal over line 224 to the inverting inputs of an AND gate 226 and thus enabling a high clock signal appearing on line 228 to latch the output count of the counter 172 appearing on line 175—178 inclusive. The count appearing on the output of the flip-flop 220 represents the number of samples outputted by the A/D converter 26 which occur during the sampling of the peak 32 (Fig. 2), the sum of which is stored in the flip-flops 154 and 156 (Figs. 3B and 3E). The count appearing on the output of the flip-flop 220 is transmitted over lines 230 (Figs. 3H and 3I) to a pair of #8T98 tri-state buffers 232 and 234 (Fig. 3I) during the transmission of the count to the processor 46 in a manner that will be described more fully hereinafter.

The outputting of the high signal CHSTART over line 150 upon the clocking of the flip-flop 196 (Fig. 3H) results in the signal being transmitted to a counter 236 (Fig. 3H) which in turn is coupled to a second counter 238 (Fig. 3I). The counters 236 and 238 are enabled by the high signal EOC appearing on line 96 (Fig. 3A) and outputted by the A/D converter 26 at the start of the sampling of the analog character signal. The counters 236 and 238 function as a time-out. After one millisecond, which is the time of one character length (Fig. 6), the counter 238 will output the reset signal DELRST over line 240 to the NOR gate 204 (Fig. 3G) enabling the gate to output the reset signal RESET over line 206 and thereby resetting the circuit.

The generation of the signal $\overline{CHSTART}$ over the output line 200 of the flip-flop 196 will be transmitted to the processor 46 (Fig. 1) notifying the processor of a valid character start. In response to receiving the signal $\overline{CHSTART}$, the processor raises the signal DELYDAT over line 237 (Fig. 3C) which is inverted by the inverter 239 and transmitted over line 241 to the buffers 115 and 117 disabling the buffers from transmitting the eight bits of data appearing on lines 90a—90h (Fig. 3A) to the processor 46. The processor will also generate the enabling signals $\overline{ENSUM}$ over line 242 (Fig. 3I) which enable the buffers 232 and 234 to output the sample count over lines 120a—120h inclusive (Fig. 3C) to the processor. In a similar manner, the enabling signals $\overline{ENMSB}$ and $\overline{ENLSB}$ are generated over lines 244 (Fig. 3F) and 246 (Fig. 3C) respectively, enabling the sum of the amplitudes of the samples to be transferred to the processor 46, thereby enabling the processor to store the samples of the actual character waveform in a manner to be described hereinafter. Since the amplitude sum being outputted by the flip-flops 154 and 156 (Figs. 3B and 3E) is 12 bits long, the signal $\overline{ENLSB}$ is generated first for enabling the first 8 bits of the sum to be transferred to the processor followed by the generation of the signal $\overline{ENMSB}$ for transferring the remaining 4 bits to the processor. Once the processor 46 has established the adaptive threshold ($T_a$) (Fig. 2) in a manner that will now be described, the processor 46 will lower the signal DELYDAT over line 237 (Fig. 3C) enabling the buffers 115 and 117 to output the 8 bit sample of the unknown character waveform being transmitted over lines 90a—90h inclusive (Fig. 3A, Fig. 3B and Fig. 3C) from the A/D converter 26 (Fig. 1).

The signal $\overline{ENMSB}$ also clocks the flip-flop 220 (Fig. 3H) a second time through NAND gate 222 and the AND gate 226. Clocking of flip-flop 220 stores the output count of counter 172 (Fig. 3G) and flip-flop 208 up to a maximum count of a number equal to the number of templates used in the recognition system. This count represents the total number of first peak samples counted until the time the processor 46 responds to the generation of the signal $\overline{CHSTART}$ on line 200 (Fig. 3I).

The processor 46 includes an input RAM buffer that can store a maximum of 17 samples representing the first 17 samples required to establish a valid $\overline{CHSTART}$ signal. If there are more than 17 samples and if the intercharacter spacing is so small that the generation of the signal $\overline{CHSTART}$ with respect to the reading of a second character occurs while the processor 46 is still normalizing the data from the first character, the count of 17 could be exceeded before the processor is free to start the processing of the second character.

After responding to the signal $\overline{CHSTART}$, first check the output count of the counter 172. If it is greater than 17, it rejects the character.

Referring now to Figs. 9A—9F inclusive, there is shown a more detailed flowchart of the method by which the processor 46 (Fig. 1), using the data representing the sum of the amplitudes of the samples sensed in the first peak 32 (Fig. 2) of the analog waveform by the A/D converter 26 together with the number of samples sensed and received from the circuits disclosed in Figs. 3A—3I inclusive, establishes the start of the character waveform and processes the amplitudes of the samples representing the peak positions of the character waveform.

As previously disclosed, the processor 46 is of a conventional design having various storage units such as shift registers, ROMs and RAMs together with a multiplier for multiplying data stored therein in a manner that is well-known in the art. As will be described more fully hereinafter, a number of the ROMs are structured to output the reciprocal of the data inputted into the ROM.

Referring now to Fig. 9A, the processor 46 will check the end of the conversion signal EOC (block 250) transmitted over line 96 (Fig. 3C) from the logic circuits and finding that the signal is low indicating the A/D converter 26 (Fig. 1) has completed its sampling of the analog waveform, the processor will store the 8-bit count (block 254) in a ROM structured to output the reciprocal of the inputted data. The processor will then transfer the 12-bits of data representing the sum of the amplitudes of the samples sensed to the multiplier (block 256) together with the 8-bits representing the sample count outputted from the reciprocal ROM (block 258). The processor will then multiply the two values (block 260), thereby effectively dividing the sum of the amplitudes by the number of samples sensed to derive the adaptive threshold ($T_a$) (Fig. 2) which is then used to find the start of the actual character waveform. The processor will then again check (block 262) the level of the signal EOC and finding that it is still low, the processor will then compare each sample with the adaptive threshold ($T_a$) (block 266) until it finds (block 268) a sample which is greater than the adaptive threshold which represents the start of the character waveform. The processor will then store (block 272) the remaining samples of the analog waveform in a RAM unit of the processor.

After establishing the start of the actual character waveform, the processor 46 will smooth the samples in each of the windows and extract the maximum amplitude sample representing the peak within that window. The processor will then normalize the extracted sample to compensate for ink intensity and applies a scaling factor (M) to compensate for the shape of the character being read. Referring to Fig. 9B, the processor sums the first and second adjacent samples (block 274) and shifts the storage position of the sum one direction to the right when storing the sum in a shift register (block 276). The shifting of the position of the sum in the shift register divides the sum by 2, thereby producing an average amplitude value of the two samples. As shown in Figs. 5A and 5B inclusive, the number of samples now stored which represents the analog waveform have been reduced by one-half, which produces a more uniform curve. After the samples have been smoothed, the processor 46 then extracts from each of the windows (Fig. 6) the sample having the maximum amplitude. As shown in Fig. 6, there are, seven positive windows ($+W_1$—$W_7$ inclusive) and seven negative windows ($-W_1$—$-W_7$ inclusive) in which a feature sample or peak may occur. In extracting the maximum amplitude sample in each window, the system must determine whether it is a positive or negative.

In extracting the features from each window, the processor examines the average value stored in the shift register to determine if it is a positive (block 278 of Fig. 9B) or a negative value. If it is a positive value, the processor will compare the new value with a previously-existing value stored in a memory unit of the processor (block 282). If the value is greater than the previously-stored value, the processor stores the new value (block 284) and also stores the position (block 286) of the maximum value. If the average value stored in the shift register is negative, the processor will repeat the steps of comparing the average value with a value previously stored (block 292) and if it finds that it is greater than the previous value, it will store the new negative value (block 296) and the position (block 298) of the new value. The processor will then determine if the sample being examined is the seventh sample (block 288). If it is not the seventh sample, the processor will take the next positive or negative value and compare it with the previously-stored value to determine if the newly-examined sample has an amplitude greater than the previously-stored sample. This process will continue until all seven samples of the window have been examined and the sample having the maximum amplitude in the window is now stored in a RAM unit of the processor.

The processor will read the first positive maximum value stored in the RAM unit (block (300) and compare that value (block 302) (Fig. 9C) with a value stored in a second RAM unit. If the value of the new sample is greater than that value of the sample stored in the RAM unit, the processor will store (block 306) the new value in the RAM unit. If the new value is not greater than the previously-stored value, the processor will read the second maximum positive value (block 310) and compare that value with the value stored in the RAM unit. If the second value is greater than the value stored in the RAM unit, the processor will store (block 316) the new maximum positive value in the RAM unit.

If the maximum positive values are not greater than the previously-stored maximum values which represent the maximum values of the previously processed windows, the system will read the first negative maximum value (block 320) and compare (block 322) this new value with a value previously stored in a RAM unit. If the new value is greater than the previously-stored value, the processor will store (block 326) (Fig. 9D) the new data in the RAM unit. If the new value is not as great as the stored value, the processor will read the second maximum negative value (block 330) and compare this new value (block 332) with the value stored in the RAM unit. If the new value is greater than the stored value, the processor will store (block 336) the new value in the RAM unit. The processor then checks (block 340) to determine if the window processed is the last window ($W_7$) (Fig. 6). If it is not the last window, the processor will, over line 342 (Figs. 9B, 9C and 9D), go to the next window and start comparing the maximum positive and negative amplitude values so that at the end of the seventh window, the first and second maximum values of the positive and negative samples of the template are now stored in a RAM unit located in the processor.

To normalize the values stored in the RAM unit, the processor will read the first positive maximum value (block 344) and the second positive maximum value (block 346). The processor will then sum the two values (block 348) and store the sum in a memory portion of the processor. The processor will then read the first (block 350) and second (block 352) maximum negative values. To derive a normalization factor (N.F.), the processor sums the two positive and two negative maximum values (block 354) (Fig. 9E) and divide the sum by 4. This latter operation is accomplished by storing the sum of the two positive and two negative values in a shift register and shifting the storage location of the sum two places to the right, thereby producing the normalization factor (N.F.) (block 356). The processor will then store the normalization factor into a reciprocal ROM (block 358) which outputs the reciprocal of the value inputted into the ROM. The processor then loads the reciprocal values (block 360) into a multiplier together with a scaling factor (block 362) which, in the present embodiment, is arbitrarily set as the numeral 54. The processor then multiplies both values (block 364) to produce a scaled normalization factor (S.N.F.) (block 366) which is used to bring the peak values within a normal voltage range.

To complete the normalization and scaling operation, the processor multiplies each of the fourteen values representing the first and second maximum amplitudes in each of the seven positive and seven negative windows. The processor first checks to see if all fourteen values have been normalized (block 368) (Fig. 9F). If all the values have not been normalized, the processor will transmit the scaled normalized factor (S.N.F.) (block 382) to the multiplier together with the next maximum amplitude sample (block 384). The processur will then multiply (block 386) the two values and strobes out the result to a first-in, first-out (FIFO) storage unit (block 388), from where the data is outputted to template matching unit 47. The processor 46 will then stop the multiplication operation (block 390) and check again (block 368) to see if all fourteen values have been normalized. If this is true, the processor then selects an input port (block 372) to determine if a document is present (block 374) adjacent the read head 20 (Fig. 1) and then returns to a ready state where it will be checking the status of the signal EOC (block 250) (Fig. 9A).

Considering now the operation of the template matching unit 47 and the character recognition processor 49, reference is made to Fig. 10, which is a schematic diagram of the windows and their positions that comprise a template for the character 0. As shown in Fig. 10, each normalized feature outputted by processor 46 of the unknown character waveform shown in dotted line 36′ comprises the peak voltage amplitudes 38′ of each of the peaks in the waveforms 36′. Each template of a known character comprises a series of positive windows 40′ and negative windows 42′. There can be a maximum of seven positive windows and seven negative windows for each template. As shown in Fig. 10, the first negative window 42′ of the template is offset to the first positive window 40′, thereby enabling the unknown character waveform to have eight features for use in identifying the unknown character. The templates for the characters to be recognized are essentially a set of "tolerance bands" to which the fourteen voltage amplitudes and their positions are compared to determine if a perfect match exists. As shown in Fig. 10, the peaks 38′ fit exactly into the limits allowed in the 0 template and hence the waveform is classified as 0 in this case. Each template is distinct from any of the other templates. Thus, if the waveform 36′ exactly matches one template, it cannot match exactly any other template. In actual experience, many of the peaks 44′ and 46′ (Fig. 10) will fall outside the allowed template limits. As will be described more fully hereinafter, the template matching unit 47 when matching the features points 44′ and 46′ with the corresponding positive and negative windows 40′ and 42′ respectively, will establish distances $d_1$ and $d_2$ (Fig. 10) separating the feature points from its associated window For each template, the template matching unit 47 (Fig. 1) adds all the distances $d_1$ and $d_2$ for each window in each template and selects the two minimum distance values $D_{M1}$ and $D_{M2}$. The processor 49 (Fig. 1) will apply control thresholds to each of the two minimum distances to select the character in accordance with the template having the lowest distance value.

Referring now to Figs. 11A and 11B, there is shown a block diagram of the template matching unit 47 (Fig. 1) and to Figs. 23A and 23B inclusive which discloses a flowchart of the operation of the template matching unit. The processor 46 (Fig. 1) will have stored 28 bytes of binary data comprising 14 maximum voltage amplitudes representing the peaks in each of seven positive and seven negative windows and 14 bytes of data representing the position of each of the peaks. Upon completion of processing the samples outputted by the A/D converter 26, the processor 46 will output the signal DATAREADY (block 52′) (Fig. 23A) over line 52′ (Fig. 3A) to the input control logic 54′. The control logic 54′ in response to receiving the signal DATAREADY will enable an output buffer 56′ (Fig. 11B) and a RAM 58′ to receive the 28 bytes of data (block 60′) which are transmitted over the bus 62′ from the processor 46. The data transmitted over the bus 62′ is coupled to a two's complement circuit 64′ which will convert all the negative bytes of data to positive bytes, the bytes then being transmitted to the RAM 58′ for storage therein. The fourteen bytes representing the peaks are stored in one portion of the RAM 58′ while the fourteen bytes representing the positions of the peaks are stored in a second portion of the RAM 58′. Upon completion of the storage of the data in the RAM 58′, the control logic 54′ will initiate a counter 66′ (Fig. 11A) which outputs a count to the buffer RAM 58′, enabling the RAM 58′ to output the fourteen bytes (block 68′) representing the positions of the maximum voltage amplitudes to a PROM 70′ in which is stored the minimum and maximum voltage values of each window of a plurality of templates representing known reference characters. In the present embodiment, the PROM 70′ has stored therein 32 templates, each of which comprises seven positive minimum and maximum values and seven negative minimum and maximum values representing positive windows 40′ (Fig. 10) and seven negative windows 42′ respectively. Each byte representing the position of a maximum amplitude stored in the buffer RAM 58′ is used as an address for the PROM 70′ wherein the minimum and maximum values of each window of each template are outputted over bus 72′ to a comparator circuit 74′ which also receives over bus 76′ the maximum amplitude whose position was used as the address for the PROM 70′.

The comparator circuit 74′ will initiate a comparison operation (block 69′) (Fig. 23A) upon receiving each maximum amplitude (block 78′) associated with one of the windows 40′ and 42′ (Fig. 10) stored in the buffer RAM 58′ together with the minimum and maximum values (block 80′) stored in the PROM 70′ corresponding to the same window in one of the templates. The circuit 74′ will compare the values (block 82′) to determine if the peak is less than the maximum value and greater than the minimum value indicating that the peak is located within the window. If it is, the control logic 54′ will increment the counter 66′ whose output count transmitted over bus 84′ to the RAM 58′ results in the byte representing the position of the next peak being outputted over bus 86′ to the PROM 70′ for enabling the maximum values of the next window to be outputted over bus 72′ to the comparator circuit 74′ for locating the maximum amplitude point with respect to the next window. This operation will continue until all fourteen windows of a template have been compared (block 71′) with the samples stored in the RAM 58′, at which time a second counter 88′ is incremented by one. The output count of the counter 88′ is transmitted over bus 90′ to the PROM 70′ enabling the PROM to output the maximum and minimum values associated with the windows of the next template in response to receiving the position of the peaks from the RAM 58′.

If in comparing (block 82′) (Fig. 23A) the maximum amplitude with the maximum values representing the limits of the windows, it is found that the maximum amplitude is outside the window, the total of the distances $d_1$ and $d_2$ (Fig. 10) is then established by transmitting the data to a two's complement and accumulator circuit 92′ (Fig. 11A) wherein the negative values of the distances are enabled to be added (block 94′) to the positive values with the result D representing the total distances between the peaks and the windows being stored (block 96′) in the accumulator circuit 92′.

Upon completion of comparing the values stored in the RAM 58′ with the template data stored in the PROM 70′ representing the reference character, the accumulated distance stored in the accumulator circuit 92′ is transferred to a minimum distance comparator and latch circuit 98′ which will compare (block 100′) (Fig. 23B) the accumulated distance of each reference character with the previous accumulated distances stored in the latch portion of the circuit 98′ to establish the two templates having the two lowest or minimum accumulated distances $D_{M1}$ and $D_{M2}$. The comparator circuit 98′ will first compare the first minimum distance ($D_{M1}$) with the second minimum distance ($D_{M2}$) (block 102′) (Fig. 23B). If the first minimum distance is equal to or greater than the second minimum distance, the first minimum distance is then compared with the accumulated distance being presently inputted into the comparator circuit 98′ (block 104′) to determine the minimum distance between the two inputted values. If the first minimum distance is greater than the presently-inputted distance, the inputted distance D is then stored (block 106′) in the latch portion of the circuit 98′ becoming the first previous minimum distance. If the second previous minimum distance ($D_{M2}$) is greater than the first previous minimum distance ($D_{M1}$) the comparator circuit 98′ will compare the second previous minimum distance ($D_{M2}$) with the inputted accumulated distance (block 108′) and if it is greater than the inputted distance, the inputted distance D is then stored (block 110′) in the latch portion of the circuit 98′. During the operation of the comparator and latch circuit 98′, signals are transmitted to a control logic unit 112′ (Fig. 11A) which will store in a template number latch circuit 114′ the template numbers corresponding to the two minimum distances stored in the comparator circuit 98′. This data is then stored (block 114′) in a FIFO storage unit (not shown) located in the output buffer circuits 56′ (Fig. 11B) and the output count of the counter 88′ is then checked (block 116) (Fig. 23A) to see if all templates have been compared with the data stored in the RAM 58′. If the comparison operation is completed (block 121′), a signal is transmitted over line 118′ from the counter 88′ to the output buffer control circuits 56′ enabling the FIFO storage unit located in the output buffer circuits 56′ to store the template numbers having the two minimum accumulated distances together with the distances stored in the latch 114′ and comparator 98′. The output control circuit 56′ will generate the output ready signal OTRD to the processor 34′ (Fig. 11B) which will raise the shift signal OTSF enabling the two minimum distances together with the template numbers to be outputted (block 121′) (Fig. 23B) over bus 120′ to the processor 49 (Fig. 11B) wherein the processor will apply a plurality of threshold voltage values to the minimum distances to determine if the values of the minimum distances are capable of establishing a valid reference character in a manner that will be described more fully hereinafter.

Referring now to Figs. 12A—12G inclusive, there is shown a portion of the block diagram of Fig. 11 of the template matching unit 47 (Fig. 1) in which the features of the unknown character are located with respect to the windows of the templates. As shown in Fig. 12C, the processor 46 (Fig. 1) will raise a data ready signal DRDY over line 52′ to the D input of an LS74 flip-flop 120′ whose clock input is connected over line 122 to a clock generator (Fig. 18) which outputs a plurality of clock signals including the signal CLCK. As shown in Fig. 18, the clock generator generally referred to by the numeral 124′ comprises an LS175 quad flip-flop 126′ which outputs a plurality of clock signals CØ1—CØ4 and $\overline{CØ1}$—$\overline{CØ4}$ inclusive in response to receiving a clock signal CLOCK (Fig. 11A) outputted from a 4MHz. oscillator (not shown), which clock signal is coupled with an external clock signal (EXTCLK) through an AND gate 128′ whose output clock signals CLCK is transmitted over line 122′ to the flip-flop 126′ and the flip-flop 120′ (Fig. 12C). Upon the raising of the input signal DRDY, the Q output of the flip-flop 120′ will transmit a high signal to the D input of an LS74 flip-flop 130′ resulting in the appearance of a high signal WRFF at its Q output and a low signal $\overline{WR}$ appearing on its $\overline{Q}$ output. The signal $\overline{WR}$ is transmitted over line 133′ to an inverter 132′ and appears as the high signal data required (DTRO) which is transmitted over line 134′ to the processor 46 enabling the processor to output the 28 bytes of data representing the 14 maximum amplitudes or peaks and 14 bytes corresponding to their positions in the waveform 36′ (Fig. 10). The LS74 flip-flops 120′, the LS175 flip-flop and the other logic elements disclosed in the present application are commercially available from the Texas Instruments Corporation of Dallas, Texas.

As shown in Fig. 12A, each byte of data outputted from the processor 46 (Fig. 1) is transmitted over eight transmission lines 135a′—135h′ inclusive, in which the binary bit appearing on line 135h′ characterizes the seven bits of data as being positive when low and negative when high. As previously described, seven bytes of the data transmitted from the processor 46 and representing the maximum amplitudes of the samples appearing in the windows 42′ (Fig. 10) will be negative, while the remaining seven amplitudes will be positive. In order to logically add the voltage amplitudes, the negative amplitudes have to be converted into positive amplitudes. This is accomplished by coupling the input lines 135a′—135g′ inclusive to a pair of LS04 inverters 136′ and 138′ whose output is coupled to a pair of 4-bit LS283 adders 140′ and 142′ which comprise the two's complement circuit. Each negative bit inputted into the inverters 136′ and 138′ is added to a carry appearing at the carry input 144′ of the adder 140′ enabling the adders 140′ and 142′ to output the positive values representing the negative amplitudes being inputted over lines 135a′—135g′. The output lines of the adders 140′ and 142′ and generally indicated by the numeral 146′ are inputted to the B input of a pair of LS158 multiplexers which also receive at their A input the lines 135a′—135g′ inclusive over which appear the positive amplitude data bits. As each byte of data representing the peak amplitudes is transmitted over lines 135a′—135g′ inclusive, the data bit appearing on line 135h′ is transmitted to the multiplexers 148′ and 150′ selecting the inputs A or B depending on whether the byte of data is positive or negative. Each byte of data is outputted from the multiplexers 148′ and 150′ over their output lines generally indicated by the numeral 152′ to a RAM generally indicated by the numeral 58′ (Figs. 12A and 12C) comprising a plurality of S189 RAM units 154′, 156′ (Fig. 12A) and 158′ and 160′ (Fig. 12C). The RAM 58′ will store all 28 bytes of data transmitted from the processor 46. The RAM units 154′ and 156′ (Fig. 12A will store the 14 bytes representing the positions of the maximum amplitude samples while the RAM units 158′ and 160′ (Fig. 12C) will store the 14 positive values representing the maximum amplitudes of the unknown character waveform.

As described previously, upon the raising of the signal DRDY (Fig. 12C) by the processor 46 (Fig. 1), the flip-flop 130′ will output the high signal WRFF over line 131′ to one input of a NOR gate 164′ (Fig. 12C) which receives a low signal from a NAND gate 166′ due to an input compare enable signal CMPENB being low at this time. The NOR gate 164′ will output a low signal to a LS161 counter 168′ which will count the number of bytes being transmitted over lines 135a′—135h′ inclusive for correlation with a window. The output count of the counter 168′ controls the operation of a pair of LS74 flip-flops 170′ (Fig. 12C) and 172′ (Fig. 12E) enabling the RAM units 154′ and 156′ to store the first fourteen bytes of data being transmitted over lines 135a′—135h′ inclusive representing the positions of the maximum voltage amplitudes in a manner that will now be described.

The RAM units 154′ and 156′ are enabled by the signal $\overline{CS_1}$ while the RAM units 158′ and 160′ (Fig. 12C) are enabled by the signal $\overline{CS_2}$. As shown in Fig. 12E, both the signals $\overline{CS_1}$ and $\overline{CS_2}$ are controlled by the state of the flip-flop 172′. During the time the output count of the counter 168′ is counting through the first fourteen counts, the binary bits appearing on the output lines 174a′—174c′ inclusive will enable an AND gate 176′ to output a low signal to the D input of the flip-flop 170′ resulting in the Q output signal CN14 being low. This signal is transmitted over line 178′ to the clock input of the flip-flop 172′ (Fig. 12E) resulting in a low signal appearing at the Q output of the flip-flop. This signal is transmitted to the AND gate 180′ on whose other input appears the low signal $\overline{CMP}$. This condition will enable the AND gate 180′ to output the low signal $\overline{CS1}$ to the RAM units 154′ and 156′ (Fig. 12A) enabling the RAM units to store the first fourteen bytes of data representing the position of the maximum amplitude. Upon the output count of the counter 168′ reaching the count of fourteen, a high signal will appear on each of the output lines 174a′—174c′ enabling the AND gate 176′ to output a high signal to the D input of the flip-flop 170′ enabling the Q output signal CN14 to go high, while the $\overline{Q}$ output signal $\overline{CN14}$ will go low. The raising of the signal CN14 over line 178′ will clock the flip-flop 172′ enabling the Q output signal to go high while the $\overline{Q}$ output signals go low, the latter signal enabling an AND gate 182′ to output the low signal $\overline{CS2}$ which signal is transmitted over line 184′ to the RAM units 158′ and 160′ enabling the RAM units to store the data appearing on the output lines 152′. At this time, the output signal $\overline{CS1}$ will go high, thereby disabling the RAM units 154′ and 156′ from accepting any more data for storage appearing on the input lines 152′.

The raising of the signal CN14 upon the output count of the counter 168′ reaching 14, over line 178′ to the NOR gate 186′ (Fig. 12C) enables the NOR gate 186′ to output a low reset signal $\overline{RSN14}$ over line 188′ to the reset input of the counter 168′ resetting the counter. At this time the counter 168′ will output counts over lines 174a′—174d′ inclusive to the RAM units 154′—160′ inclusive enabling the bytes of data appearing on the input lines 152′ to be loaded into the RAM units 158′ and 160′ in a manner that is well-known in the art. Upon completion of the second fourteen counts by the counter 168′, the 28 bytes of data will be stored in the RAM units 154′—160′ (Figs. 12A—12C inclusive).

As described previously, upon the raising of the data ready signal DRDY over line 52′ (Fig. 12C), which occurs each time the processor 46 (Fig. 1) has processed one character, the Q output of the flip-flop 130′ will go high, which signal WRFF enables the NOR gate 164′ to go low, thereby incrementing the counter by one. Since the flip-flop 130′ is now latched due to the signal DRDY being high during the time the data is transmitted from the processor the RAM buffers 58′, the signal WRFF will cycle in response to the generation of the clock signal CØ4 which appears at the clock input of the flip-flop 130′. For this arrangement, the counter 168′ will be incremented to count up to 14, enabling the first 14 bytes representing the positions of the maximum amplitudes to be loaded into the RAM units 154′ and 156′ in the manner described previously. The counter 168′ is reset by the generation of the signal CN14 to initiate the second fourteen count operation at the end of which the signal CN14 is again raised. The high signal CN14 is transmitted over line 178′ to the clock input of the flip-flop 172′ (Fig. 4E) resulting in a high signal appearing at the $\overline{Q}$ output, which signal is transmitted over line 192′ to the clock input of a LS74 flip-flop 194′ (Fig. 12E). The clocking of the flip-flop 194′ results in the appearance of the high compare enable signal CMPENB on the Q output line 196′ and the low signal $\overline{CMP}$ appearing on the $\overline{Q}$ output line 198′ (Figs. 12E and 12F). The low signal $\overline{CMP}$ is transmitted over line 198′ to one input of the AND gate 200′ (Fig. 12C) whose other input signal $\overline{RST}$ is high at this time, thereby enabling the AND gate 200′ to output a low signal to the reset input of the flip-flop 120′ thereby resetting the flip-flop and stopping the input operation of the counter 168′. In addition, the signal $\overline{CMP}$ is transmitted over line 198′ to the inputs of the AND gates 180′ and 182′ (Fig. 12E) resulting in both the output signals $\overline{CS1}$ and $\overline{CS2}$ going low, which signals are transmitted to the RAM units 154′—160′ (Figs. 12A and 12C) over lines 181′ and 184′ enabling data to be outputted from the RAM unit. As described previously, the data bytes representing the positions of the maximum amplitudes are used as addresses for input to a PROM unit 70′ (Fig. 11B) which stores the template data comprising the maximum and minimum values which are to be compared with the amplitude values for correlation therewith.

The resetting of the flip-flop 120′ (Fig. 12C) stops the operation of the inputting of the data from the processor until the signal DRDY goes high, which occurs when the processor 30′ has processed a new character waveform. The resetting of the flip-flop 120′ results in the resetting of the flip-flop 130′ resulting in the Q output signal WRFF going low. As described previously, the signal WRFF is transmitted over line 131′ to one input of the NOR gate 164′ (Fig. 12C) whose other input is coupled to the output of the NAND gate 166′ on whose input appears the compare enable signal CMPENB which at this time is high as a result of the clocking of the flip-flop 194′ (Fig. 12E) by the high signal appearing on line 192′. Upon the application of the high signal CMPENB to the AND gate 166′, a high signal will occur on its output upon the clock signal $\overline{C\emptyset1}$ going high which signal is transmitted to the NOR gate 164′ resulting in the outputting of a low signal to the counter 168′ incrementing the counter by 1. It will be seen that every time the clock signal $\overline{C\emptyset1}$ goes high, the counter 168′ will be incremented by one, which output count is transmitted over lines 174a′—174d′ inclusive to the RAM units 154′—160′ inclusive (Figs. 12A and 12C). Upon the occurrence of each count on the output lines 174a′—174d′ inclusive, six bits of data representing the position of a maximum amplitude will appear on the output lines 202a′—202f′ inclusive of the RAM units 154′ and 156′ (Figs. 12A and 12B) while eight bits of data will appear on the output lines 204a′—204h′ inclusive (Figs. 12C and 12D) of the RAM units 158′ and 160′ representing the corresponding maximum amplitude. The data bit appearing on line 204h′ represents the sign of the amplitude values. Thus, if the peak amplitude value was positive, the signal PSNG will be low, while if the amplitude value was negative, the output signal $\overline{PSNG}$ of the inverter 161′ (Fig. 12D) will be low. As shown in Figs. 12B, 12D, 12F and 12G, the PROM 70′ (Fig. 11B) containing the template data consists of eight #2578 PROM units 206′—220′ inclusive. As shown, the PROM units 206′, 208′, 214′ and 216′ contain the minimum and maximum values associated with the positive windows 40′ (Fig. 10) while the PROM units 210′, 212′, 218′ and 220′ store the minimum/maximum values associated with the negative windows 42′ (Fig. 10). The six binary bits appearing on lines 202a′—202f′ inclusive (Fig. 12D) will appear at the inputs of each of the PROM units 206′—220′ inclusive. The particular template is selected by a four bit count appearing on the output lines 220a′—220d′ inclusive (Fig. 12F) of a counter 222′ which is incremented by the raising of the signal CN14 over line 178′ which occurs upon the counter 168′ reaching the count of 14 in the manner described previously. The counter 222′ is coupled to a second LS161 counter 224′ (Fig. 12G) which outputs over line 226′ a PROM enable signal SELA and the PROM enable signal SELB over line 228′ and transmitted through an inverter 230′. As shown in Figs. 12B, 12D, 12F and 12G, one of the PROMS will be selected by the signals SELA, SELB, PSNG, and $\overline{PSNG}$ together with the output count of the counter 222′ appearing on lines 220a′—220b′ inclusive to output over the output lines 232a′—232g′ inclusive (Fig. 12B) the minimum value of the window. In a similar manner, the maximum value will appear on the output lines 234a′—234f′ inclusive (Figs. 12D and 12F) for transmission to the comparator circuits 74′ (Fig. 11A) as will be described more fully hereinafter.

Upon the counters 222′ (Fig. 12F) and 224′ (Fig. 12G) reaching a count equal to the last template, the signal RDEND appearing on the output line 236′ will be transmitted to one input of the NOR gate 186′ (Fig. 12C) and also to an EXCLUSIVE OR gate 238′ (Fig. 12G) which outputs a ready signal OTRD over line 240′ signalling the comparator circuits 74′ (Fig. 11A) that data representing the maximum and minimum values are present for transmission to the comparator circuits. The transmission of the signal RDEND to the NOR gate 186′ (Fig. 12C) enables the NOR gate to output a low reset signal $\overline{RSN14}$ over line 188′ for resetting the counter 168′. The processor 46 will output a low reset signal $\overline{STRS}$ (Fig. 12E) which signal is coupled to an AND gate 241′ which also receives a reset signal $\overline{RESET}$ which is transmitted from the comparator circuits to reset the inputs FIFO in a manner to be described more fully hereinafter. The NAND gate 241′ will output the reset signals $\overline{RST}$ over line 239′ and $\overline{FFRES}$ outputted from the inverter 243′ which signals are used to reset the logic circuits in a manner that is well-known in the art.

Referring now to Figs. 14A—14C inclusive, there is shown the logic circuits for comparing the maximum and minimum values of each template with the peak amplitudes of the unknown character waveform and for accumulating the distances between the peak amplitudes and the maximum and minimum values of the templates. As shown in Fig. 14A, the data bits representing the peak amplitude outputted over lines 204a′—204g′ of the RAM units 158′ and 160′ (Fig. 12C) are inputted into the A inputs of a plurality of comparators 242′—248′ inclusive. The minimum values of each window corresponding to the position of the peak amplitude as represented by data bits appearing over lines 232a'—232g' from the PROMS 206'—220' inclusive (Fig. 12B) are inputted into the $B_{min}$ inputs of the comparators 242' and 244' while the data bits representing the maximum value of the window are outputted over lines 234a'—234g' of the PROMS 206'—220' inclusive (Figs. 12D and 12F) to the $B_{max}$ inputs of the comparators 246' and 248' enabling the comparators to locate the peak amplitude with respect to the window represented by the maximum and minimum values. It will be seen that there are three conditions which can occur as a result of this comparison operation. If the peak amplitude inputted at the A inputs is greater than the minimum values and is also less than the maximum values, the peak amplitude is located within the window and no distance accumulatiion is necessary. If the peak amplitude is less than the minimum values, the peak amplitude is required to be subtracted from the minimum values to arrive at the distance $d_2$ (Fig. 10) while if the peak amplitude is greater than the maximum value, the maximum value has to be subtracted from the peak amplitude to arrive at the distance $d_1$ (Fig. 10). As the distances $d_1$ and $d_2$ are generated, they are accumulated as each window is compared with a peak amplitude such that after fourteen comparison operation representing the template of a known reference character, the value stored in the accumulator represents the total distance for that template.

Upon the inputting of the values into the comparator 242'—248' inclusive, if the peak amplitude is greater than the minimum value of the window, a high signal will appear on line 250' from the comparator 244', which signal is transmitted to one input of an EXCLUSIVE OR gate 252'. If the peak amplitude is less than the maximum value of the window, a high signal will appear on line 254' of comparator 248', which signal is transmitted to the other input of the EXCLUSIVE OR gate 252' enabling the gate to output the low signal NEØ over line 256' to the D input of an LS74 flip-flop 258'. A low signal appearing at the D input of the flip-flop 258' will result in the Q output signal clock accumulator (CLADD) which signal is transmitted over line 260' to a latch 262' (Fig. 14C) and disabling the latch from latching the value representing the distances generated from a logic circuit which will now be described.

If the peak amplitude value is greater than the maximum value of the window, a high signal will appear on line 264', which signal is transmitted to a number of circuits which will generate the distances $d_1$ and $d_2$ (Fig. 10) in a manner that will now be described. As shown in Fig. 14B, the peak amplitude values are transmitted over lines 204a'—204g' to the A inputs of a pair of LS158 multiplexers 266' and 268' on whose output lines 270a'—270g' inclusive will appear the inverted values of the selected input values. The multiplexers 266' and 268' also receive the maximum values of the window over lines 234a'—234g' inclusive at its $B_{max}$ inputs. The output lines 270a'—270g' inclusive of the multiplexers 266' and 268' are inputted into the A inputs of a pair of LS283 adders 272' and 274'. The value appearing on the lines 270a'—270g' inclusive represents the distance between the maximum value being inputted at the $B_{max}$ inputs of the multiplexer and the peak amplitude values appearing at the A inputs of the multiplexers 266' and 268' which have a negative sign. By inverting the negative value and inputting the value into the adders 272' and 274', the adders 272' and 274' will perform a two's complement operation by adding one to the value of a high carry signal appearing over line 276'.

The peak amplitude values appearing on lines 204a'—204g' inclusive are inputted into a pair of LS157 multiplexers 278' and 280' which also receives at its A input the minimum values of the window transmitted over lines 232a'—232g'. The output lines 282a'—282g' inclusive are inputted into the B input of the adders 272' and 274'.

If a high signal appears on line 264' (Figs. 14A and 14B) indicating that the value of the peak amplitude (A) is greater than the maximum value ($B_{max}$) of the window, the signal will be transmitted to the control input of the multiplexers 266'—280' inclusive (Fig. 14B) enabling the multiplexers 266' and 268' to output a value representing the inverted maximum value ($1/B_{max}$) over lines 270a'—270g' inclusive to the A input of the adders 272' and 274'. The high signal being transmitted over line 264' will enable the value of the peak amplitudes to be outputted over the output lines 282a'—282g' inclusive of the multiplexers 278' and 280' into the B input of the adders 272' and 274'. The adders 272' and 274' will subtract the maximum value from the peak amplitudes by performing a two's complement on the inverted value ($1/B_{max}$) using the carry signal appearing on line 276' and adding the resulting value to the value of the peak amplitude. This value, representing the distance $d_1$ (Fig. 10), is outputted over lines 284a'—284g' inclusive to a pair of LS283 adders 286' and 288' whose output lines 290a'—290g' inclusive are coupled to an LS273 latch 262' (Fig. 14C). The output lines 292a'—292g' of the latch 262' are coupled to the A inputs of the adders 286' and 288' and also to an LS374 flip-flop 294' for storing the output of the latch 262'.

If the peak amplitude (A) is less than the minimum value ($B_{min}$) of the window, the signal appearing on line 264' will be low, enabling the adders 272' and 274' to subtract the value of the peak amplitude appearing on lines 270a'—270g' inclusive from the minimum value appearing on the output lines 282a'—282g' of the multiplexers 278' and 280'. The value of the distance being outputted over the lines 284a'—284g' of the adders 272' and 274' are added to the output of the latch 262' and the adders 286' and 288', which value is then outputted over lines 290a'—290g' inclusive to the latch 262'. As each peak amplitude is compared with the minimum/ maximum values representing the windows of the template, the distances will be added in adders 286′ and 288′ and will appear on the output of the latch 262′ for transmission over lines 292a′—292g′ inclusive to the flip-flop 294′ for storage therein. At the completion of comparing all fourteen values of the peak amplitudes with the windows of the template, the counter 168′ (Fig. 12C) will enable the flip-flop 170′ to output the clock signal CN14 over line 178′ to the flip-flop 294′ (Fig. 14C) enabling the flip-flop to store the output value appearing on the output lines 292a′—292g′ inclusive of the latch 262′ representing the total accumulated distances for the template. The flip-flop 294′ is reset by the generation of the signal $\overline{CMP}$ which goes low at the end of the counter 168′ reaching a count of 28 in a manner described previously. The signal $\overline{CMP}$ is transmitted over line 198′ into a NOR gate 296′ which also receives over its input line 298′ a reset signal generated upon the occurrence of the signal CN14 going high which clocks a flip-flop 300′ on whose D input appears the compare enable signal CMPENB. The clocking of the flip-flop 300′ will output the high signal CLMN over its Q output line 302′ which is inputted into a second flip-flop 304′ whose $\overline{Q}$ output will reset a flip-flop 306′ enabling a high signal to occur over line 298′ upon the rising of the latch clock signal CLADD appearing over line 260′. The latch 262′ is reset upon the generation of the reset signal RSN14 appearing on the output line 188′ of the NOR gate 186′ (Fig. 12C) in the manner described previously.

The accumulated distance of the peaks for each template stored in the flip-flop 294′ (Fig. 14C) will result in the value appearing on the output lines 308a′—308h′ inclusive, which lines are coupled to the inputs of a pair of LS273 flip-flops 310′ (Fig. 16A) and 312′ (Fig. 16B). Upon the inputting of the first distance over lines 308a′—308h′ inclusive, the output of the flip-flops 310′ and 312′ will have high signals appearing on its output lines 314a′—314h′ inclusive and 316a′—316h′ inclusive respectively. These signals are inputted into a plurality of LS85 comparators 320′—326′ inclusive (Fig. 16A) which will compare the distance appearing on lines 308a′—308h′ inclusive with the value of the distances appearing on the output lines 314a′—314h′ inclusive and 316a′—316h′ inclusive. The comparators 322′ and 326′ will output signals CM1—CM4 inclusive as a result of comparing the inputting values. The function of the comparators 320′—326′ inclusive is to determine the two minimum distances of all the distances generated as a result of comparing the templates with the peak amplitudes in a manner described previously. As each value of the distance is inputted over lines 308a′—308h′ inclusive, the values will be compared with the two minimum distances ($D_{m1}$) stored in flip-flop 310′ and ($D_{m2}$) stored in the flip-flip 312′. The output values of the flip-flops 310′ and 312′ are transmitted to a pair of comparators 328′ and 330′ (Fig. 16C) to determine if they are equal or not. As the result of comparing the two minimum values, the comparator 330′ will output the signals CM5 and CM6. The values CM1—CM6 inclusive are inputted into a decoder circuit (Fig. 22) which comprises a plurality of AND gates 332′—336′ whose outputs are coupled to the D inputs of a pair of LS74 flip-flops 328′ and 340′ through OR gates 342′ and 344′. The Q outputs of the flip-flops 338′ and 340′ are coupled through a pair of OR gates 346′ and 350′ to output the clock signals CLK1 and CLK2 over lines 352′ and 354′ to the flip-flips 310′ and 312′ (Figs. 16A and 16B) enabling the flip-flops to store the input value appearing on lines 308a′—308h′ inclusive upon finding that the input value is less than the minimum value stored in the flip-flops 310′ and 312′.

Referring now to Fig. 21, there is shown an LS161 counter 356′ which outputs the count 0—3 inclusive over lines 358′ to a LS155 selector 360′ which outputs in succession the low load signals LD1—LD4 inclusive. The load signals LD1—LD4 inclusive are outputted to a pair of LS244 buffers (Fig. 16C) and a pair of LS374 flip-flops 366′ and 368′ (Fig. 16D). Upon the signals LD1 and LD2 going low, the buffers 362′ and 364′ will be enabled to output the minimum distances $D_{m1}$ and $D_{m2}$ appearing on the output of the flip-flops 310′ and 312′ over output lines 370a′—370h′ inclusive for storage in a pair of #3341 output buffers 372′ and 374′ (Fig. 20) when enabled by the signal CØ3 going high. Upon the raising of an output ready signal OTRD (Fig. 12G), which is transmitted to the processor 49 (Fig. 11B) over line 240′, the processor will output the shift out signal OTSF over line 376′ (Fig. 20) which signal will clock a flip-flop 378′ to output a high signal over line 380′ enabling the output buffers to output data over lines 120a′—120h′ inclusive to the processor 49 (Fig. 11B) where, as described more fully hereinafter, the processor will apply threshold voltages to the two minimum values to select the character representing the unknown character waveform 36′ (Fig. 10). A high signal is inputted into the D input of the flip-flop 378′ as a result of the high signals OR1 and OR2 outputted by the buffers 372′ and 374′ over lines 365′ and 367′ respectively to an AND gate 369′.

The data being outputted over the output lines 370a′—370h′ inclusive (Fig. 16D) includes the two minimum values being outputted by the buffers 362′ and 364′ (Fig. 16C) together with the template number corresponding to the two minimum values. During the time the data representing the distance of a templated is being inputted over lines 308a′—308h′ inclusive (Fig. 16A), the number of the template which is present on the output lines 220a′—220e′ inclusive and 226′ (Fig. 12G) will be inputted into the flip-flops 366′ and 368′. Depending on the finding that the distance corresponding to the template is a minimum distance, the flip-flops 366′ and 368′ will first store the template number representing the two minimum distances upon the generation of the clock signals CLK1 and CLK2 (Fig. 22) and will then subsequently be enabled by the load signals LD3 and LD4 to output over lines 370a'—370h' inclusive the numbers of the templates corresponding to the two minimum distances. This data is transmitted over lines 120a'—120h' inclusive to the processor 49 for processing in the manner that will now be described. As shown in Fig. 19, the eight bits of data outputted over lines 135a'—135h' (Fig. 12A) is also outputted into an LS244 buffer 137' for outputting of the samples to the processor 49 for use in recognizing the characters.

Referring now to Figs. 24A and 24B, there is disclosed a flowchart of the operation of the processor 49 in applying thresholds to determine if the value of the minimum distances are capable of identifying the unknown character. Upon receiving the first minimum distance (FMD) and the second minimum distance (SMD), the processor will determine which of the two data bytes representing the minimum distances is the first minimum distance by comparing the two distances (block 376'). If the second minimum distance is less than the first minimum distance, the minimum distances (FMD), (SMD) and the characters (FCHAR and SCHAR) are rearranged to be in proper order. The processr will then compare the value of the first and second character templates (block 380') to determine if they are valid templates. If they are not, the processor will reject the data (block 382').

The processor will then check the second minimum distance (SMD) to see if it is equal to 0 (block 384'). If it is, then the first minimum distance is equal to 0 and the first and second character templates represent the character 0. In the case where there are a multiple number of templates for the character 0 the processor will check to see that both characters are 0 (block 386'). If they are the processor will indicate that the unknown character is a 0 (block 388'). If not, the processor will generate a reject signal (block 390') for transmission to a utilization device.

If the second minimum distance (SMD) is not equal to 0, the processor will check the first minimum distance (FMD) to see if it is equal to 0 (block 392'). If the first minimum distance is 0, the unknown character is outputted as the character corresponding to the first character template (block 394') to the utilization device which thus ends the character recognition operation. If the first minimum distance is not equal to 0, the processor will check a flag to determine if the character is in the amount field. If it is, there are certain characters such as U, D, T, which must be excluded from the amount field. If the first character is equal to any of these characters (block 396'), the processor will reject (block 400') the character and end the operation. If the first character is not an excluded character, the processor will look up the allowed maximum distance for a first character minimum distance together with the allowed difference behween the first and second minimum distance (block 402'). If the first minimum distance is not in the amount field, the processor looks up the allowed maximum distance for the first minimum distance and the allowed differences between the first and second distances when not in the amount table (block 404'). After obtaining this information, the processor will check to see if the first minimum distance is greater than the allowed distance. If it is, it will reject the characters (block 408'). If it is not, the processor will subtract the first minimum distance from the second minimum distance and compare the result with the allowed differences (block 410'). If the distance is less than the allowed resolution and both characters associated with the two minimum distances do not represent 0 (block 412'), the processor will reject the data (block 414') and return to a state to await the next data outputted by the template matching unit 47 (Fig. 1). If the resolution is greater than the allowed resolution, the processor will generate signals (block 416') indicating the character represented by the first character (FCHAR) as the recognized character.

**Claims**

1. Character recognition apparatus including scanning means (20) arranged to scan a character to be recognized and provide a voltage waveform representative thereof, said waveform including a plurality of peaks, means (28, 38, 40, 46) for determining a start point for said waveform, and processing means (46, 47, 49) for evaluating said waveform commencing at said start point to provide an output representative of a recognized character, said means for determining a start point including means (26, 28) for sampling at a plurality of time intervals the first peak of said waveform to output signals representing the voltage amplitudes of the samples taken, and means (38, 40) for deriving an adaptive threshold voltage responsive to said samples taken from said first peak, and said processing means (46) being arranged to apply said adaptive threshold voltage to each voltage amplitude of the samples taken to determine which sample represents said start point, characterized in that said means for determining a start point further includes first counting means (172) for counting said samples, second counting means (136) for counting a first predetermined number (e.g. two) of samples exceeding a fixed threshold, means (148, 196) for resetting said first and second counting means (136, 172) if the voltage amplitude of a sample is less than a fixed threshold with said second counting means (136) having counted said first predetermined number and said first counting means (172) having counted a second predetermined number (e.g. five) of samples greater than said first predetermined number, and means (208) for recognizing a valid character start when said first counting means (172) has counted a third predetermined number (e.g. sixteen) of samples greater than said second predetermined number, and characterized by an accumulator (158, 160, 162) coupled to receive the voltage amplitude of each sample whose voltage amplitude is greater than a fixed threshold, and a storage means (154, 156) coupled to receive the output of said accumulator, the output of the storage means being coupled to the input of said accumulator thereby to enable said accumulator to add the voltage amplitudes of the samples taken, the processing means being arranged to divide the sum of these voltage amplitudes by the number of samples taken so as to derive said adaptive threshold voltage and to determine said start point.

2. Apparatus according to claim 1, characterized in that said processing means includes first storage means (58′, 70′) for storing data related to the peaks of said waveform and for storing data characteristic of a plurality of known characters, first comparison means (74′) coupled to said first storage means (58′, 70′) for comparing an item of said peak-related data with a corresponding item of data of one of said known characters to produce a difference signal representing the difference therebetween, means (92′) coupled to said first comparison means (74′) for accumulating the difference signals resulting from the comparison of all the items of said peak-related data with corresponding items of data for said one character, second comparison means (98′) for comparing the accumulated difference signals resulting from said comparisons for each known character to provide a plurality of second signals representing the two minimum accumulated difference signals, second storage means (310′, 312′) for storing said second signals, third storage means (114′) for storing identification signals of the known characters associated with said second signals, and processing means (49′) coupled to said second and third storage means for applying a plurality of threshold values to said second signals to identify the character to be recognized.

3. Apparatus according to claim 2, characterized in that said first storage means includes a first storage part (58′) for storing said peak-related data and a second storage part (70′) for storing said data characteristic of a plurality of known characters, and by first clocked counter means (66′) coupled to said first storage part (58′) to enable said first storage part to sequentially output items of said peak-related data as an address (86′) for said second storage part (70′) to enable said second storage part to output items (72′) of data corresponding to the items outputted by said first storage part for comparison in said first comparison means.

4. Apparatus according to claim 3, characterized by further counter means (88′) coupled to said second storage part (70′) and said first counter means (66′), said first clocked counter means, upon outputting a count equal to the total number of said items of peak-related data, being arranged to enable said further counter means (88′) to output a count to said second storage part (70′) whereby to sequentially enable data for each known character to be accessed from said second storage part.

5. Apparatus according to claim 4, characterized in that said third storage means (114′) is coupled to said further counter means (88′) and is arranged to be enabled by said second comparison means (98′) to store the output counts of said further counter means (88′) corresponding to each of said two minimum differences as said identification signals.

6. Apparatus according to claim 5, characterized by fourth storage means (56′) coupled to said second comparison means (98′) and third storage means (114′) for storing said second signals and said identification signals, said processing means being arranged to enable said fourth storage means to output said second signals and said identification signals to said processing means (49′) in response to said further counter means (88′) reaching a count equal to the number of known characters available.

7. A method of recognizing characters including the steps of scanning a character to be recognized so as to provide a voltage waveform representative thereof, said waveform including a plurality of peaks, determining a start point ($P_A$) for said waveform, and evaluating said waveform commencing at said start point to provide an output representative of a recognized character, the step of determining said start point ($P_A$) including sampling at a plurality of time intervals the first peak of said waveform to output signals representing the voltage amplitudes of the samples taken, deriving an adaptive threshold voltage value ($T_a$) from the samples taken from said first peak and applying said adaptive threshold voltage to each voltage amplitude of the samples taken to determine which sample represents said start point, characterized in that the step of determining said start point further includes counting said samples by a first counting means (172), separately counting a first predetermined number of samples exceeding a fixed threshold by a second counting means (136), resetting said first and second counting means if the voltage amplitude of a sample is less than a fixed threshold with said second counting means having counted said first predetermined number and said first counting means having counted a second predetermined number of samples greater than said first predeterminec number, and recognizing a valid character start when said first counting means has counted a third predetermined number of samples greater than said second predetermined number, adding the voltage amplitudes of the samples greater than a fixed threshold, counting the number of samples taken, dividing the sum of the voltage amplitudes of the samples taken by the number of samples taken to derive said adaptive threshold voltage and to determine said start point.

8. A method according to claim 7, characterized in that said evaluation of said waveform comprises, for samples of said waveform subsequent to said start point sample, summing the voltage amplitudes of each pair of adjacent samples and dividing each sum by two to establish an average amplitude for each sample.

9. A method according to either claim 7 or claim 8, characterized by allocating the samples of said waveform to a plurality of windows, determining the sample having the maximum amplitude in each window, summing a predetermined number of said samples having a maximum amplitude and dividing the sum by the predetermined number to establish a normalization factor, dividing all said samples having a maximum amplitude by said normalization factor and multiplying all said samples by a scaling factor, and storing said normalized scaled samples for further processing.

**Revendications**

1. Appareil de reconnaissance de caractères comprenant des moyens de balayage (20) destinés à balayer un caractère à reconnaître et à produire une forme d'onde représentative de ce caractère, ladite forme d'onde comprenant plusieurs pics, des moyens (28, 38, 40, 46) pour déterminer un point de départ de ladite forme d'onde, et des moyens de traitement (46, 47, 49) pour évaluer ladite forme d'onde commençant audit point de départ afin de produire une sortie représentative d'un caractère reconnu, lesdits moyens pour déterminer un point de départ comprenant des moyens (26, 28) pour échantillonner à plusieurs intervalles de temps le premier pic de ladite forme d'onde afin de produire des signaux représentant les amplitudes de tension des échantillons prélevés, et des moyens (38, 40) destinés à dériver une tension de seuil adaptative en réponse auxdits échantillons prélevés sur ledit premier pic, et lesdits moyens de traitement (46) étant conçus pour appliquer ladite tension de seuil adaptative à chaque amplitude de tension des échantillons prélevés afin de déterminer quel échantillon représente ledit point de départ, caractérisé en ce que lesdits moyens pour déterminer un point de départ comprennent en outre un premier moyen de comptage (172) destiné à compter lesdits échantillons, un second moyen de comptage (136) destiné à compter un premier nombre prédéterminé (par exemple deux) d'échantillons dépassant un seuil fixe, des moyens (148, 196) destinés à remettre à zéro lesdits premier et second moyens de comptage (136, 172) si l'amplitude de tension d'un échantillon est inférieure à un seuil fixe, ledit second moyen de comptage (136) ayant compté ledit premier nombre prédéterminé et ledit premier moyen de comptage (172) ayant compté un second nombre prédéterminé (pare exemple cinq) d'échantillons supérieur audit premier nombre prédéterminé, et des moyens (208) destinés à reconnaître un début de caractère valide lorsqure ledit premier moyen de comptage (172) a compté un troisième nombre prédéterminé (par exemple seize) d'échantillons supérieur audit second nombre prédéterminé, et caractérisé par un accumulateur (158, 160, 162) couplé de façon à recevoir l'amplitude de tension de chaque échantillon dont l'amplitude de tension est supérieure à un seuil fixe, et des moyens de mémorisation (154, 156) couplés de façon à recevoir la sortie de l'accumulateur, la sortie des moyens de mémorisation étant couplée à l'entrée dudit accumulateur afin de permettre audit accumulateur d'additionner les amplitudes de tension des échantillons prélevés, les moyens de traitement étant agencés de façon à diviser la somme de ces amplitudes de tension par le nombre d'échantillons prélevés afin de dériver ladite tension de seuil adaptative et de déterminer ledit point de départ.

2. Appareil selon la revendication 1, caractérisé en ce que lesdits moyens de traitement comprennent des premiers moyens de mémorisation (58', 70') pour mémoriser des données concernant les pics de ladite forme d'onde et pour mémoriser des données caractéristiques de plusieurs caractères connus, des premiers moyens de comparaison (74') couplés auxdits premiers moyens de mémorisation (58', 70') pour comparer un élément desdites données de pics avec un élément correspondant de données de l'un desdits caractères connus pour produire un signal de différence représentant la différence entre ces éléments, des moyens (92') couplés auxdits premiers moyens de comparaison pour accumuler les signaux de différence résultant de la comparaison de tous les éléments desdits données de pics avec des éléments correspondants de données pour ledit caractère, des seconds moyens de comparaison (98') pour comparer les signaux de différence accumulés résultant desdits comparaisons pour tous les caractères connus afin de produire plusieurs seconds signaux représentant les deux signaux de différence accumulés minimaux, des deuxièmes moyens de mémorisation (310', 312') pour mémoriser lesdits seconds signaux, des troisièmes moyens de mémorisation (114') pour mémoriser des signaux d'identification des caractères connus associés auxdits seconds signaux, et des moyens de traitement (49') couplés auxdits deuxièmes et troisièmes moyens de mémorisation pour appliquer plusieurs valeurs de seuil auxdits seconds signaux afin d'identifier le caractère à reconnaître.

3. Appareil selon la revendication 2, caractérisé en ce que les premiers moyens de mémorisation comprennent une première partie de mémoire (58') pour mémoriser lesdites données de pics et une seconde partie de mémoire (70') pour mémoriser lesdits données caractéristiques de plurieurs caractères connus, et par des premiers moyens synchronisés de comptage (66') couplés à ladite première partie de mémoire (58') pour permettre à ladite première partie de mémoire de produire séquentiellement des éléments desdits données de pics sous forme d'une adresse (86') pour ladite seconde partie de mémoire (70') afin de valider ladite seconde partie de mémoire pour qu'elle produise des éléments de données (72') correspondant aux éléments produits par ladite première partie de mémoire, pour une comparaison dans lesdits premiers moyens de comparaison.

4. Appareil selon la revendication 3, caractérise par des seconds moyens de comptage (88') couplés à ladite seconde partie de mémoire (70') et auxdits premiers moyens de comptage (66'), les premiers moyens de comptage, en produisant un compte égal au nombre total desdits éléments de données de pics, étant destinés à permettre auxdits seconds moyens de comptage (88') de transmettre un compte à ladite seconde partie de mémoire (70') afin de permettre sequentiellement à des données pour chaque caractère connue d'être extraites de ladite seconde partie de mémoire.

5. Appareil selon la revendication 4, caractérise en ce que lesdits troisièmes moyens de mémorisation (114') sont couplés auxdits seconds moyens de comptage (88') et sont destinés à être validés par lesdits seconds moyens de comparaison (98') afin de mémoriser les comptes de sortie desdits seconds moyens de comptage (88') correspondant à chacune desdites deux différences minimales, constituant lesdits signaux d'identification.

6. Appareil selon la revendication 5, caractérisé par des quatrièmes moyens de mémorisation (56') couplés auxdits seconds moyens de comparaison (98') et auxdits troisièmes moyens de mémorisation (114') afin de mémoriser lesdits seconds signaux et lesdits signaux d'identification, lesdits moyens de traitement étant destinés à permettre auxdits quatrièmes moyens de mémorisation d'appliquer lesdits seconds signaux et lesdits signaux d'identification auxdits moyens de traitement (49') lorsque lesdits seconds moyens de comptage (88') atteignent un compte égal au nombre de caractères connus disponibles.

7. Procédé de reconnaissance de caractères comprenant les étapes qui consistent à balayer un caractère à reconnaître afin de produire une forme d'onde de tension qui en est représentative, ladite forme d'onde comprenant plusieurs pics, à déterminer un point de départ ($P_A$) de ladite forme d'onde, et à évaluer ladite forme d'onde commençant audit point de départ pour produire une sortie représentative d'un caractère reconnu, l'étape de détermination dudit point de départ ($P_A$) consistant à échantillonner à plusieurs intervalles de temps le premier pic de ladite form d'onde pour produire des signaux représentant les amplitudes de tension des échantillons prélevés, à dériver une valeur de tension de seuil adaptative ($T_a$) à partir des échantillons prélevés sur ledit premier pic et à appliquer ladite tension de seuil adaptative à chaque amplitude de tension des échantillons prélevés pour déterminer l'échantillon qui représente ledit point de départ, caractérisé en ce que l'étape de détermination dudit point de départ consiste en outre à compter lesdits échantillons à l'aide d'un premier moyen de comptage (172), à compter séparément un premier nombre prédeterminé d'échantillons dépassant un seuil fixe à l'aide d'un second moyen de comptage (136), à remettre à zéro lesdits premier et second moyens de comptage si l'amplitude de tension d'un échantillon est inférieure à un seuil fixe, ledit second moyen de comptage ayant compté ledit premier nombre prédéterminé et ledit premier moyen de comptage ayant compté un deuxième nombre prédéterminé d'échantillons supérieur audit premier nombre prédéterminé, et à reconnaître un début de caractère valide lorsque ledit premier moyen de comptage a compté un troisième nombre prédéterminé d'échantillons supérieur audit deuxième nombre prédéterminé, à additionner les amplitudes de tension des échantillons, supérieures à un seuil fixe, à compter le nombre d'échantillons prélevés, à diviser la somme des amplitudes de tension des échantillons prélevés par le nombre d'échantillons prélevés afin de dériver ladite tension de seuil adaptative et de déterminer ledit point de départ.

8. Procédé selon la revendication 7, caractérisé en ce que ladite évaluation de ladite forme d'onde consiste, pour de échantillons de ladite forme d'onde suivant l'échantillon dudit point de départ, à additionner l'amplitude de tension de chaque paire d'échantillons adjacents et à diviser chaque somme par deux pour établir une amplitude moyenne pour chaque échantillon.

9. Procédé selon la revendication 7 ou 8, caractérisé en ce qu'il consiste à affecter les échantillons de ladite forme d'onde à plusieurs fenêtres, à déterminer l'échantillon ayant l'amplitude maximale dans chaque fenêtre, à additionner un nombre prédéterminé desdits échantillons ayant une amplitude maximale et diviser la somme par le nombre prédéterminé pour établir un facteur de normalisation, à diviser tous lesdits échantillons ayant une amplitude maximale par ledit facteur de normalisation et multiplier tous lesdits échantillons par un facteur de cadrage, et à mémoriser lesdits échantillons normalisés et cadrés pour la poursuite du traitement.

**Patentansprüche**

1. Zeichenerkennungsgerät mit einer Abtastvorrichtung (20), die angeordnet ist zur Abtastung eine zu erkennenden Zeichens und zur Abgabe einer für dieses repräsentativen Spannungssignalform, wobei die Signalform eine Vielzahl von Spitzen aufweist, mit Mitteln (28, 38, 40, 46) zum Bestimmen eines Anfangspunkts der gennanten Signalform und Verarbeitungsmitteln (46, 47, 49) zur Auswertung der genannten am genannten Anfangspunkt beginnenden Signalform, um ein für das erkannte Zeichen repräsentatives Ausgangssignal abzugeben, wobei die genannten Mittel zum Bestimmen eine Anfangspunkts Mittel (26, 28) zur Abtastung der ersten Spitze der genannten Signalform zu einer Vielzahl von Zeitintervallen zur Abgabe von die Spannungsamplituden der abgenommenen Abtastungen darstellenden Signale und Mittel (38, 40) zum Ableiten einer adaptiven Schwellenwertspannung aufweisen, die auf die von der ersten Spitze abgenommenen Abtastungen ansprechen, und wobei die Verarbeitungsmittel (46) angeordnet sind, um die adaptive Schwellenwertspannung an jede Spannungs amplitude der genommenen Abtastungen anzulegen, um diejenige Abtastung zu bestimmen, die den Anfangspunkt wiedergibt, dadurch gekennzeichnet, dass die Mittel zum Bestimmen eines Anfangspunktes ferner erste Zählmittel (172) zum Zählen der Abtastungen, zweite Zählmittel (136) zum Zählen einer ersten vorbestimmten Anzahl (z.B) zwei) von Abtastungen, die einen festen Schewellenwert überschreiten, Mittel (148, 196) zum Rückstellen der ersten und zweiten Zählmittel (136, 172) wenn die Spannungsamplitude eine Abtastung geringer als ein fester Schwellenwert ist, die zweiten Zählmittel (136) eine erste vorbestimmte Anzahl und die ersten Zählmittel (172) eine zweite vorbestimmte Anzahl (z.B fünf) Abtastungen gezählt haben, die grösser als die erste vorbestimmte Anzahl ist, und Mittel (208) zum Erkennen eines gültigen Zeichenbeginns aufweisen, wenn die ersten Zählmittel (172) eine dritte vorbestimmte Anzahl (z.B. sechzehn) Abtastungen gezählt haben, die grösser als die zweite vorbestimmte Anzahl ist, und gekennzeichnet durch einen Akkumulator (158, 160, 162) der zum Empfang der Spannungsamplitude jeder Abtastung gekoppelt ist, deren Spannungsamplitude grösser als ein fester Schwellenwert ist; und Speichermittel (154, 156) die zum Empfang des Ausgangssignals der Akkumulators gekoppelt sind, wobei der Ausgang der Speichermittel mit dem Eingang des Akkumulators gekoppelt ist, wodurch der Akkumulator in die Lage versetzt wird, die Spannungsamplituden der abgenommenen Abtastungen zu addieren, wobei die Verarbeitungsmittel angeordnet sind, um die Summe dieser Spannungsamplituden durch die Anzahl von abgenommenen Abtastungen zu dividieren, um die adaptive Schwellenwertspannung abzuleiten und den Anfangspunkt zu bestimmen.

2. Gerät nach Anspruch 1, dadurch gekennzeichnet, dass die genannten Verarbeitungsmittel erste Speichermittel (58′, 70′) zur Speicherung von auf die Spitzen der genannten Signalform bezogenen Daten und zur Speicherung von einer Vielzahl von bekannten Ziechen, erste Vergleichsmittel (74′), die mit den genannten ersten Speichermitteln (58′, 70′) zum Vergleichen eines Datums der genannten spitzenbezogenen Daten mit einem entsprechenden Datum von Daten eines der genannten bekannten Zeichen gekoppelt sind, um ein Differenzsignal entsprechen der Differenz zwischen ihnen zu erzeugen, Mittel (92′), die mit den genannten ersten Vergleichsmitteln (74′) zum Akkumulieren der Differenzsignale, die sich von dem Vergleich aller der Datenwerte der genannten spitzenbezogenen Datan mit entsprechenden Datenwerten der Daten für das genannte eine Zeichen ergeben, gekoppelt sind, zweite Vergleichsmittel (98′) zum Vergleichen der akkumulierten Differenzsignale, die sich aus den genannten Vergleichen für jedes bekannte Zeichen ergeben, zur Erzeugung einer Vielzahl von zweiter Signale, die die zwei mit Minimum akkumulierten Differenzsignale darstellen, zweite Speichermittel (310′, 312′) zum Speichern genannter zweiter Signale, dritte Speichermittel (114′) zum Speichern von Identifikationssignalen der den genannten zweiten Signalen zugeordneten bekannten Zeichen und Verarbeitungsmittel (49′) aufweisen, die mit den genannten zweiten und dritten Speichermitteln zum Anlegen einer Vielzahl von Schwellenwerten an die zweiten Signale gekoppelt sind, zur Identifizierung des zu erkennenden Zeichens.

3. Gerät nach Anspruch 2, dadurch gekennzeichnet, dass die genannten ersten Speichermittel einen ersten Speicherteil (58′) zur Speicherung der genannten spitzenbezogenen Daten und einen zweiten Speicherteil (70′) zur Speicherung der genannten für eine Vielzahl bekannter Zeichen charakteristischer Daten Besitzen und durch erste getaktete Zählermittel (66′), die mit dem genannten ersten Speicherteil (58′) zur Aktivierung des genannten ersten Speicherteils gekoppelt sind, um aufeinanderfolgend Datenwerte der genannten spitzenbezogenen Daten als eine Adresse (86′) für den genannten zweiten Speicherteil (70′) auszugeben, um diesen genannten zweiten Speicherteil zu aktivieren für eine Ausgabe von Datenwerten (72′), die denjenigen Datenwerten entsprechen, die durch die genannte erste Speichervorrichtung abegeben wurden.

4. Gerät nach Anspruch 3, gekennzeichnet durch zweite Zählermittel (88′), die mit dem genannten zweiten Speicherteil (70′) und den genannten ersten Zählermitteln (66′) gekoppelt sind, wobei der erste Zähler bei Ausgabe einer Zählung gleich der Gesamtanzahl der genannten Datenwerte der spitzenbezogenen Daten derart angeordnet ist, dass er die genannten zweiten Zählermittel (88′) zu einer Ausgabe einer Zählung an den genannten zweiten Speicherteil (70′) aktiviert, wodurch aufeinanderfolgend auf Daten für jedes bekannte Zeichen von dem genannten zweiten Speicherteil zugegriffen werden kann.

5. Gerät nach Anspruch 4, dadurch gekennzeichnet, dass die genannten dritten Speichermittel (114′) mit den genannten zweiten Zählermitteln (88′) gekoppelt und derart angeordnet sind, dass sie durch die genannten zweiten Vergleichsmittel (98′) aktiviert werden für eine Speicherung der Ausgangszählungen der genannten zweiten Zählermittel (88′) entsprechend jeder der genannten beiden minimalen Differenzen als genannte Identifikationssignale.

6. Gerät nach Anspruch 5, gekennzeichnet durch vierte Speichermittel (56′), die mit den genannten zweiten Vergleichsmitteln (98′) und dritten Speichermitteln (114′) zur Speicherung der genannten zweiten Signale und der genannten Identifikationssignale gekoppelt sind, wobei die genannten Verarbeitungsmittel derart angeordnet sind, dass sie die genannten vierten Speichermittel für eine Ausgabe der genannten zweiten Signale und der genannten Identifikationssignale an die genannten Verarbeitungsmittel (49') abhängig davon aktivieren, dass die genannten zweiten Zählermittel (88') eine Zählung erreichen, dei gleich ist de Anzahl der vorhandenen bekannten Zeichen.

7. Verfahren zum Erkennen von Zeichen mit den Schritten Abtasten eines zu erkennenden Zeichens, um eine Spannungssignalform abzugeben, die dafür repräsentativ ist, wobei die Signalform eine Vielzahl von Spitzen aufweist, Bestimmen eines Anfangspunktes ($P_A$) der Signalform und Auswerten der Signalform beginnend am Anfangspunkt, um ein Ausgangsignal abzugeben, das repräsentativ für ein erkanntes Zeichen ist, wobei der Schritt Bestimmen eines Anfangspunktes ($P_A$) einschliesst Abtasten der ersten Spitze der Signalform zu einer Vielzahl von Zeitintervallen, um Signale entsprechend den Spannungsamplituden der abgenommenen Abtastungen abzugeben, Ableiten eines adaptiven Schwellenspannungswertes ($T_a$) von den von der ersten Spitze abgenommenen Abtastungen und Anlegen der adaptiven Schwellenwertspannung an jede Spannungsamplitude der abgenommenen Abtastungen, um zu bestimmen, welche Abtastung den Anfangspunkt darstellt, dadurch gekennzeichnet, dass der Schritt Bestimmen des Anfangspunktes ferner aufweist Zählen der Abtastungen durch erste Zählmittel (172), getrenntes, Zählen einer ersten vorbestimmten Anzahl von Abtastungen, die einen festen Schwellenwert überschreiten durch zweite Zählmittel (136), Rückstellen der ersten und zweiten Zählmittel, wenn die Spannungsamplitude eine Abtastung geringer als ein fester Schwellenwert ist, die zweiten Zählmittel eine erste vorbestimmte Anzahl gezählt haben und die ersten Zählmittel eine zweite vorbestimmte Anzahl von Abtastungen gezählt haben, die grösser als die erste vorbestimmte Anzahl ist, und Erkennen eines gültigen Zeichenanfangs, wenn die ersten Zählmittel eine dritte vorbestimmte Anzahl von Abtastungen gezählt haben, die grösser als die zweite vorbestimmte Anzahl ist, Addieren der Spannungsamplituden der Abtastungen, die grösser als ein fester Schwellenwert sind, Zählen der Anzahl der abgenommenen Abtastungen, Teilen der Summe der Spannungsamplituden der abgenommenen Abtastungen durch die Anzahl von abgenommenen Abtastungen, um die adaptive Schwellenwertspannung abzuleiten und den Anfangspunkt zu bestimmen.

8. Verfahren nach Anspruch 7, dadurch gekennzeichnet, dass die genannte Auswertung der genannten Signalform für Abtastungen der genannten Signalform nach der genannten Anfangspunktabtastung, Summieren der Spannungsamplitude jedes Paares von benachbarten Abtastungen und Dividieren jeder Summe durch zwei umfasst, um eine Durchschnittsamplitude für jede Abtastung zu erstellen.

9. Verfahren nach einem der Ansprüche 7 oder 8, gekennzeichnet durch Zuordnung der Abtastungen der genannten Signalform zu einer Vielzahl von Fenstern, Bestimmen der Abtastung mit der maximalen Amplitude in jedem Fenster, Summieren einer vorbestimmten Anzahl von genannten Abtastungen mit einer maximalen Amplitude und Dividieren der Summe durch die vorbestimmte Anzahl, um einen Normierungsfaktor zu erstellen, Dividieren aller genannter Abtastungen mit einer maximalen Amplitude durch den genannten Normierungsfaktor und Multiplizieren aller genannter Abtastungen mit einem Skalenfaktor und Speichern der normierten skalierten Abtastungen für eine weitere Verarbeitung.

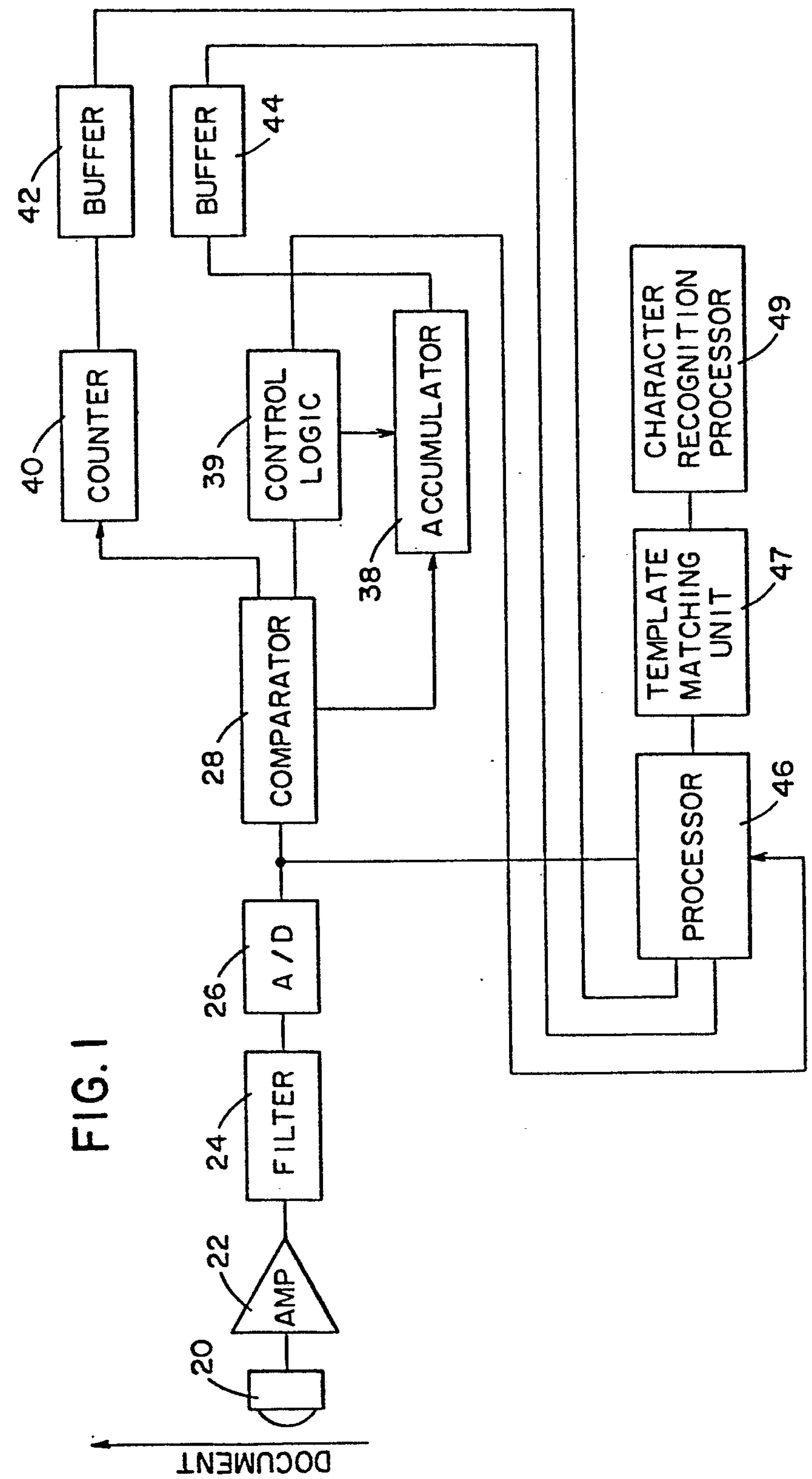
DOCUMENT
20
AMP
22
FILTER
24
A / D
26
COMPARATOR
28
CONTROL LOGIC
39
ACCUMULATOR
38
COUNTER
40
BUFFER
42
BUFFER
44
PROCESSOR
46
TEMPLATE MATCHING UNIT
47
CHARACTER RECOGNITION PROCESSOR
49

FIG. 1

FIG.2

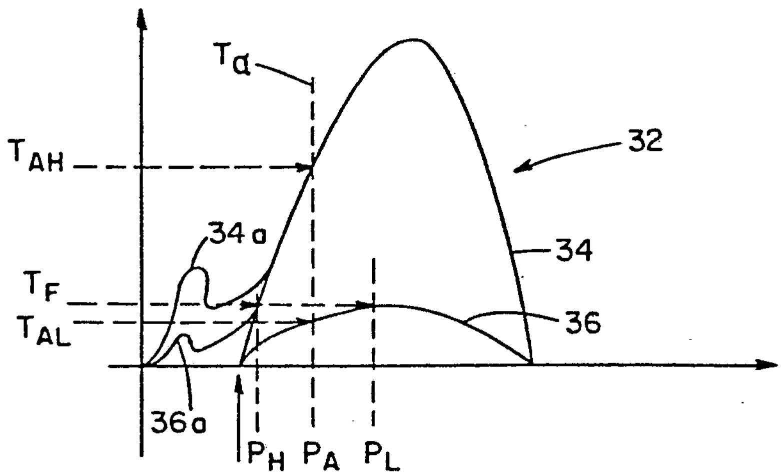


FIG.4

| | | |
|---|---|---|
| FIG. 3A | FIG. 3B | FIG. 3C |
| FIG. 3D | FIG. 3E | FIG. 3F |
| FIG. 3G | FIG. 3H | FIG. 3I |

FIG. 3A

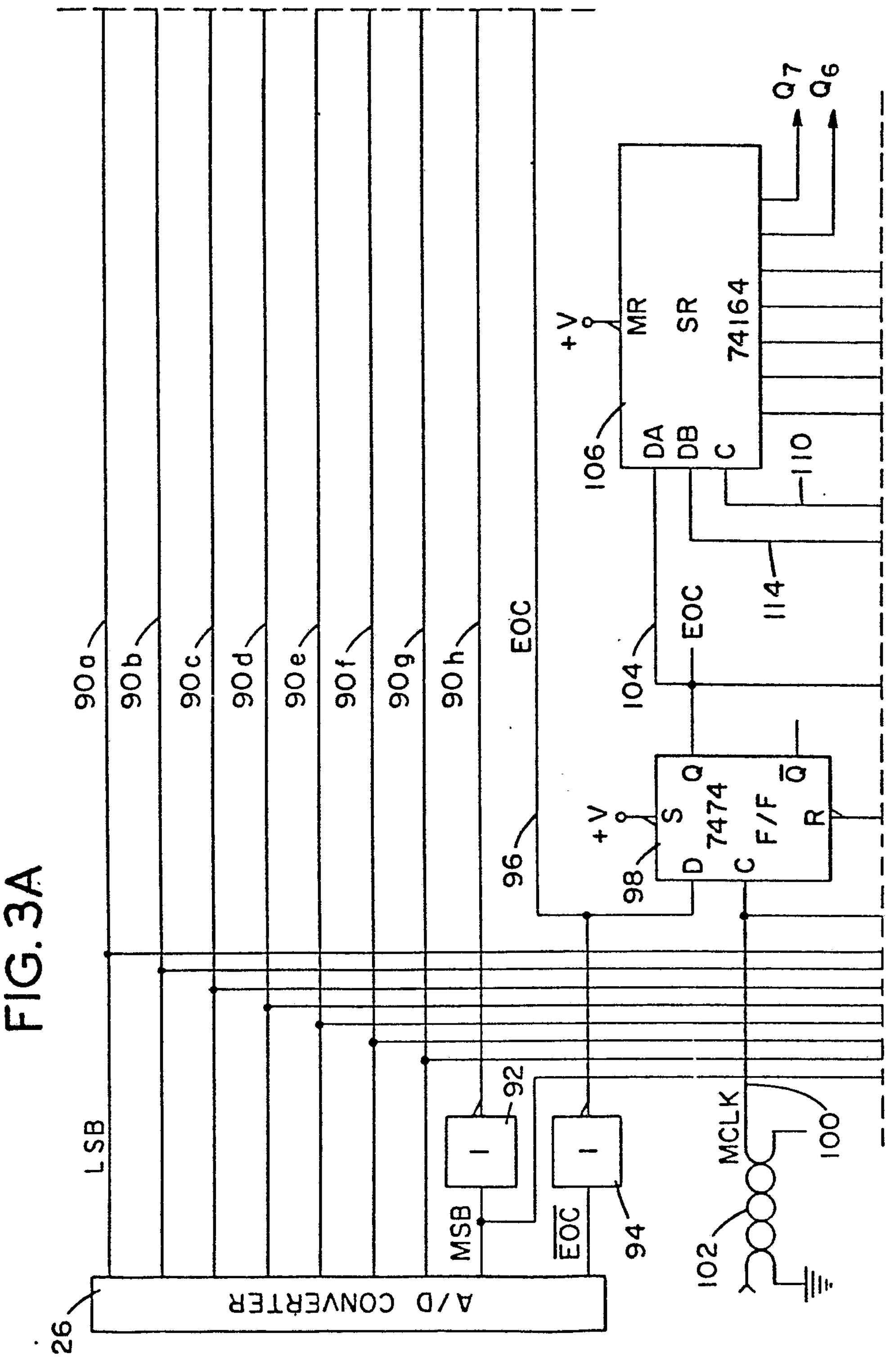
A/D CONVERTER
26
LSB
MSB
$\overline{EOC}$
90a
90b
90c
90d
90e
90f
90g
90h
EOC
92
94
96
98
+V
S
D
C
Q
$\overline{Q}$
R
7474
F/F
104
EOC
106
+V
MR
SR
74164
DA
DB
C
110
114
$Q_7$
$Q_6$
MCLK
100
102

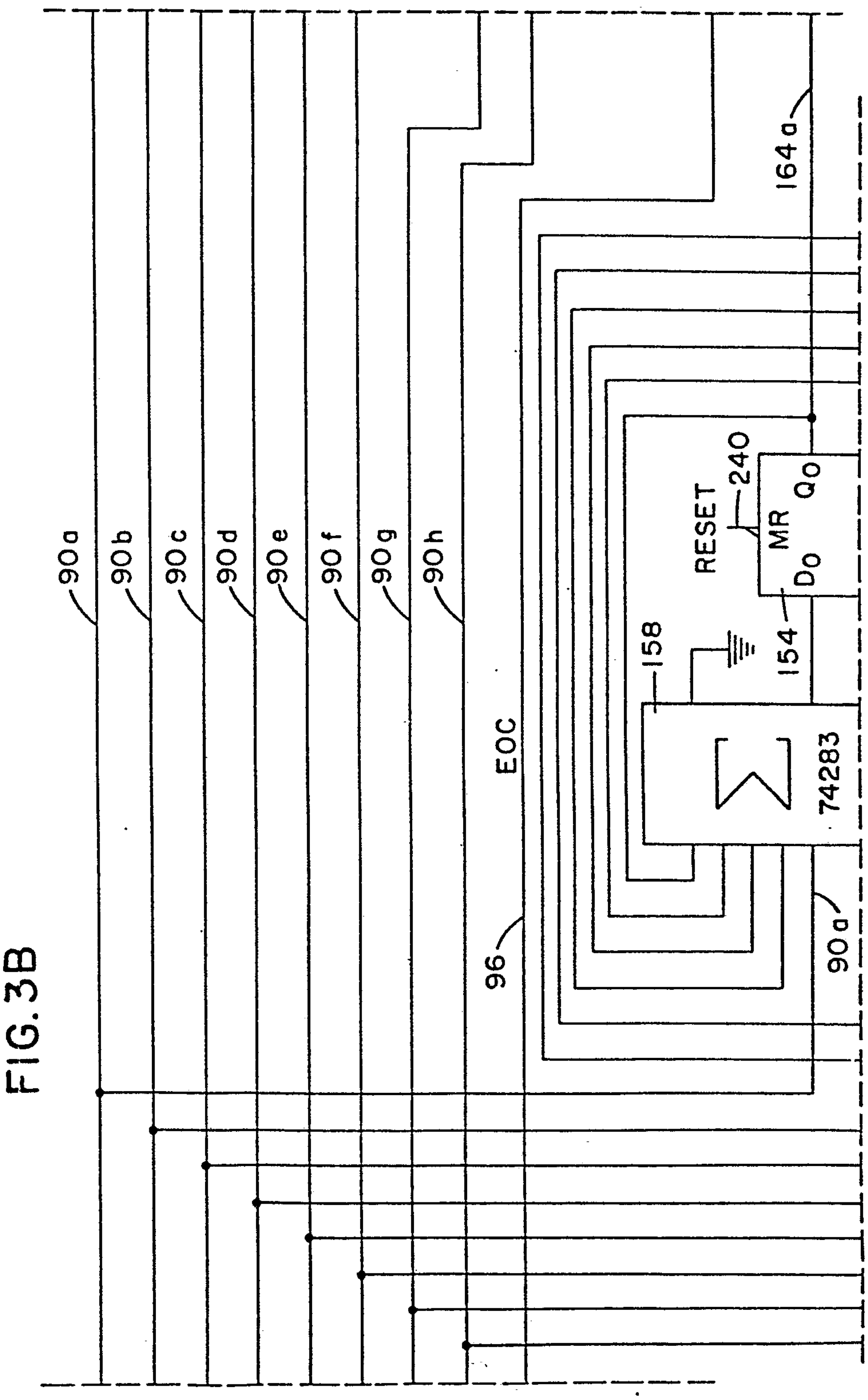

90a
90b
90c
90d
90e
90f
90g
90h
EOC
96
164a
240
RESET
MR
Do
Qo
158
154
74283
90a


FIG. 3B

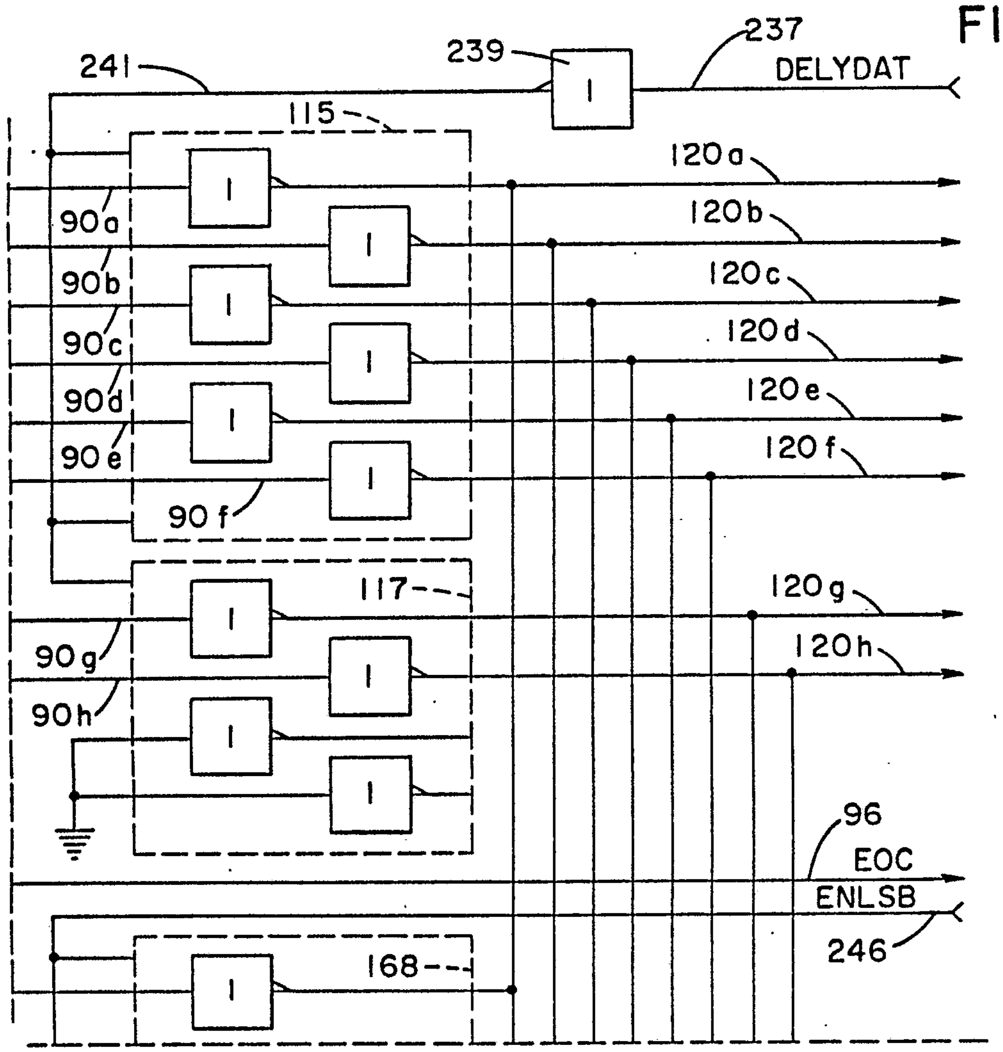
241
239
237
DELYDAT
115
120a
120b
120c
120d
120e
120f
90a
90b
90c
90d
90e
90f
117
120g
120h
90g
90h
96
EOC
ENLSB
246
168

FIG.3C

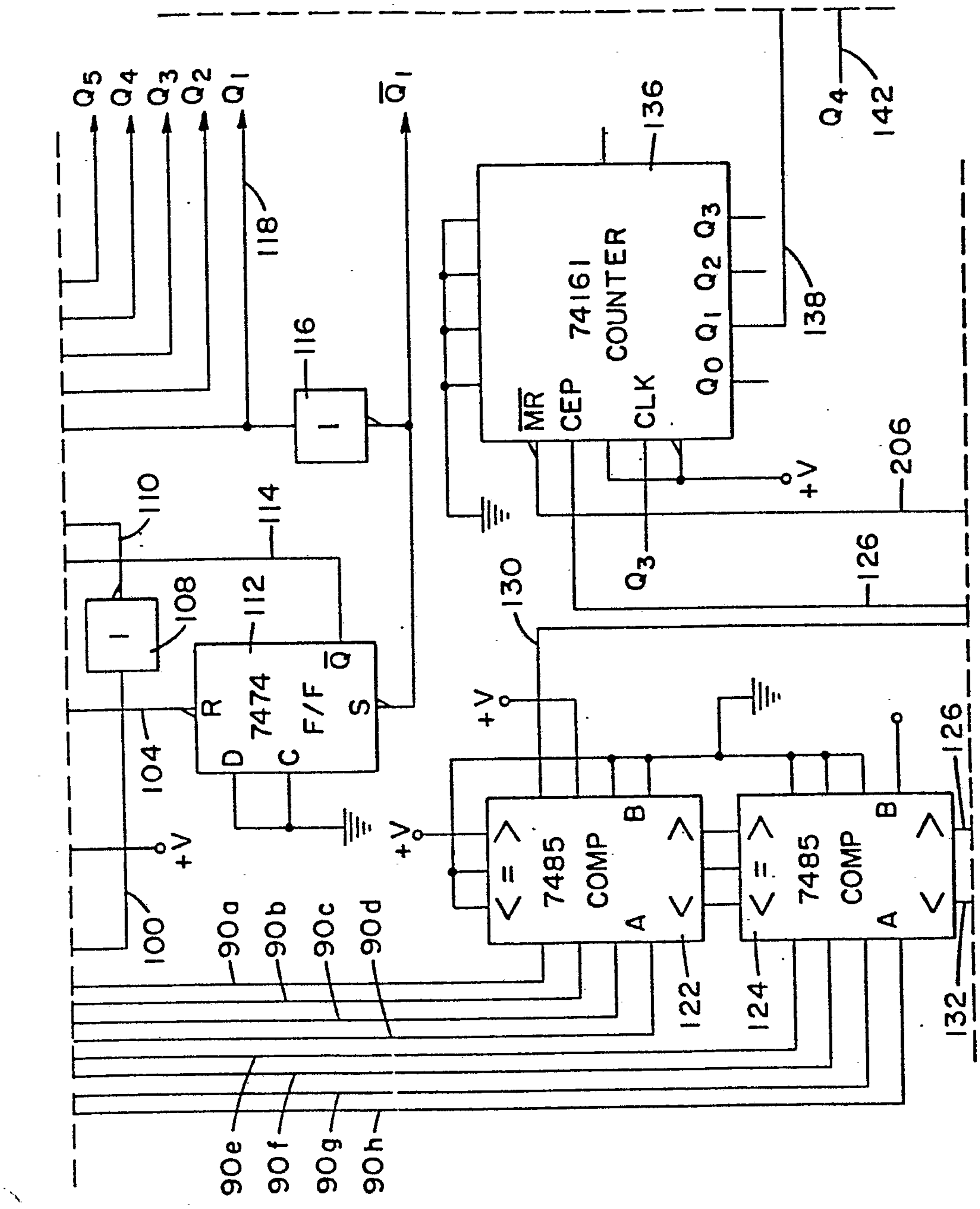

Q5
Q4
Q3
Q2
Q1
Q̄1
118
116
110
114
108
112
7474 F/F
R
D
C
S
Q̄
104
100
+V
90a
90b
90c
90d
90e
90f
90g
90h
130
7485 COMP
A
B
122
124
126
132
136
74161 COUNTER
MR
CEP
CLK
Q0 Q1 Q2 Q3
138
142
206


FIG.3D

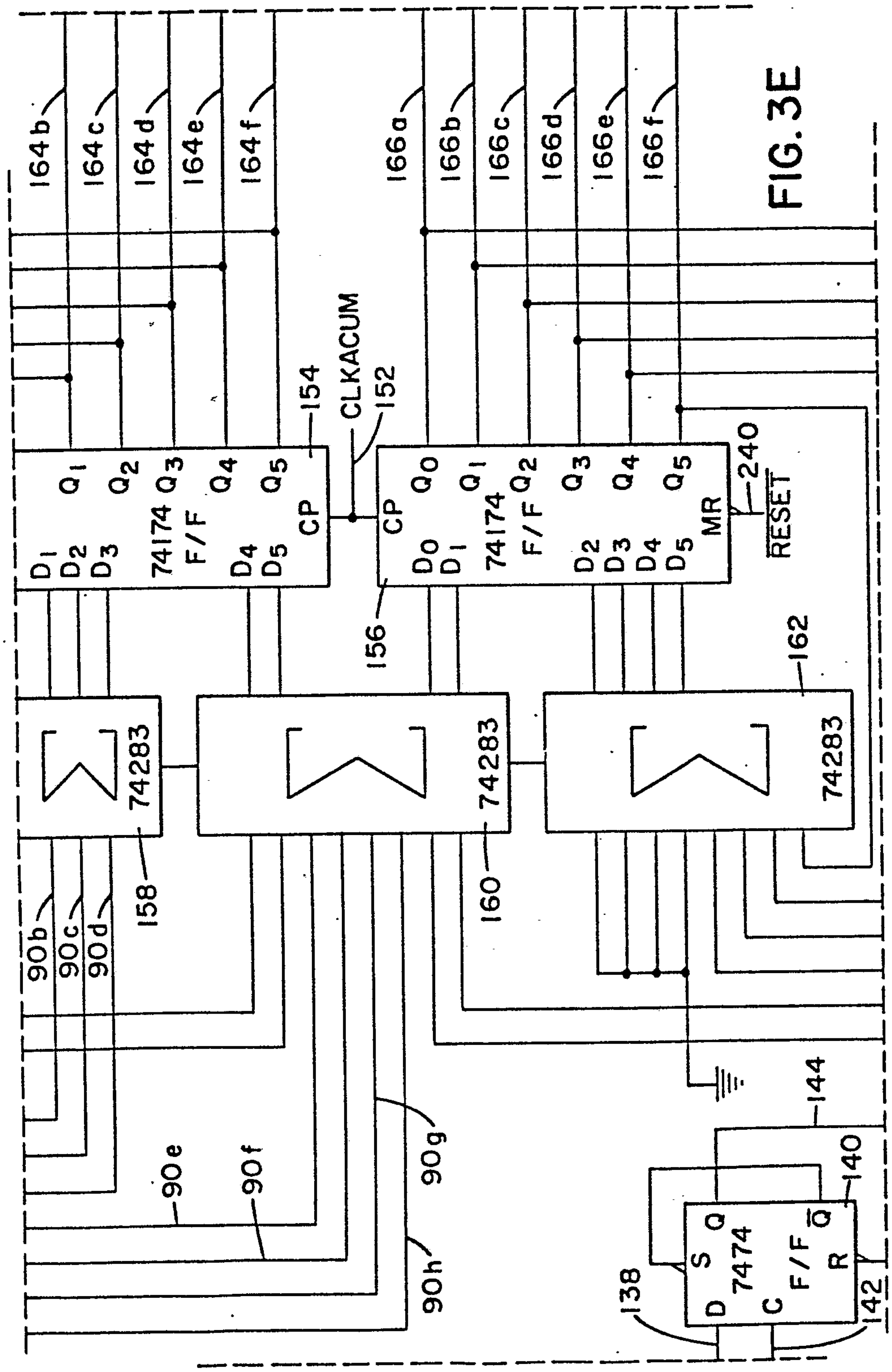
164b
164c
164d
164e
164f
166a
166b
166c
166d
166e
166f
CLKACUM
154
152
74174 F/F
D1 D2 D3 D4 D5 CP
Q1 Q2 Q3 Q4 Q5
74174 F/F
D0 D1 D2 D3 D4 D5 MR
CP Q0 Q1 Q2 Q3 Q4 Q5
240
RESET
156
162
74283
74283
74283
158
160
90b
90c
90d
90e
90f
90g
90h
144
140
7474 F/F
S Q D C R Q̄
138
142

FIG. 3E

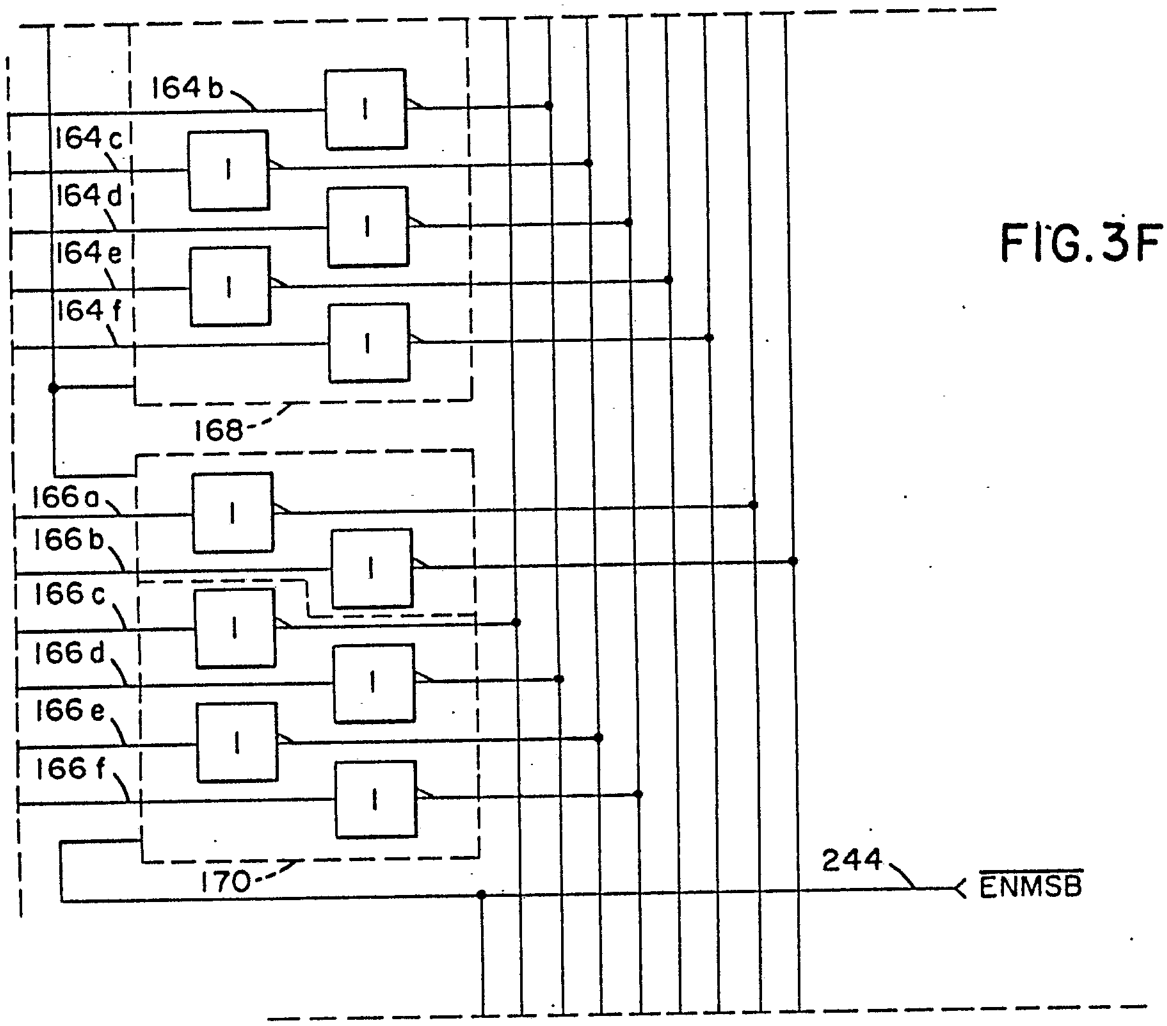
164 b
164 c
164 d
164 e
164 f
168
166 a
166 b
166 c
166 d
166 e
166 f
170
244
ENMSB

FIG.3F

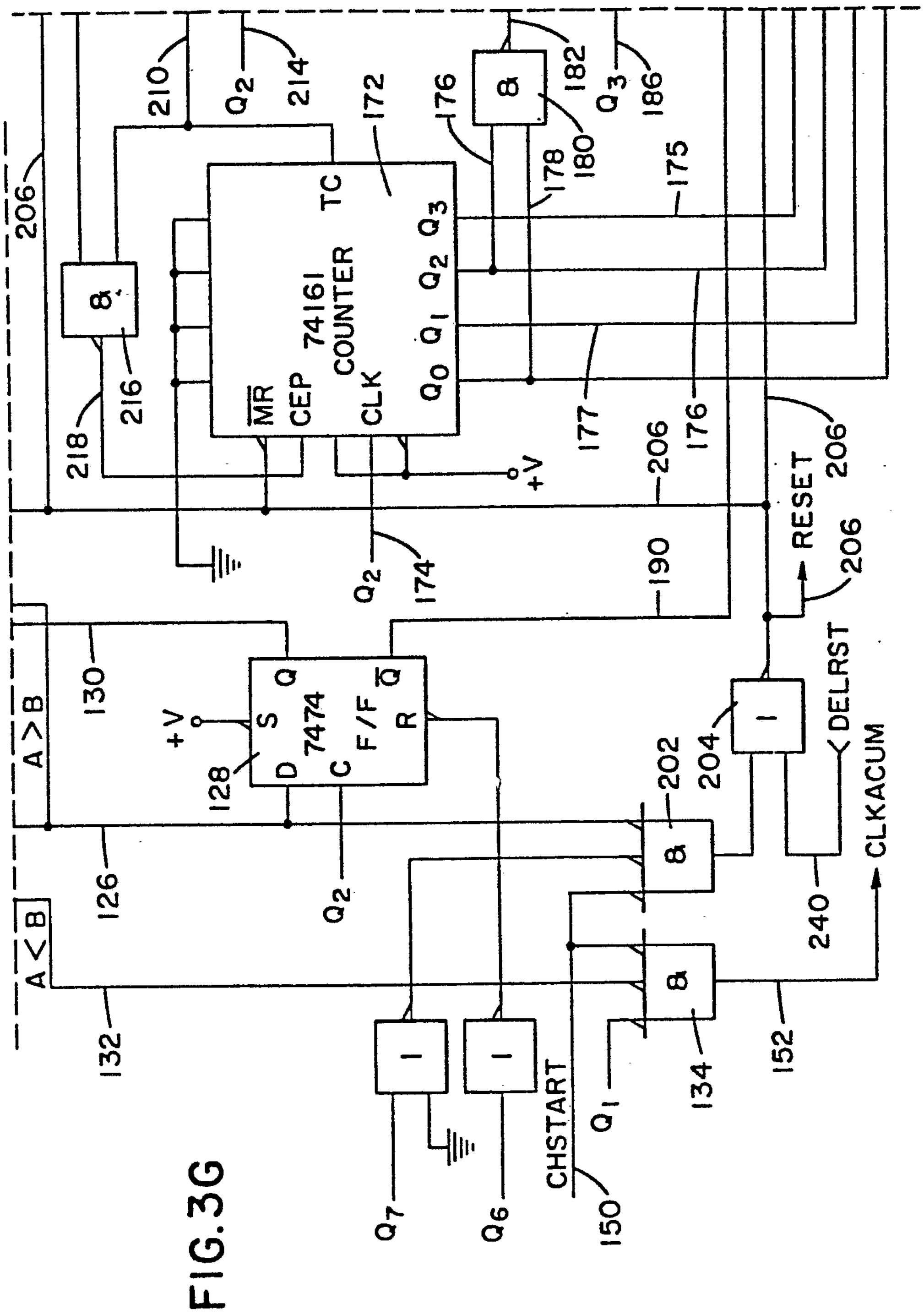
74161 COUNTER
MR
CEP
CLK
TC
Q0
Q1
Q2
Q3
7474 F/F
S
D
C
Q
R
+V
A > B
A < B
RESET
DELRST
CLKACUM
CHSTART
Q7
Q6
206
210
214
172
176
182
180
178
186
175
216
218
177
190
174
130
128
126
132
202
204
134
152
240
150

FIG.3G

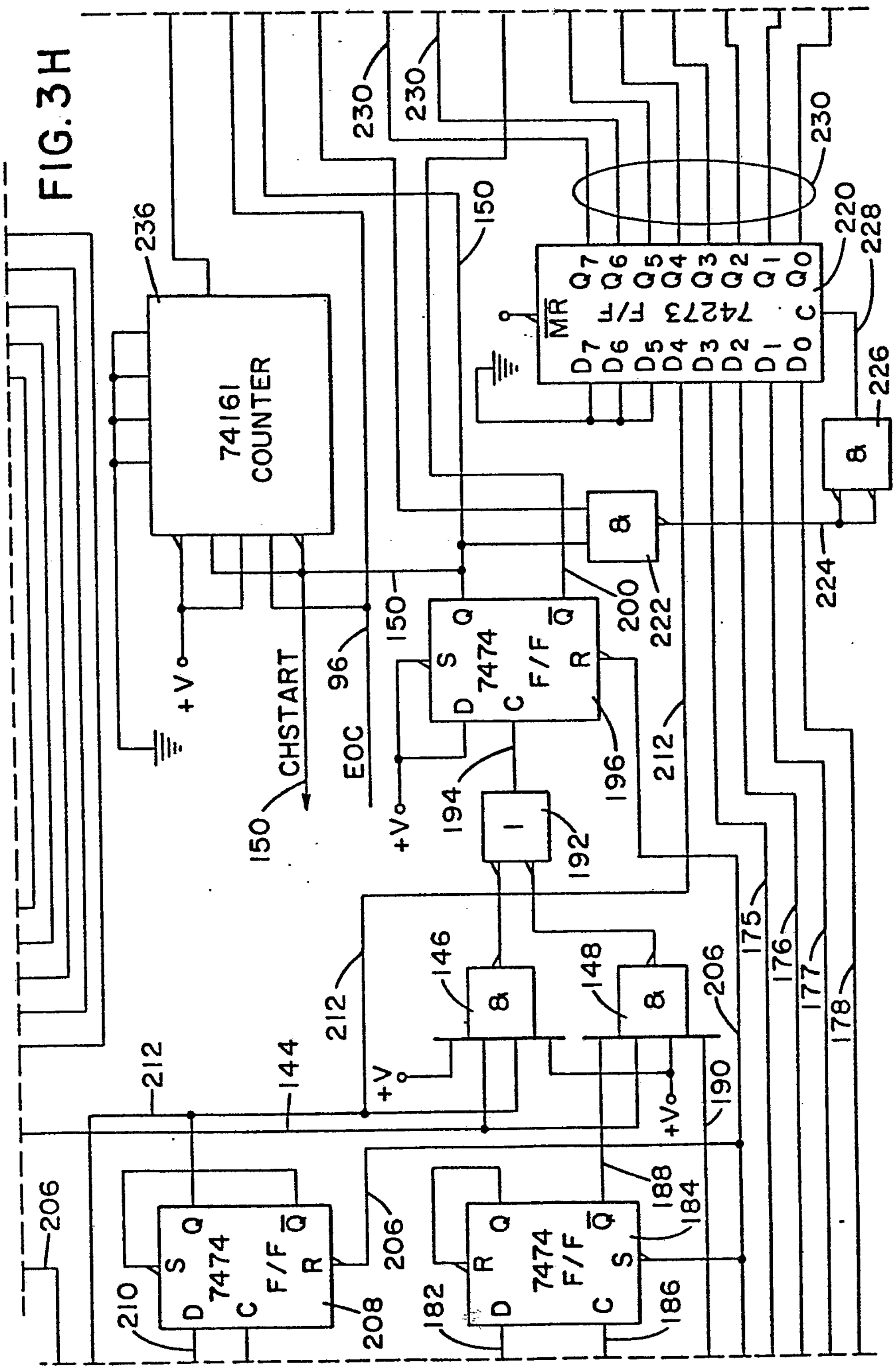
74161 COUNTER
236
+V
CHSTART
EOC
96
150
7474 F/F
S Q D C R Q̄
194
192
196
200
212
222
224
226
228
220
230
74273 F/F
MR
D7 D6 D5 D4 D3 D2 D1 D0
Q7 Q6 Q5 Q4 Q3 Q2 Q1 Q0
C
&
146
148
144
206
175
176
177
178
190
188
184
186
182
208
210

FIG. 3H

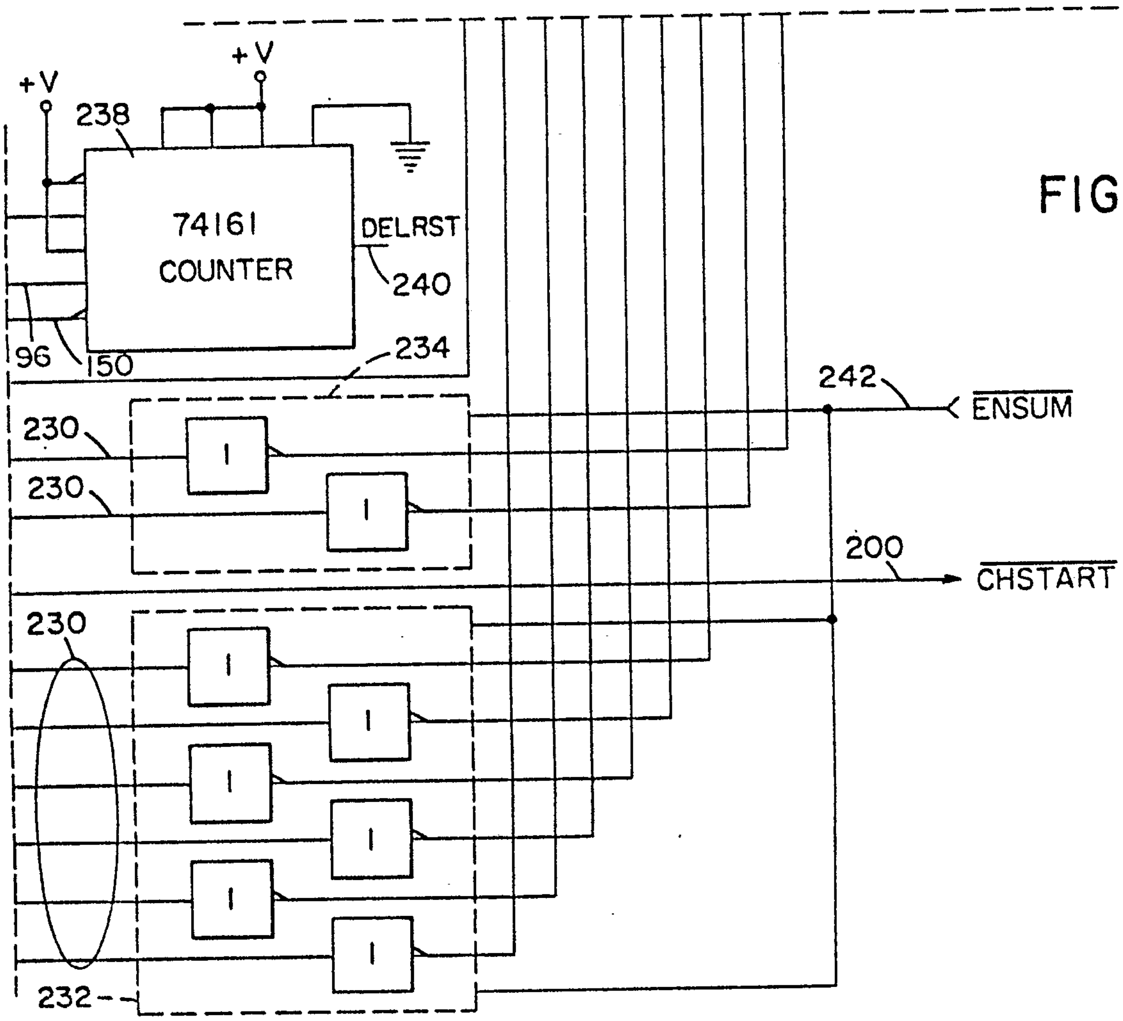

+V
+V
238
74161
COUNTER
DELRST
240
96
150
234
242
ENSUM
230
230
200
CHSTART
230
232


FIG.3I

FIG. 5A

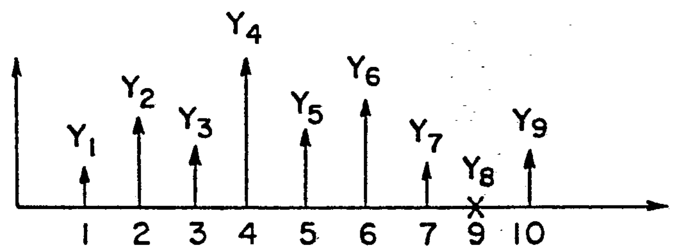


FIG. 5B

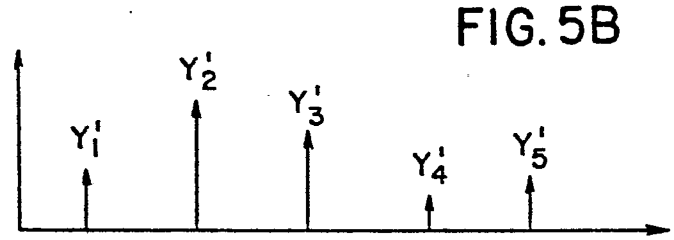

FIG.6

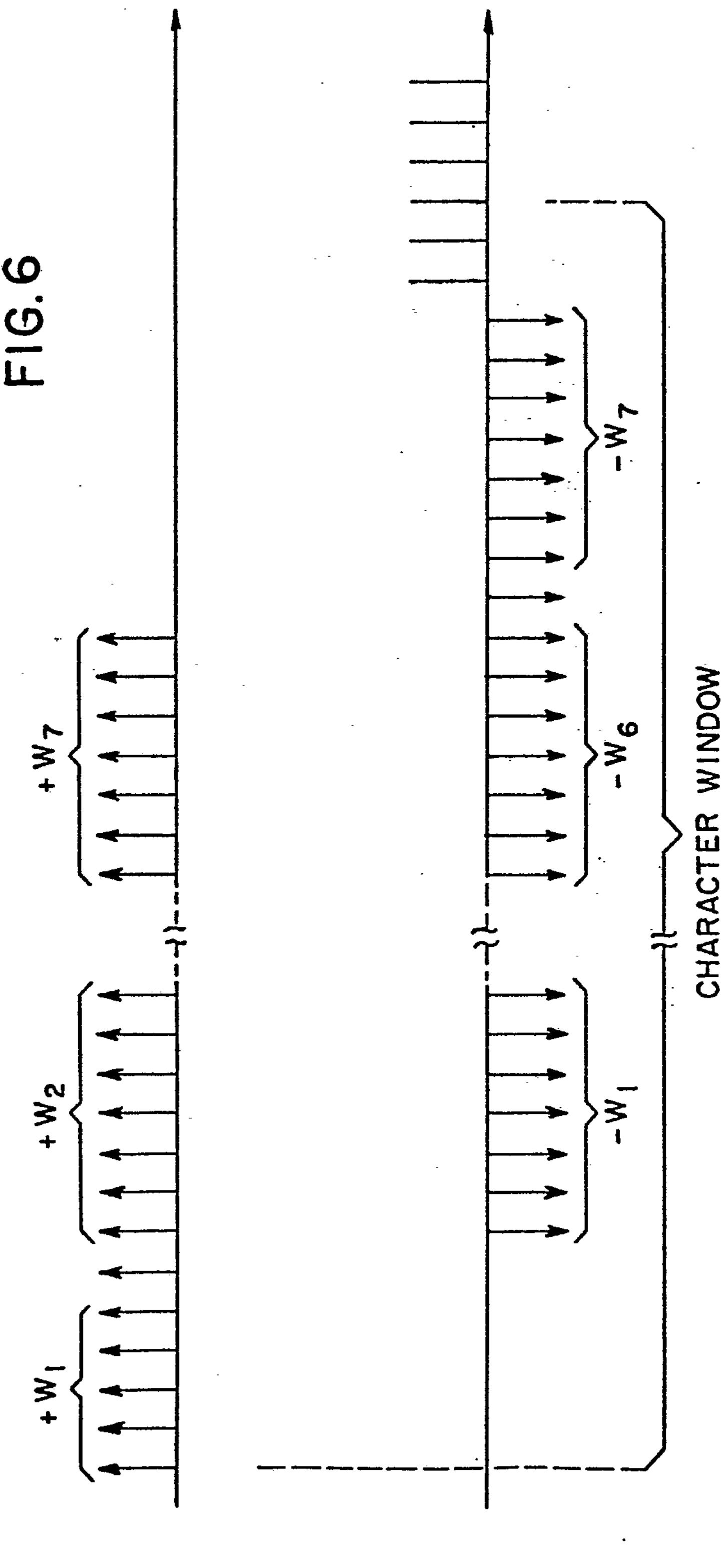

FIG.7

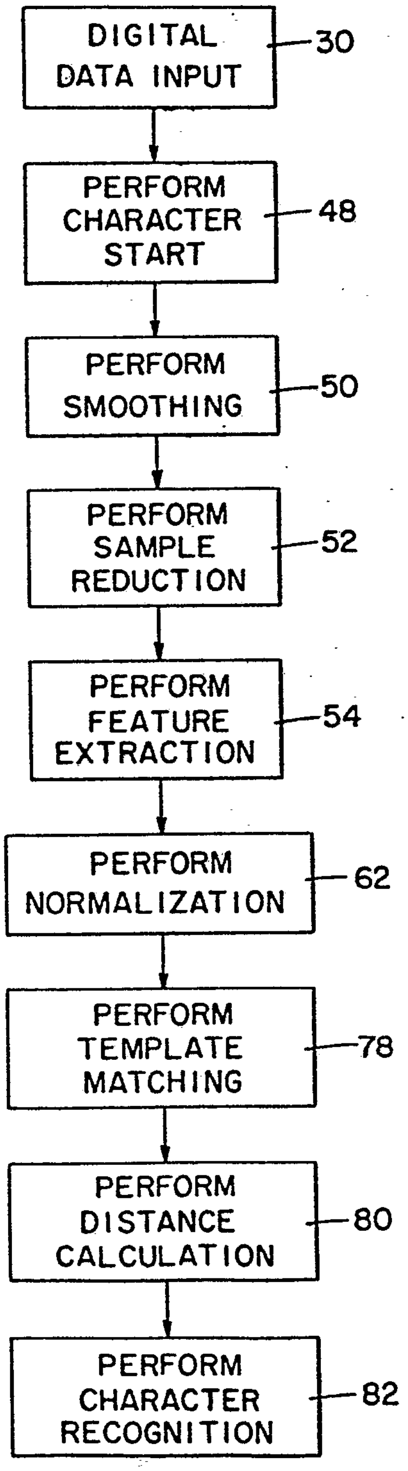
DIGITAL DATA INPUT
30
PERFORM CHARACTER START
48
PERFORM SMOOTHING
50
PERFORM SAMPLE REDUCTION
52
PERFORM FEATURE EXTRACTION
54
PERFORM NORMALIZATION
62
PERFORM TEMPLATE MATCHING
78
PERFORM DISTANCE CALCULATION
80
PERFORM CHARACTER RECOGNITION
82

FIG. 8

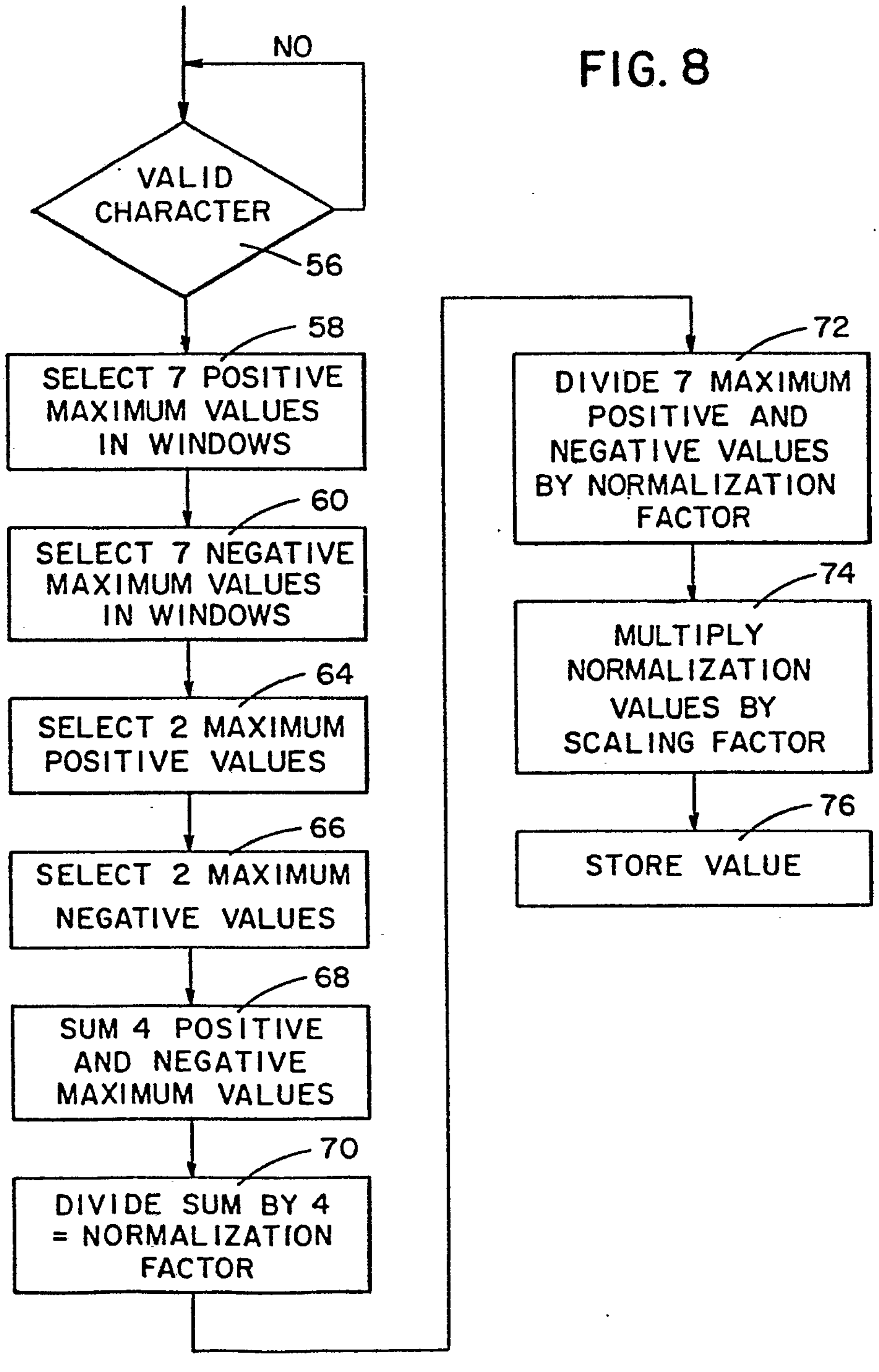
NO
VALID CHARACTER
56
58
SELECT 7 POSITIVE MAXIMUM VALUES IN WINDOWS
60
SELECT 7 NEGATIVE MAXIMUM VALUES IN WINDOWS
64
SELECT 2 MAXIMUM POSITIVE VALUES
66
SELECT 2 MAXIMUM NEGATIVE VALUES
68
SUM 4 POSITIVE AND NEGATIVE MAXIMUM VALUES
70
DIVIDE SUM BY 4 = NORMALIZATION FACTOR
72
DIVIDE 7 MAXIMUM POSITIVE AND NEGATIVE VALUES BY NORMALIZATION FACTOR
74
MULTIPLY NORMALIZATION VALUES BY SCALING FACTOR
76
STORE VALUE

FIG.9A

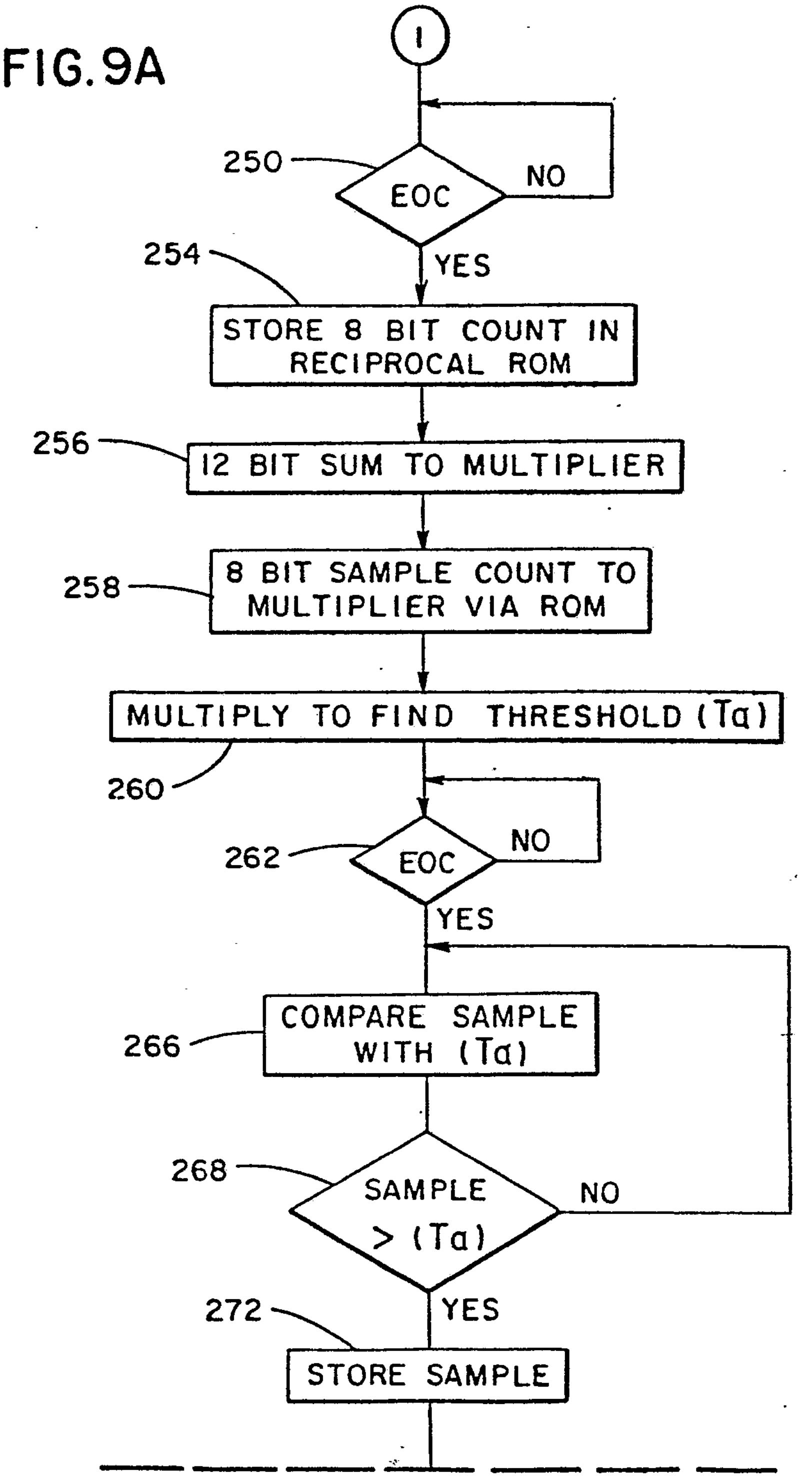
1
250
EOC
NO
254
YES
STORE 8 BIT COUNT IN RECIPROCAL ROM
256
12 BIT SUM TO MULTIPLIER
258
8 BIT SAMPLE COUNT TO MULTIPLIER VIA ROM
MULTIPLY TO FIND THRESHOLD (Tα)
260
262
EOC
NO
YES
COMPARE SAMPLE WITH (Tα)
266
268
SAMPLE > (Tα)
NO
272
YES
STORE SAMPLE

FIG. 9B

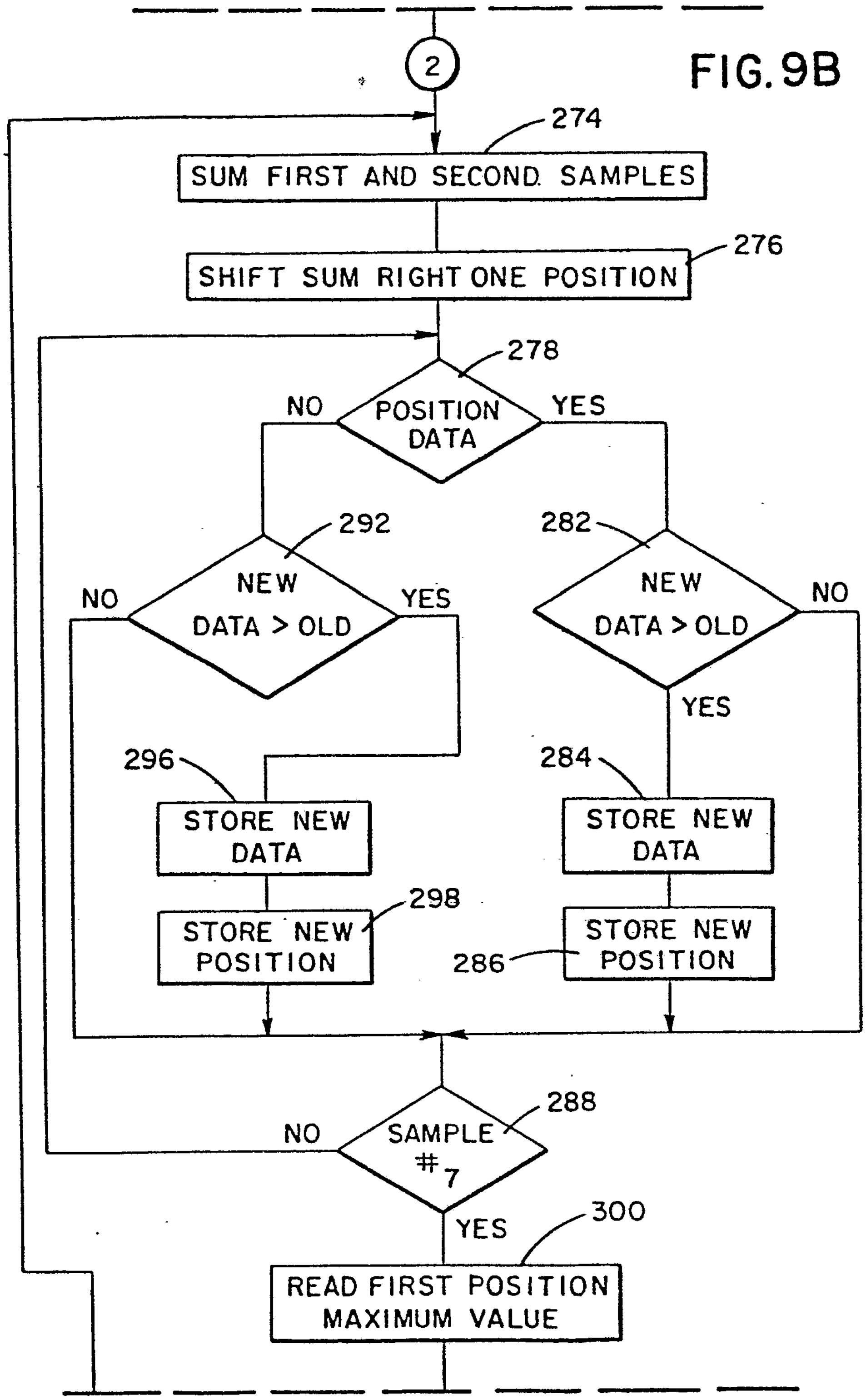
2
274
SUM FIRST AND SECOND SAMPLES
276
SHIFT SUM RIGHT ONE POSITION
278
NO
POSITION DATA
YES
292
282
NO
NEW DATA > OLD
YES
NEW DATA > OLD
NO
YES
296
284
STORE NEW DATA
STORE NEW DATA
298
STORE NEW POSITION
286
STORE NEW POSITION
288
NO
SAMPLE #7
YES
300
READ FIRST POSITION MAXIMUM VALUE

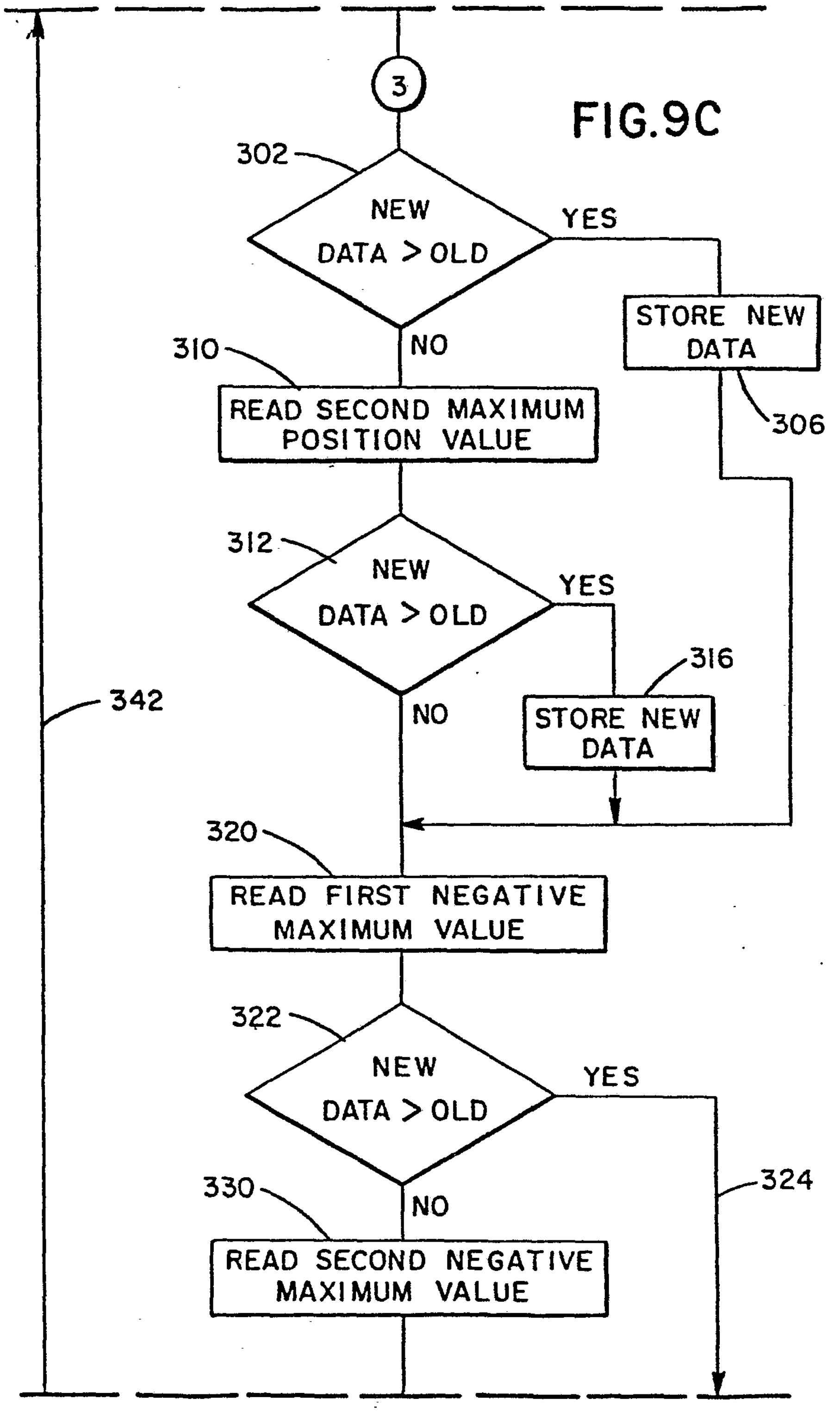
3
302
NEW
DATA > OLD
YES
STORE NEW DATA
306
NO
310
READ SECOND MAXIMUM POSITION VALUE
312
NEW
DATA > OLD
YES
316
STORE NEW DATA
NO
342
320
READ FIRST NEGATIVE MAXIMUM VALUE
322
NEW
DATA > OLD
YES
324
NO
330
READ SECOND NEGATIVE MAXIMUM VALUE

FIG.9C

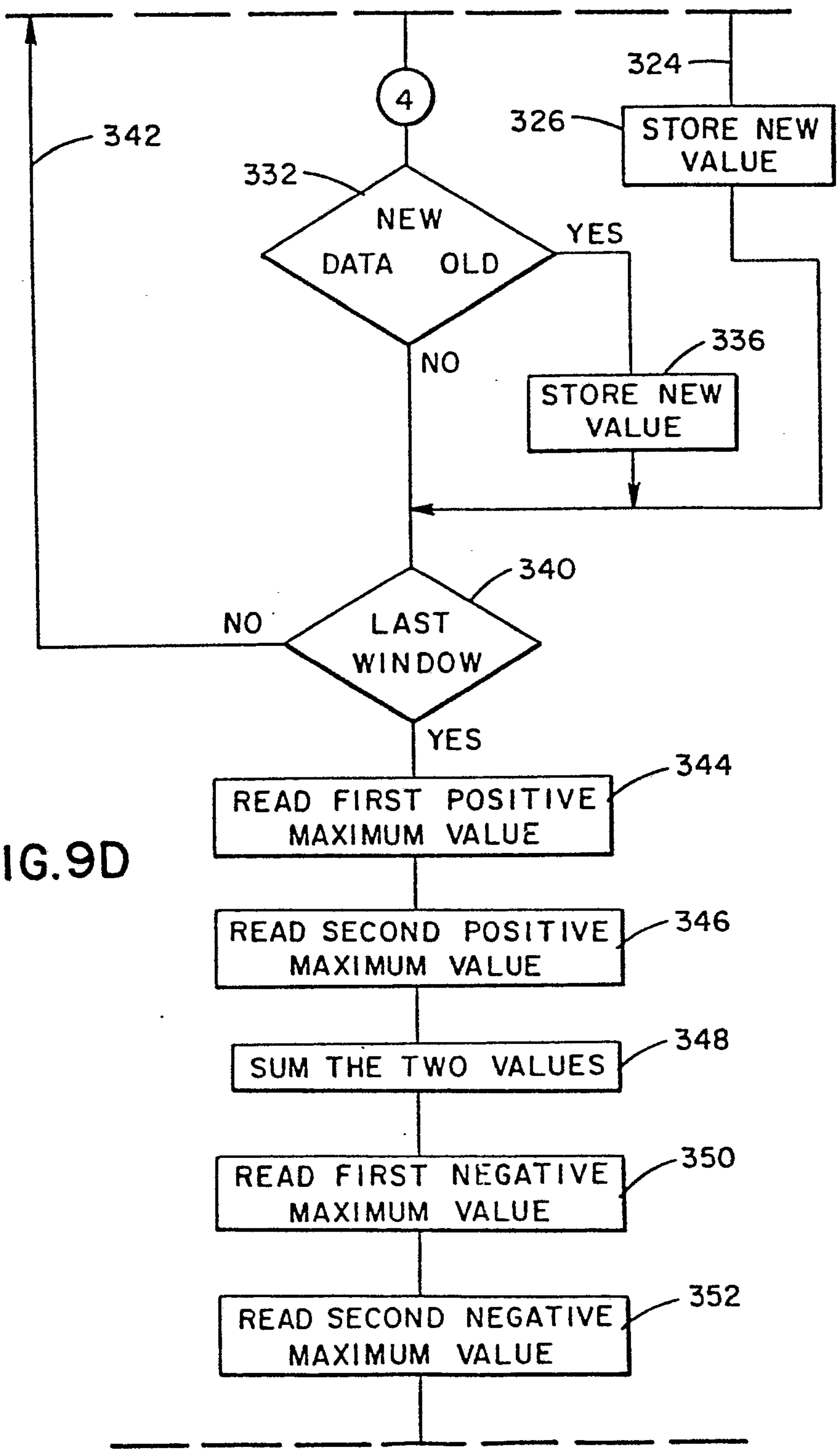
324
4
326
STORE NEW VALUE
342
332
NEW DATA OLD
YES
NO
336
STORE NEW VALUE
340
NO
LAST WINDOW
YES
READ FIRST POSITIVE MAXIMUM VALUE
344
READ SECOND POSITIVE MAXIMUM VALUE
346
SUM THE TWO VALUES
348
READ FIRST NEGATIVE MAXIMUM VALUE
350
READ SECOND NEGATIVE MAXIMUM VALUE
352

FIG.9D

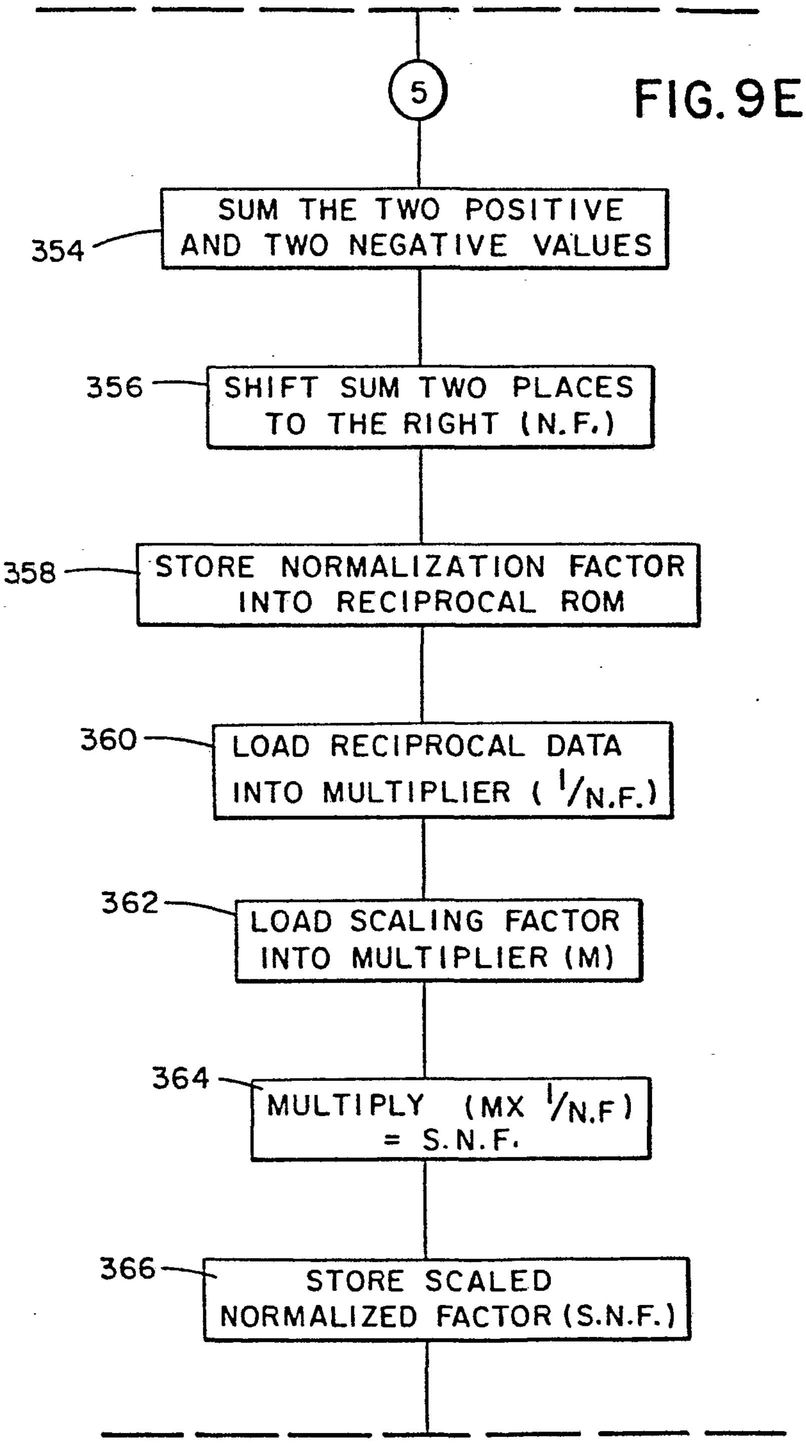
5
354
SUM THE TWO POSITIVE AND TWO NEGATIVE VALUES
356
SHIFT SUM TWO PLACES TO THE RIGHT (N.F.)
358
STORE NORMALIZATION FACTOR INTO RECIPROCAL ROM
360
LOAD RECIPROCAL DATA INTO MULTIPLIER ( 1/N.F.)
362
LOAD SCALING FACTOR INTO MULTIPLIER (M)
364
MULTIPLY (MX 1/N.F) = S.N.F.
366
STORE SCALED NORMALIZED FACTOR (S.N.F.)

FIG. 9E

FIG. 9F

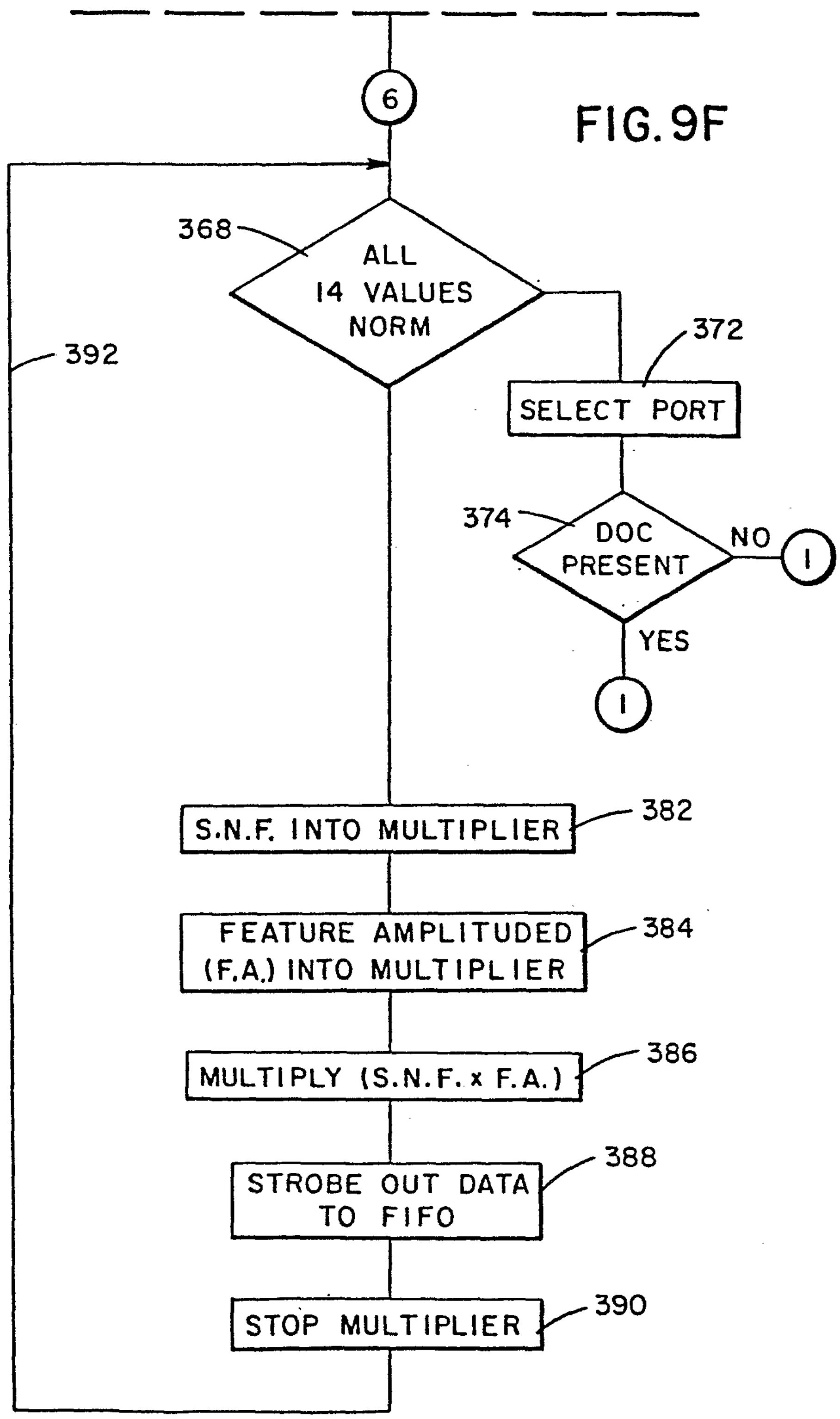
6
ALL
14 VALUES
NORM
368
392
372
SELECT PORT
374
DOC
PRESENT
NO
YES
1
1
S.N.F. INTO MULTIPLIER
382
FEATURE AMPLITUDED
(F.A.) INTO MULTIPLIER
384
MULTIPLY (S.N.F. x F.A.)
386
STROBE OUT DATA
TO FIFO
388
STOP MULTIPLIER
390

FIG.10

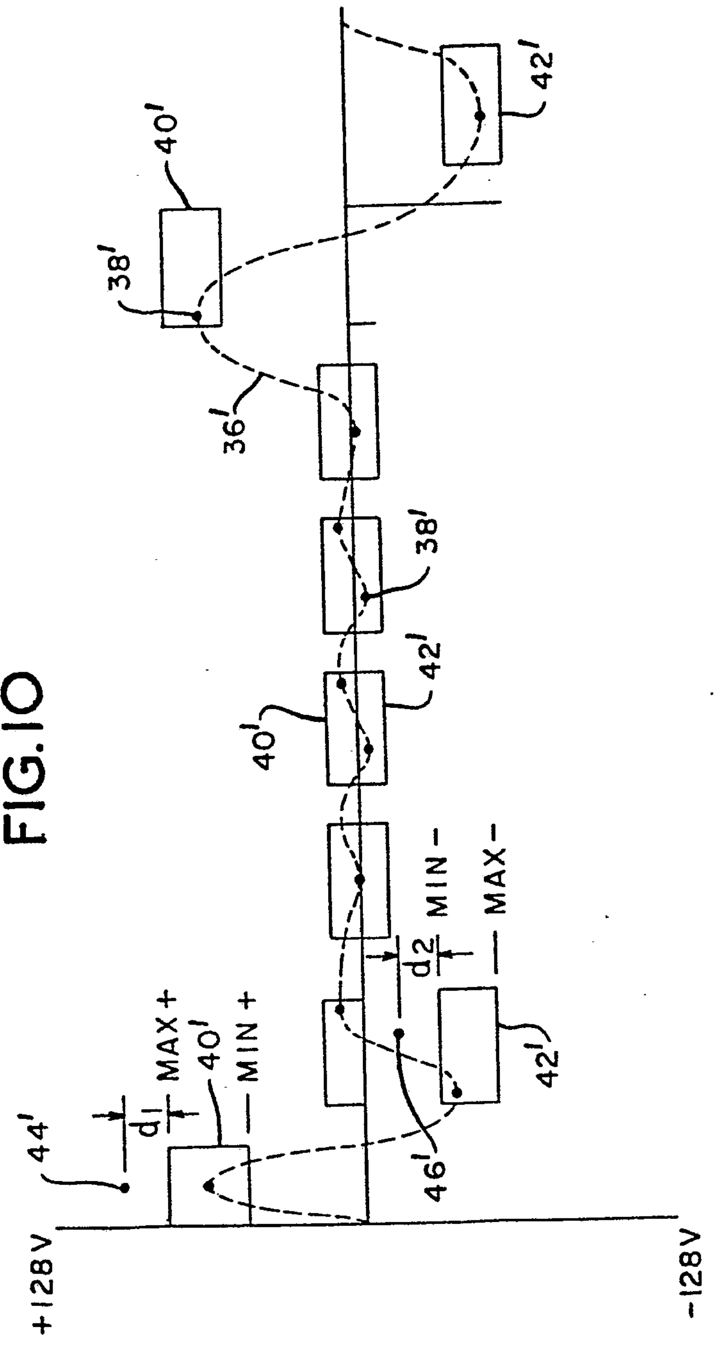

FIG.11A

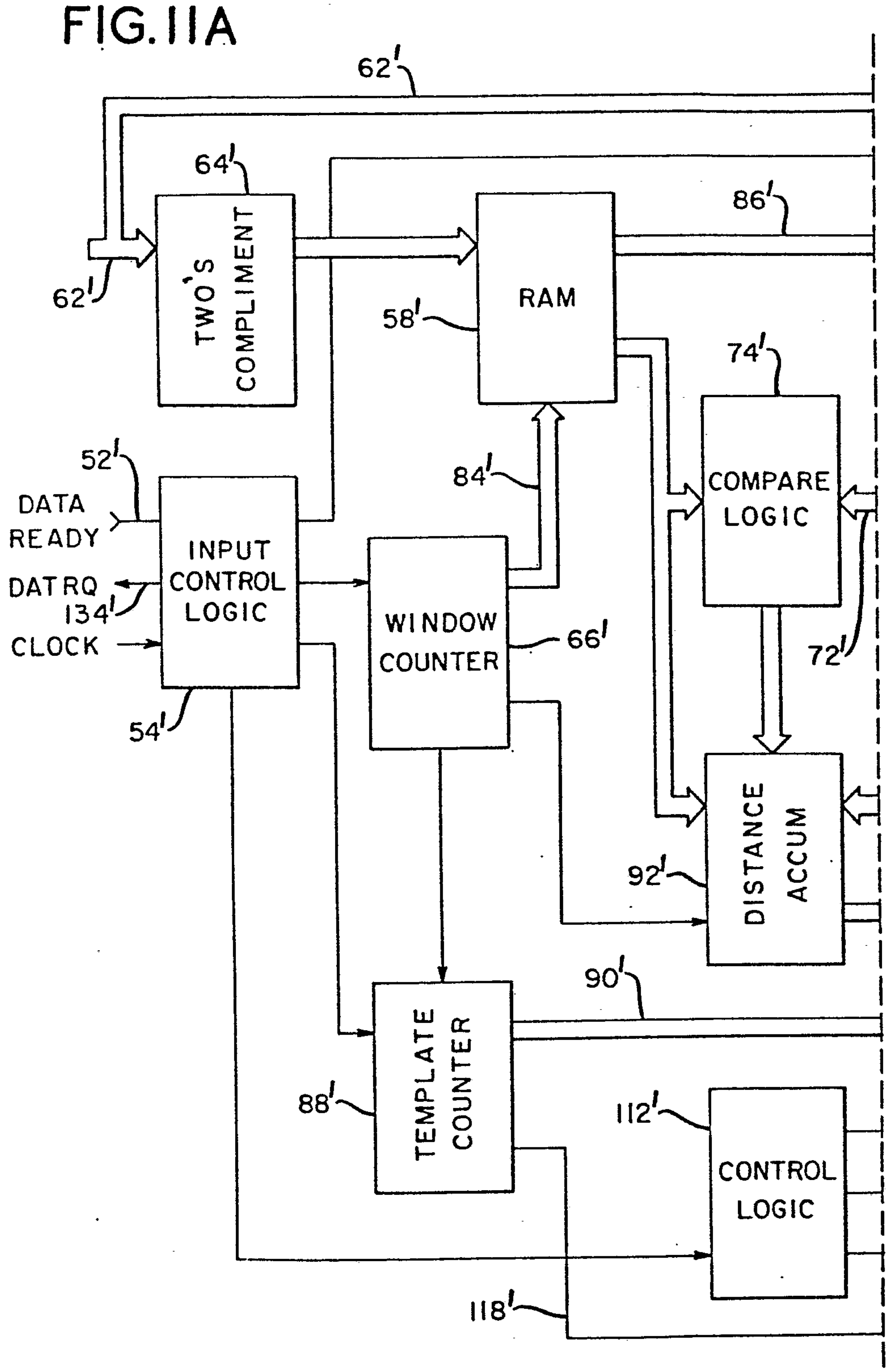
62'
64'
TWO'S COMPLIMENT
RAM
86'
62'
58'
74'
52'
DATA READY
84'
COMPARE LOGIC
INPUT CONTROL LOGIC
DATRQ
134'
CLOCK
WINDOW COUNTER
66'
72'
54'
DISTANCE ACCUM
92'
90'
TEMPLATE COUNTER
88'
112'
CONTROL LOGIC
118'

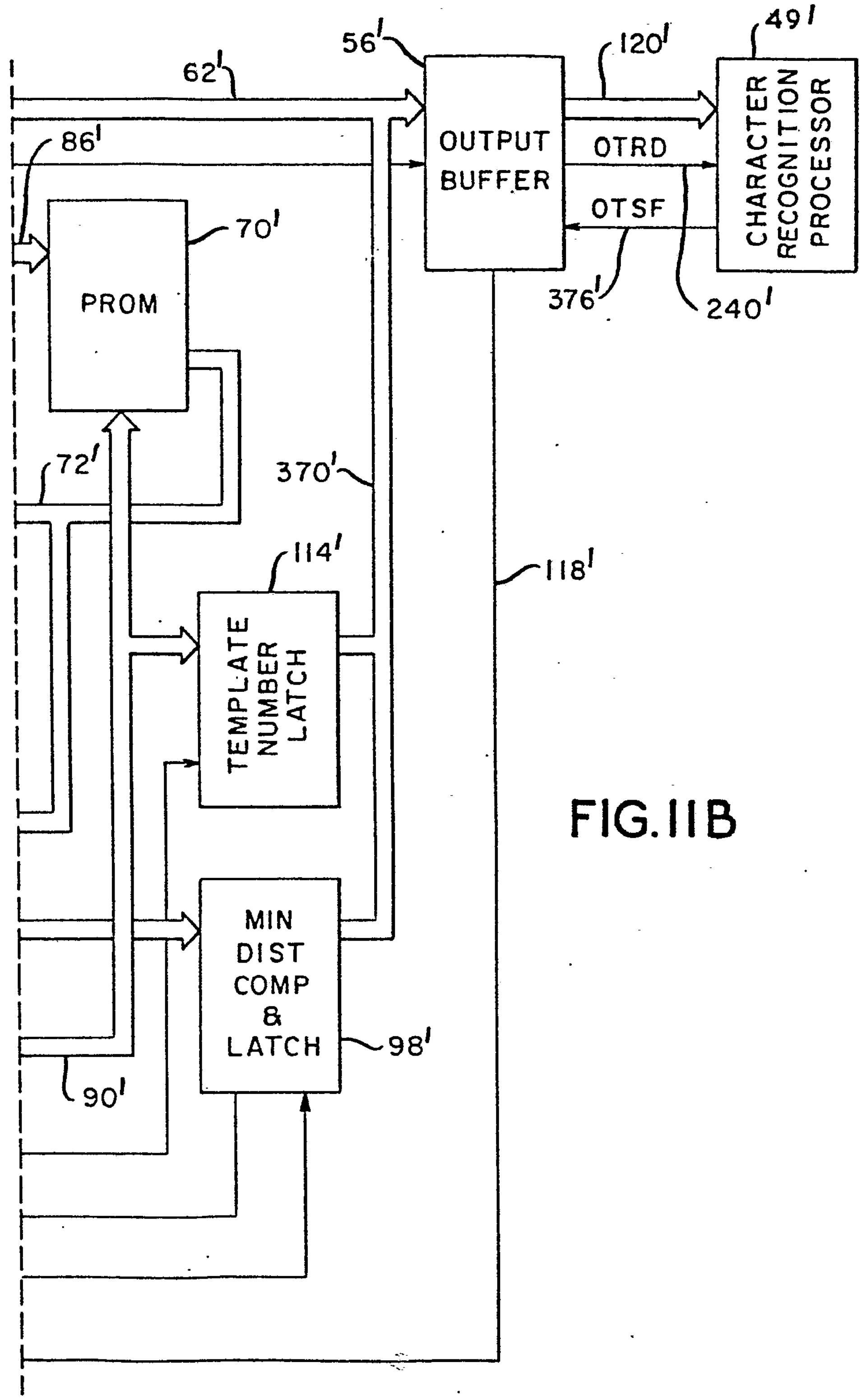
56'
62'
120'
49'
86'
OUTPUT BUFFER
OTRD
OTSF
CHARACTER RECOGNITION PROCESSOR
70'
PROM
376'
240'
72'
370'
114'
118'
TEMPLATE NUMBER LATCH
MIN DIST COMP & LATCH
98'
90'

FIG.11B

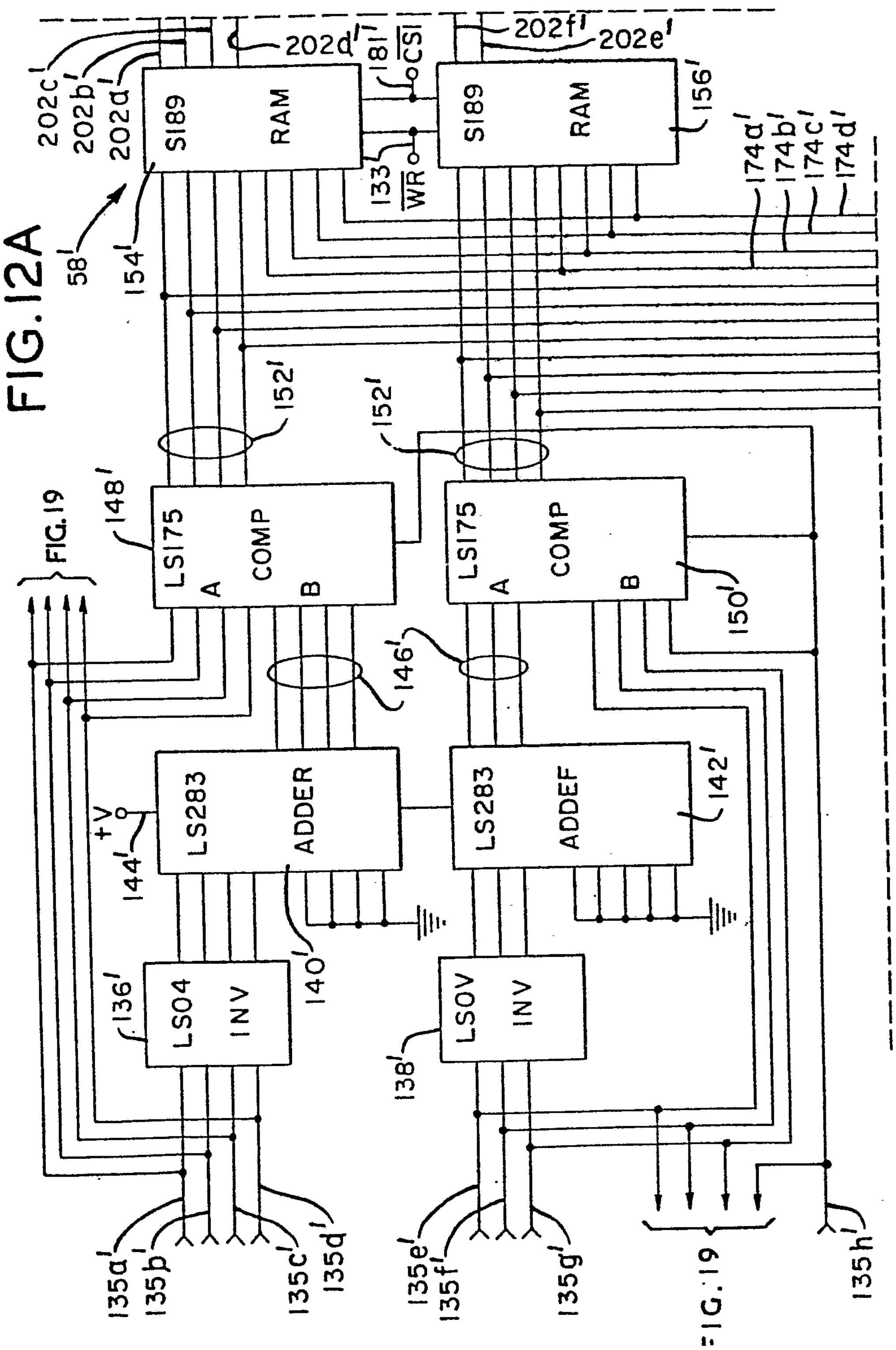

S189
RAM
LS175
COMP
A
B
LS283
ADDER
ADDEF
LS04
INV
LSOV
+V
WR
CS1
FIG.19
202c'
202b'
202a'
202d'
202f'
202e'
181'
133'
154'
156'
58'
174a'
174b'
174c'
174d'
152'
148'
150'
146'
144'
142'
140'
136'
138'
135a'
135b'
135c'
135d'
135e'
135f'
135g'
135h'


FIG.12A

FIG. 12B

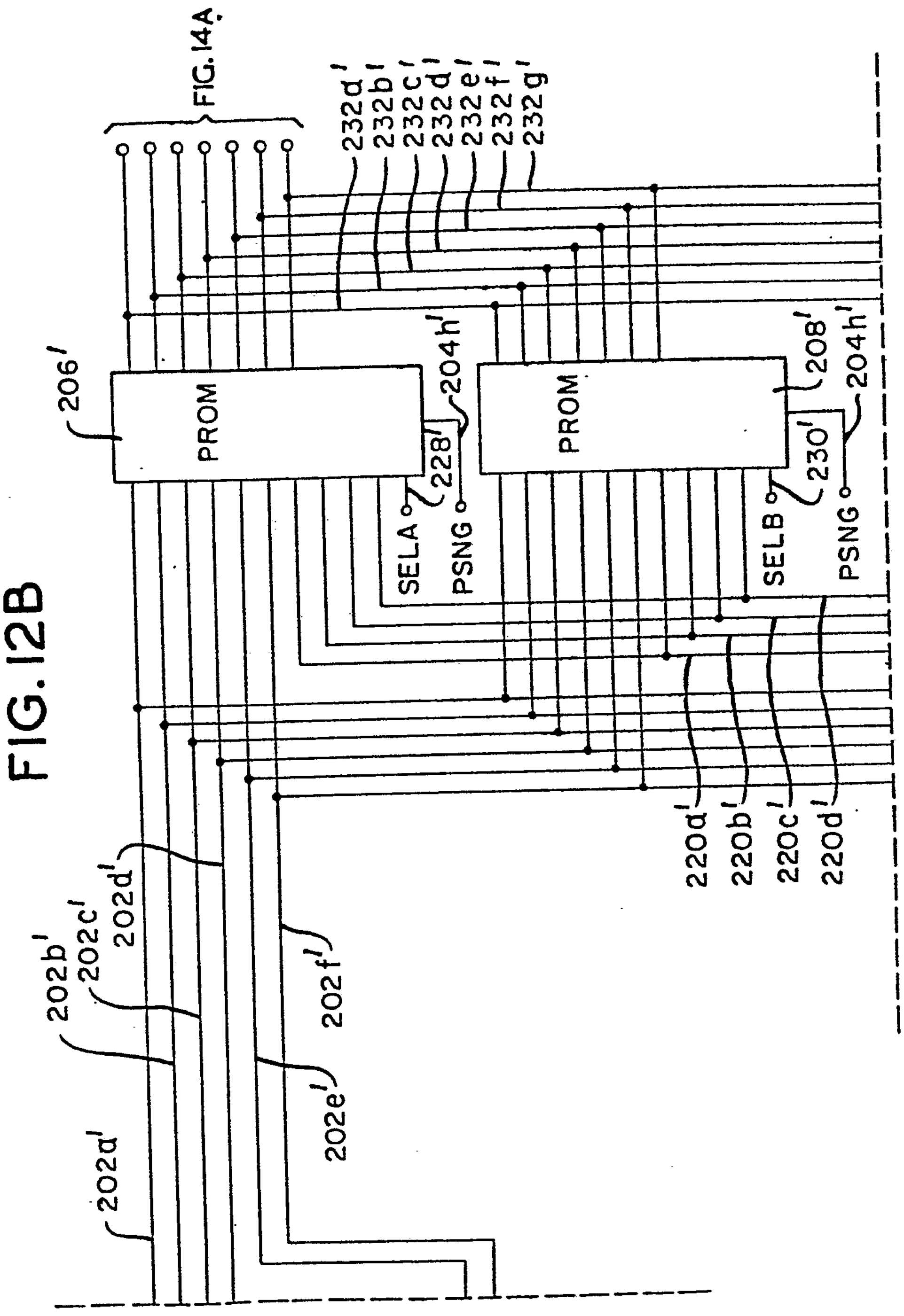
FIG. 14A
232a'
232b'
232c'
232d'
232e'
232f'
232g'
206'
PROM
204h'
228'
SELA
PSNG
208'
PROM
204h'
230'
SELB
PSNG
220a'
220b'
220c'
220d'
202a'
202b'
202c'
202d'
202e'
202f'

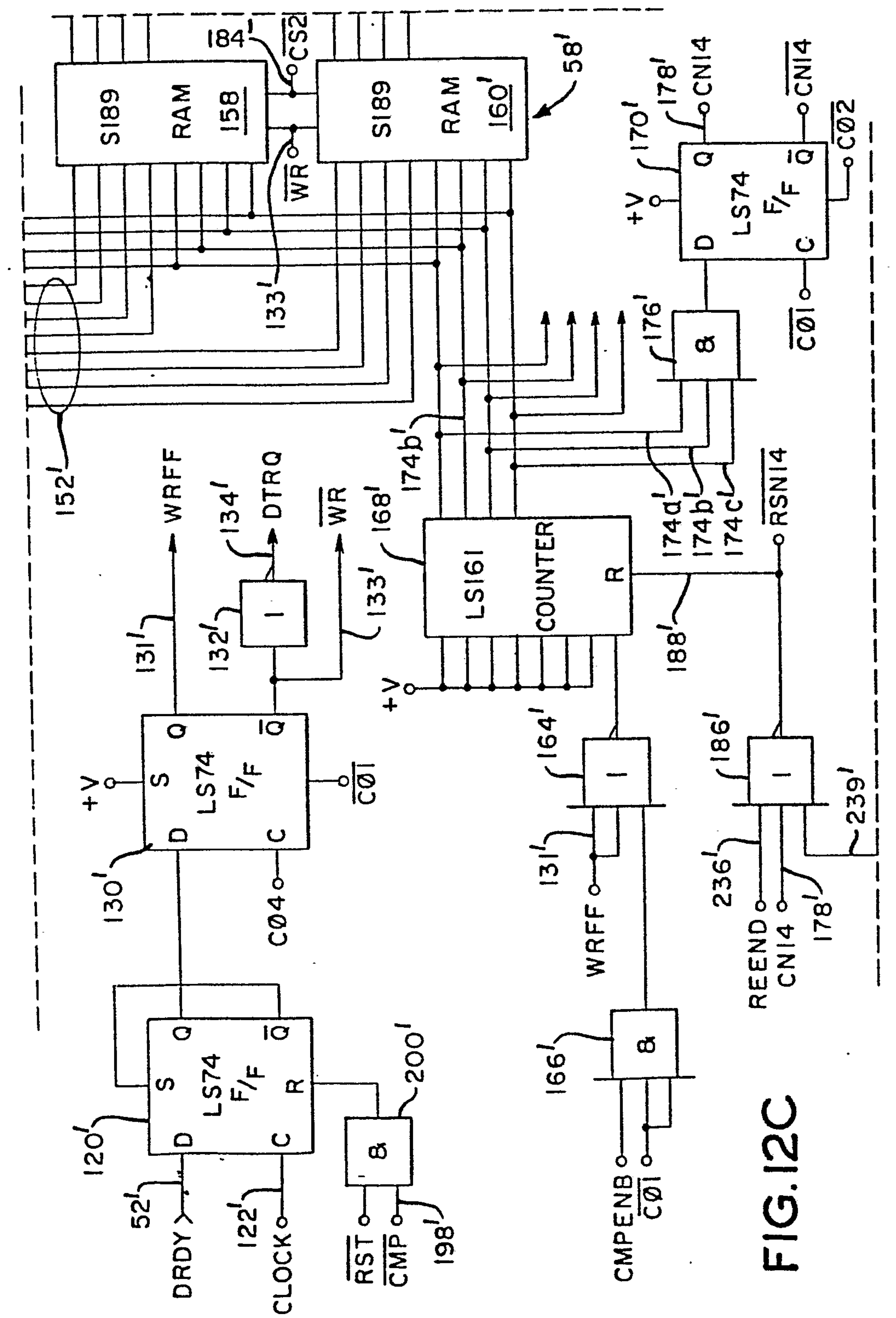
S189
RAM
158
S189
RAM
160'
58'
184'
CS2
WR
133'
152'
CN14
178'
170'
+V
CN14
LS74
F/F
CØ2
CØ1
176'
WRFF
134'
DTRQ
WR
131'
132'
133'
168'
174b'
LS161
COUNTER
R
174a'
174b'
174c'
RSN14
188'
+V
S
LS74
F/F
D
C
Q
CØ1
130'
CØ4
164'
131'
WRFF
186'
239'
236'
178'
REEND
CN14
120'
52'
DRDY
122'
CLOCK
R
200'
RST
CMP
198'
166'
CMPENB
CØ1

FIG.12C

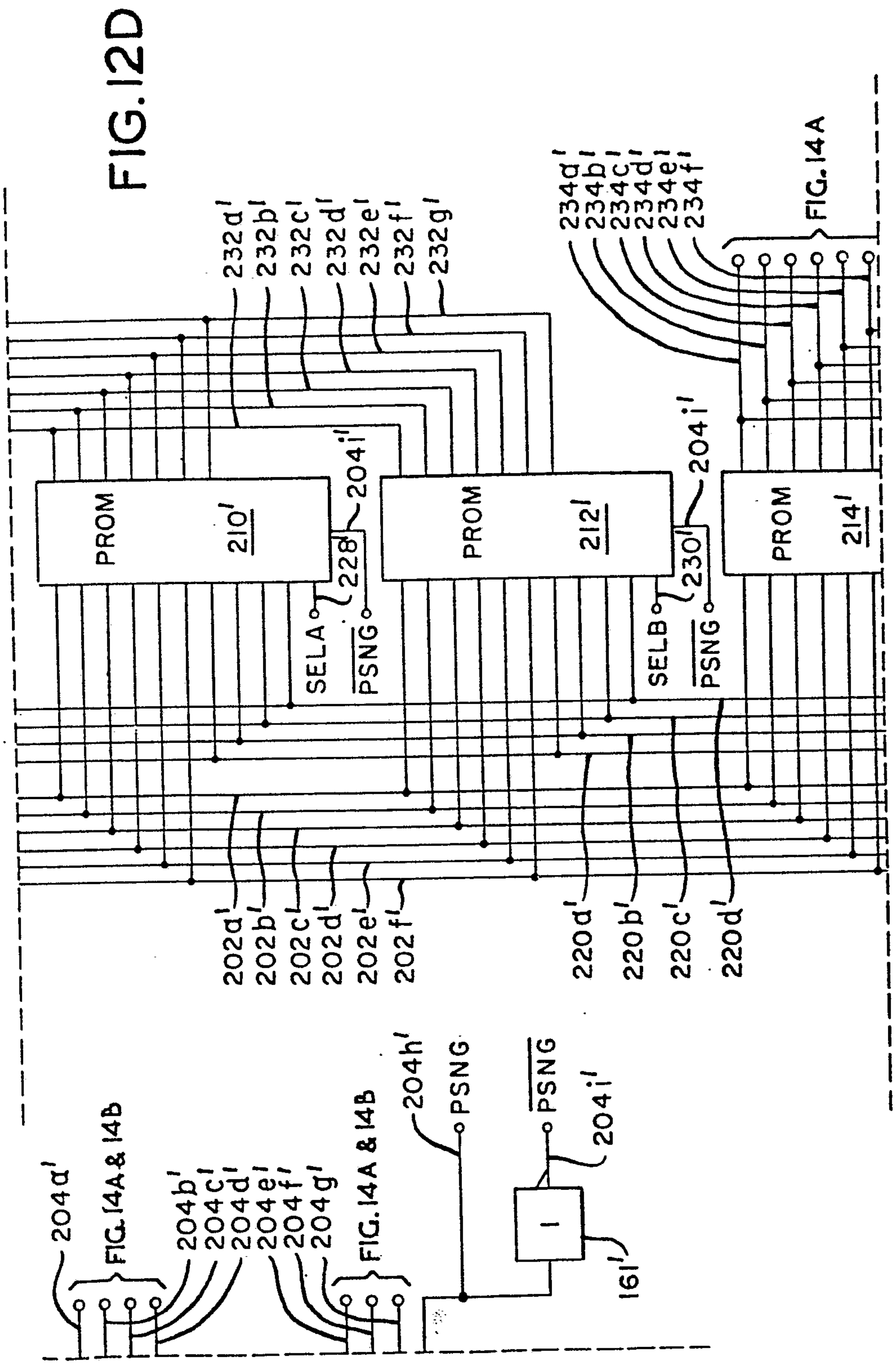
232a'
232b'
232c'
232d'
232e'
232f'
232g'
234a'
234b'
234c'
234d'
234e'
234f'
FIG. 14A
PROM
210'
228
204i'
SELA
PSNG
PROM
212'
230'
204i'
SELB
PSNG
PROM
214'
202a'
202b'
202c'
202d'
202e'
202f'
220d'
220b'
220c'
220d'
204a'
FIG. 14A & 14B
204b'
204c'
204d'
204e'
204f'
204g'
FIG. 14A & 14B
204h'
PSNG
PSNG
204i'
1
161'

FIG. 12D

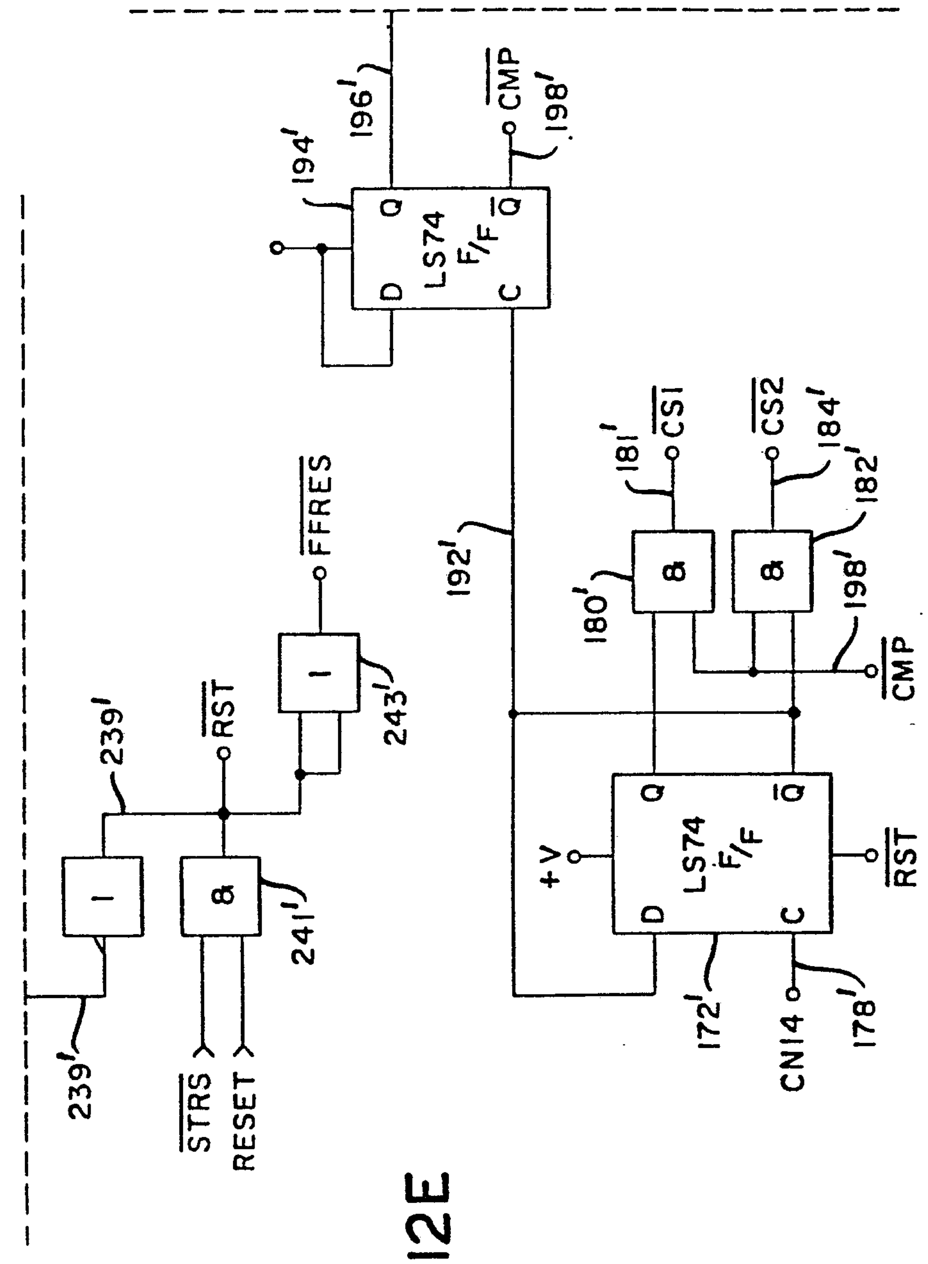
194'
196'
CMP
198'
LS74
F/F
D
Q
C
Q
FFRES
192'
181'
CS1
CS2
184'
182'
180'
&
&
198'
CMP
239'
RST
243'
1
1
&
241'
+V
LS74
F/F
D
Q
C
Q
RST
172'
CN14
178'
239'
STRS
RESET

FIG.12E

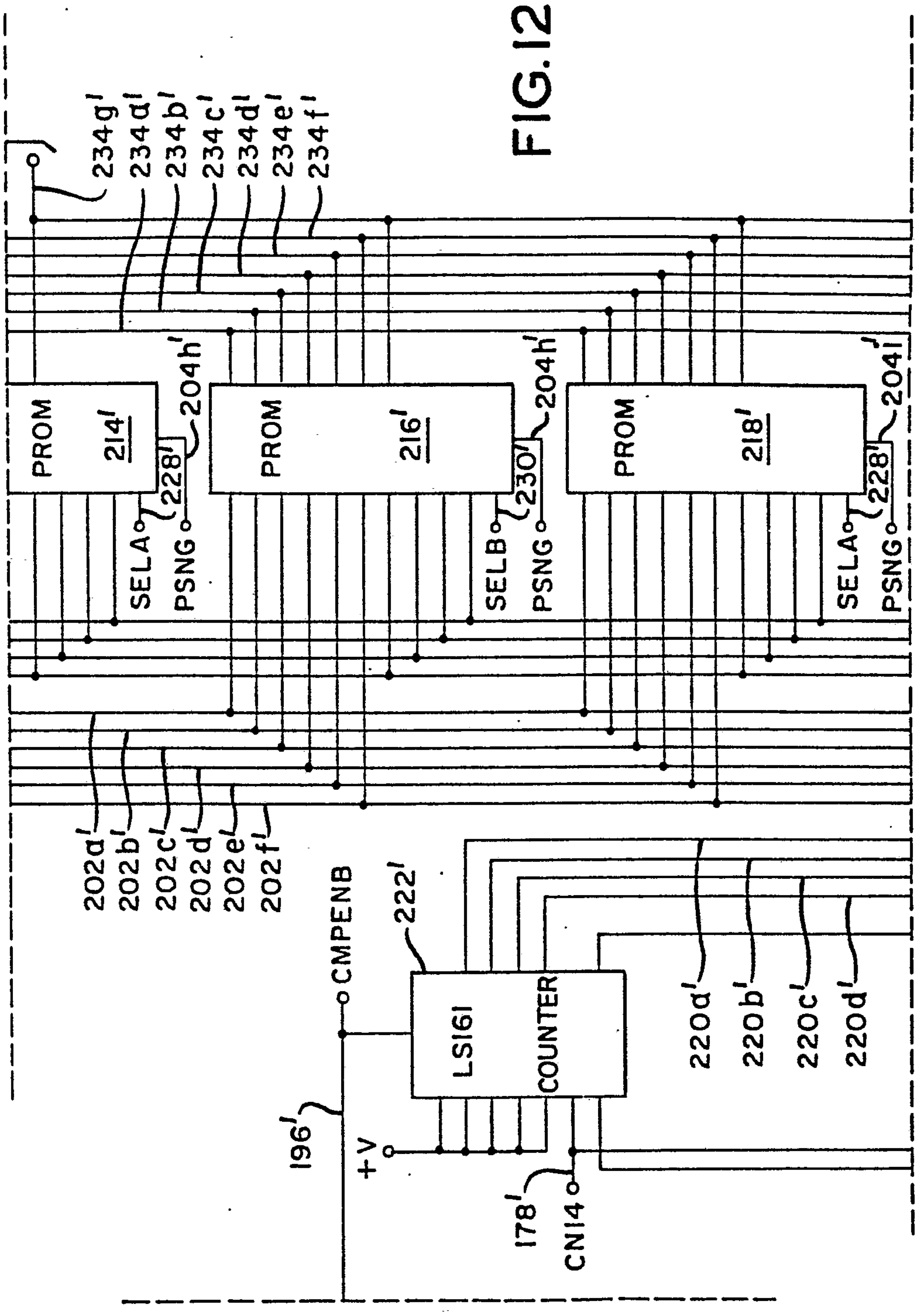
234g'
234a'
234b'
234c'
234d'
234e'
234f'
PROM
214'
228'
204h'
SELA
PSNG
PROM
216'
230'
204h'
SELB
PSNG
PROM
218'
228'
204i'
SELA
PSNG
202a'
202b'
202c'
202d'
202e'
202f'
CMPENB
222'
LS161
COUNTER
220a'
220b'
220c'
220d'
196'
+V
178'
CN14

FIG.12F

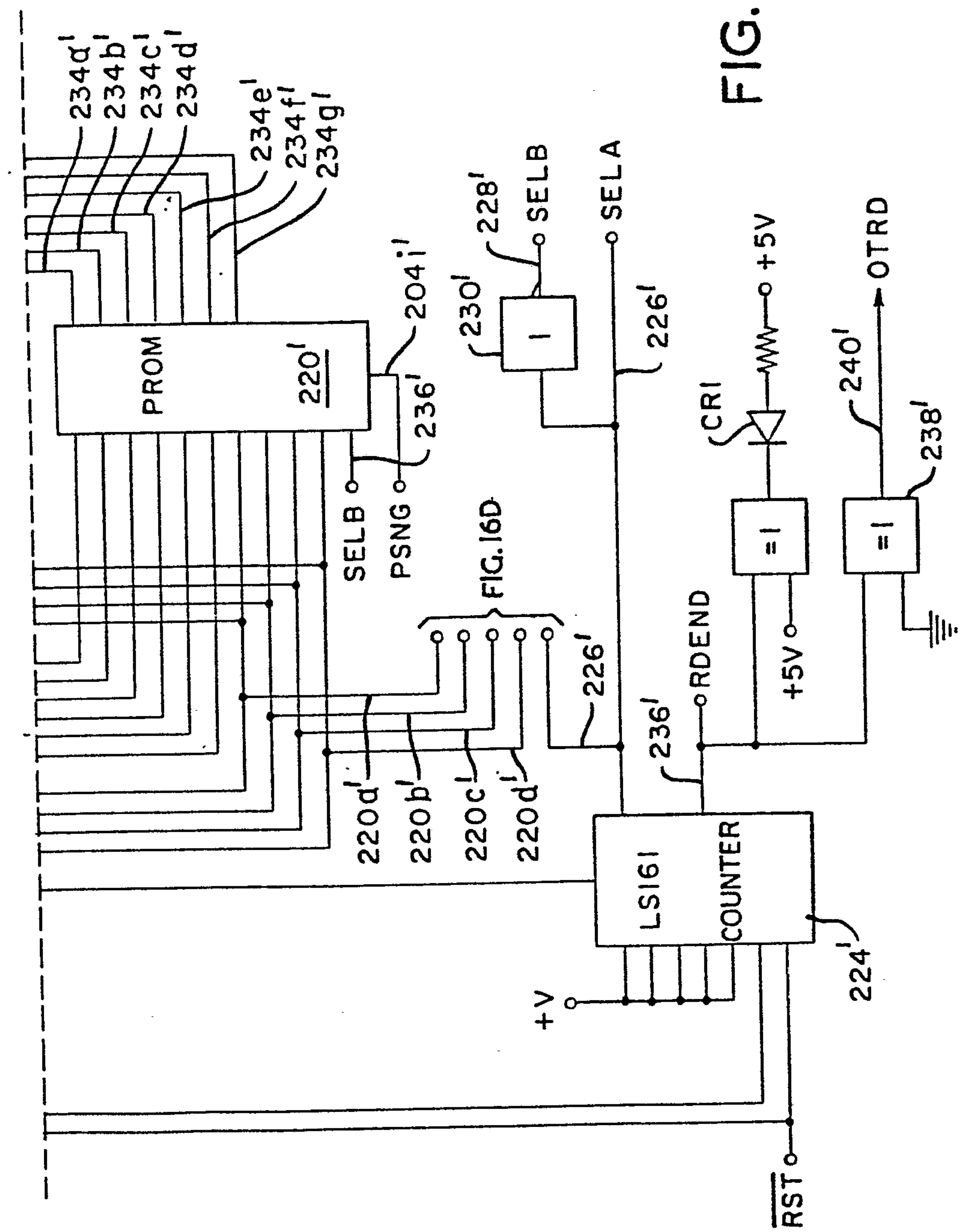
234a'
234b'
234c'
234d'
234e'
234f'
234g'
PROM
220'
204i'
236'
SELB
PSNG
FIG. 16D
228'
SELB
SEL A
230'
1
226'
+5V
CR1
240'
OTRD
238'
=1
=1
+5V
RDEND
226'
236'
220a'
220b'
220c'
220d'
LS161
COUNTER
224'
+V
RST

FIG. 12G

FIG. 13

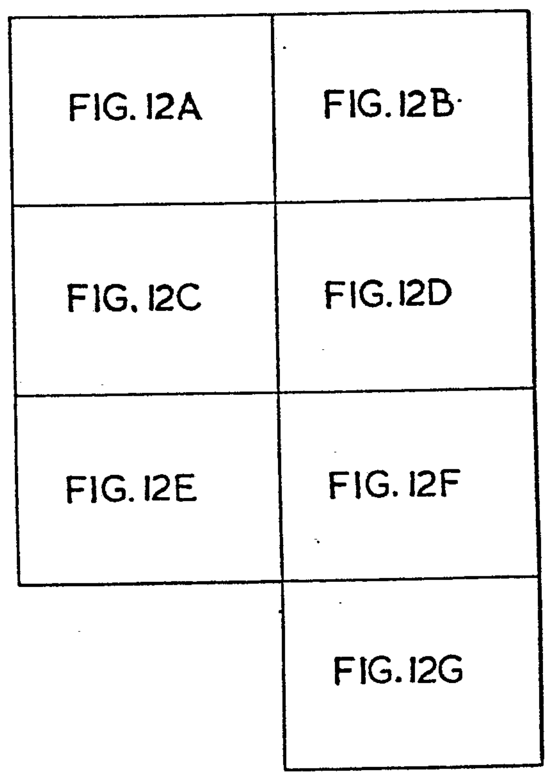

FIG.14A

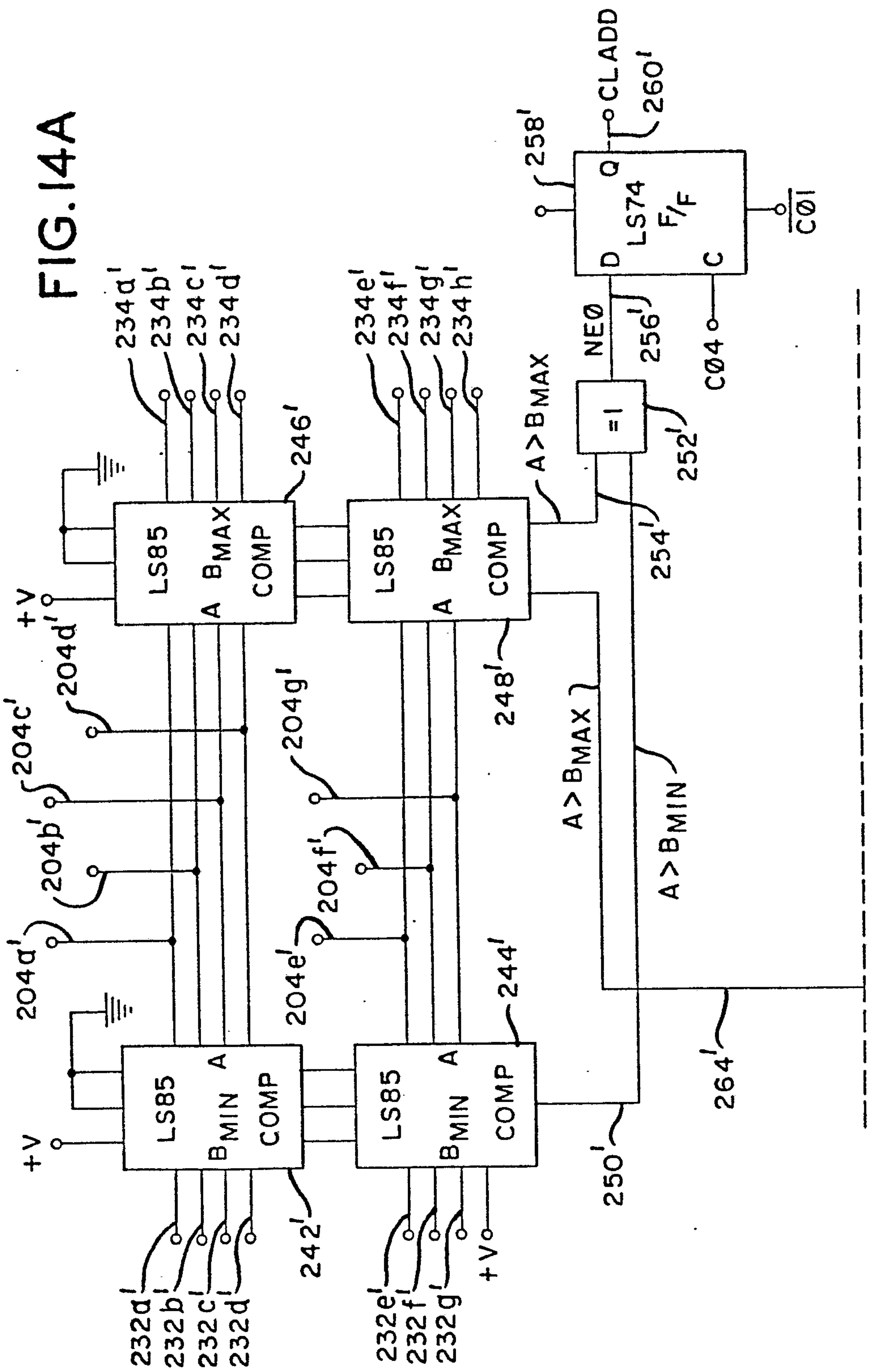
LS85
A
B MAX
COMP
LS85
A
B MAX
COMP
LS85
B MIN
A
COMP
LS85
B MIN
A
COMP
+V
+V
+V
234a'
234b'
234c'
234d'
234e'
234f'
234g'
234h'
246'
248'
204a'
204b'
204c'
204d'
204e'
204f'
204g'
244'
242'
250'
232a'
232b'
232c'
232d'
232e'
232f'
232g'
A>B MAX
A>B MAX
A>B MIN
254'
252'
=1
NEØ
256'
D
LS74
F/F
Q
C
258'
CLADD
260'
CØ4
CØ1
264'

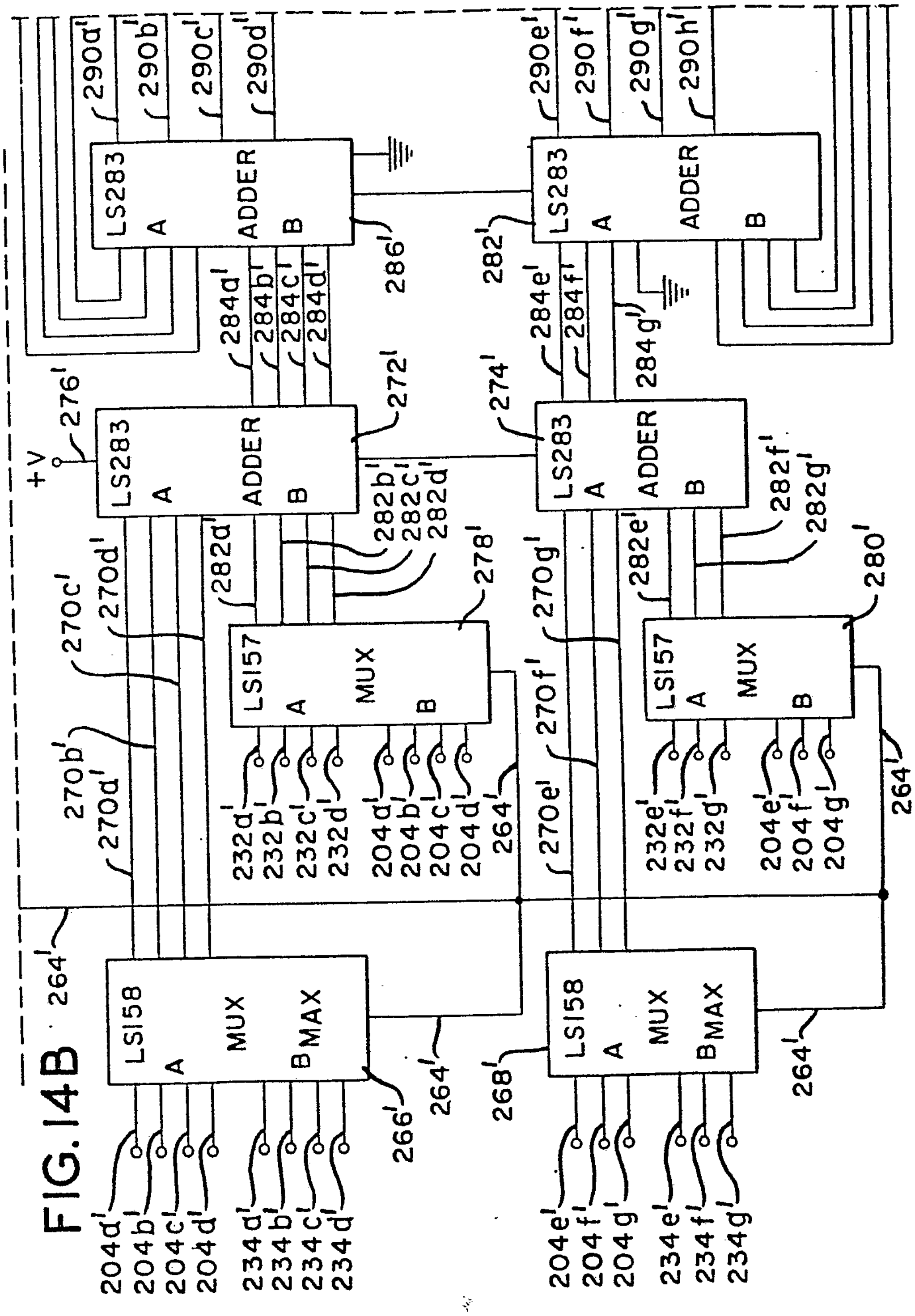
LS158
A
MUX
B MAX
LS157
A
MUX
B
LS283
A
ADDER
B
+V
204a'
204b'
204c'
204d'
234a'
234b'
234c'
234d'
204e'
204f'
204g'
234e'
234f'
234g'
232a'
232b'
232c'
232d'
232e'
232f'
232g'
204e'
204f'
204g'
264'
266'
268'
270a'
270b'
270c'
270d'
270e'
270f'
270g'
272'
274'
276'
278'
280'
282'
282a'
282b'
282c'
282d'
282e'
282f'
282g'
284a'
284b'
284c'
284d'
284e'
284f'
284g'
286'
290a'
290b'
290c'
290d'
290e'
290f'
290g'
290h'

FIG. 14B

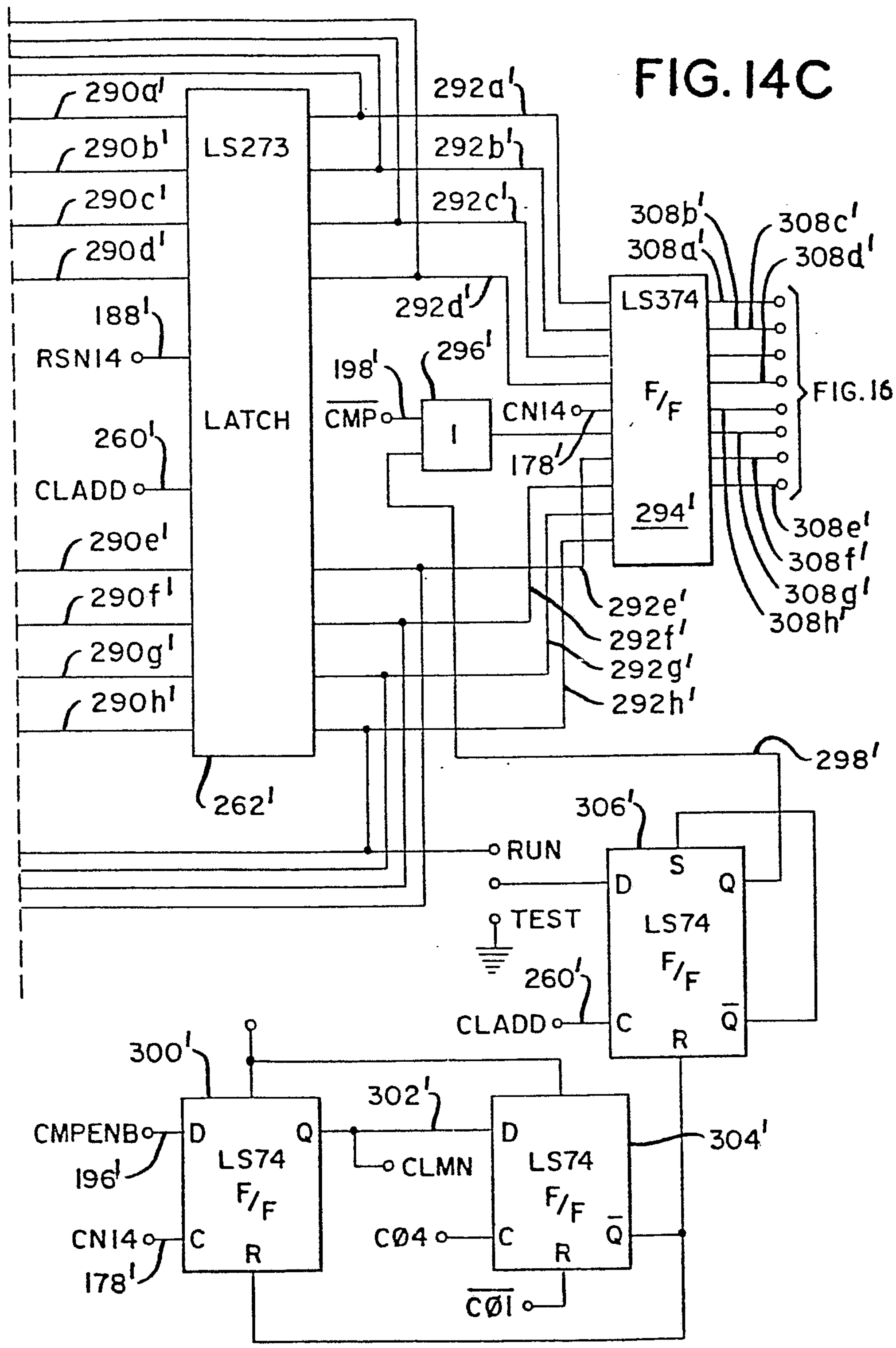
290a'
290b'
290c'
290d'
LS273
LATCH
188'
RSN14
260'
CLADD
290e'
290f'
290g'
290h'
262'
292a'
292b'
292c'
292d'
198'
CMP
296'
1
CN14
178'
LS374
F/F
294'
308a'
308b'
308c'
308d'
308e'
308f'
308g'
308h'
FIG.16
292e'
292f'
292g'
292h'
298'
306'
RUN
TEST
S
D
Q
LS74
F/F
260'
CLADD
C
R
Q̄
300'
CMPENB
196'
D
Q
LS74
F/F
CN14
178'
C
R
302'
CLMN
D
LS74
F/F
CØ4
C
R
Q̄
CØ1
304'

FIG. 14C

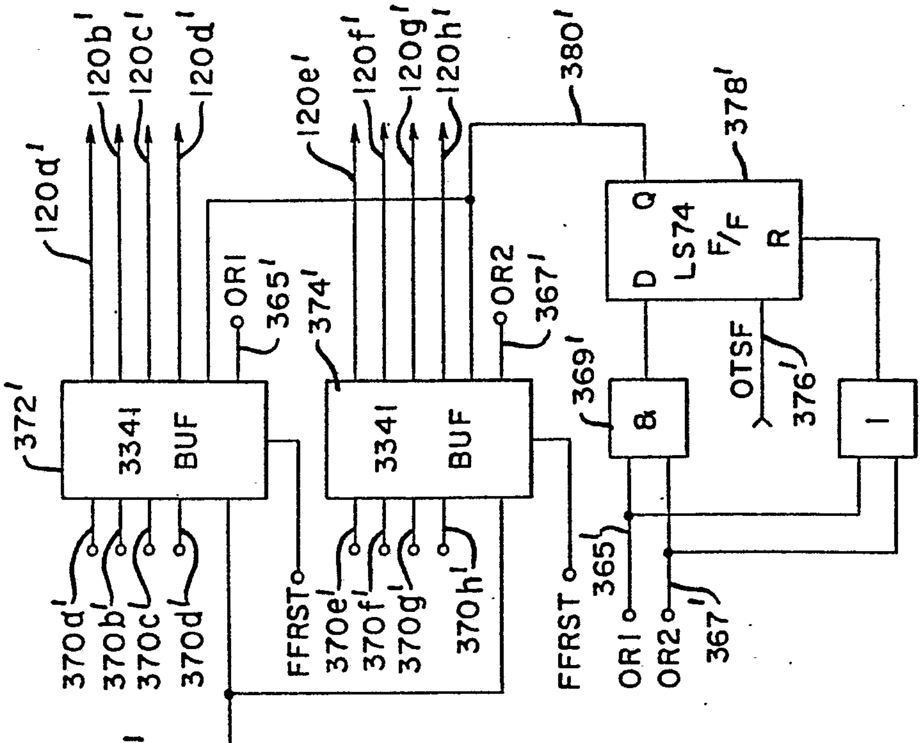
120d'
120b'
120c'
120d'
120e'
120f'
120g'
120h'
380'
378'
372'
3341
BUF
OR1
365'
374'
3341
BUF
OR2
367'
369'
&
D
Q
LS74
F/F
R
OTSF
376'
1
370d'
370b'
370c'
370d'
FFRST
370e'
370f'
370g'
370h'
FFRST
365
OR1
OR2
367'
363'
1
131'
WRFF
&
361'
359'
ENFFW
CØ3

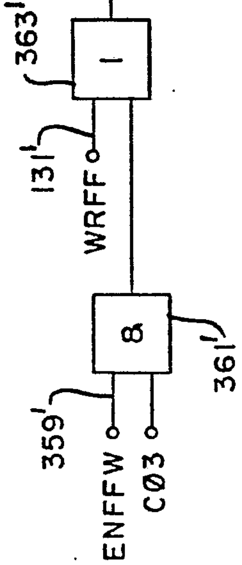

FIG. 20

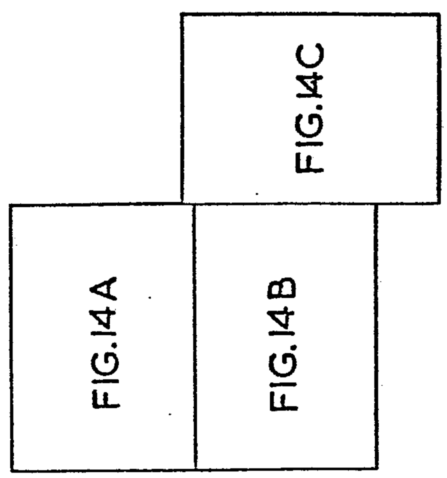
FIG.14C
FIG.14A
FIG.14B

FIG. 15

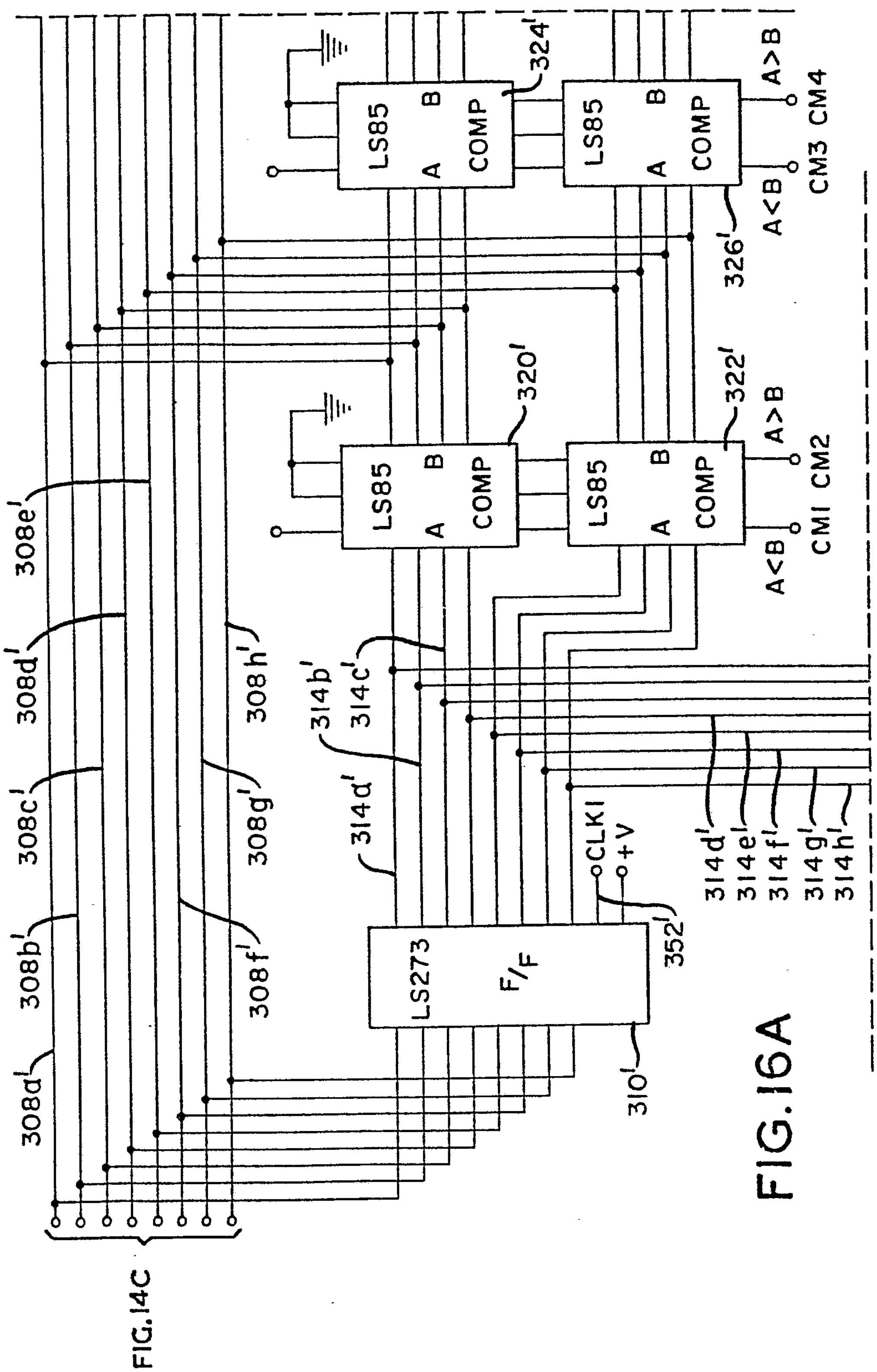

308a'
308b'
308c'
308d'
308e'
308f'
308g'
308h'
LS85
A
B
COMP
324'
326'
A<B
A>B
CM3
CM4
320'
322'
CM1
CM2
314a'
314b'
314c'
314d'
314e'
314f'
314g'
314h'
LS273
F/F
CLK1
+V
352'
310'
FIG.14C


FIG.16A

FIG.16B

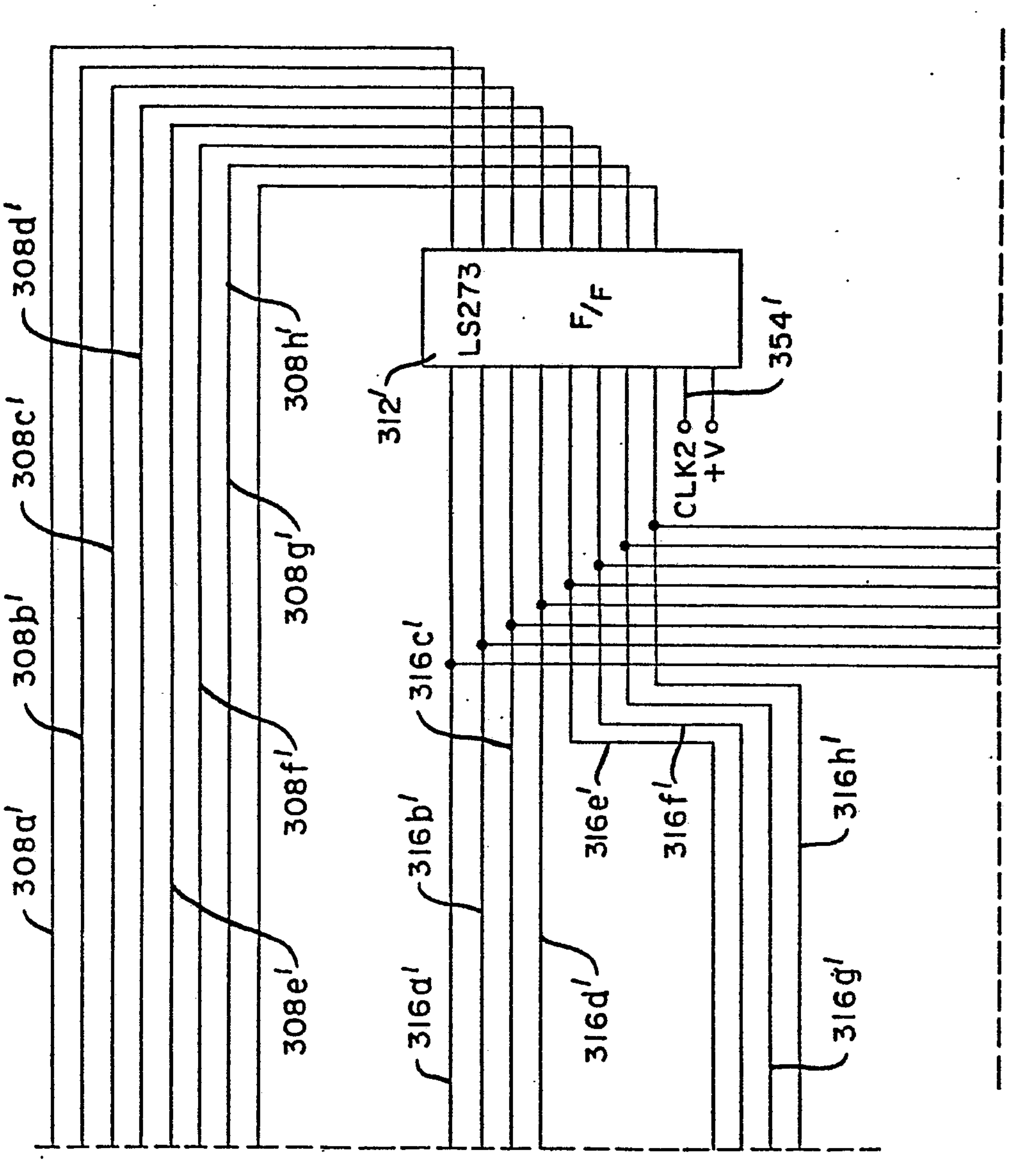
308a'
308b'
308c'
308d'
308e'
308f'
308g'
308h'
LS273
F/F
312'
354'
CLK2
+V
316a'
316b'
316c'
316d'
316e'
316f'
316g'
316h'

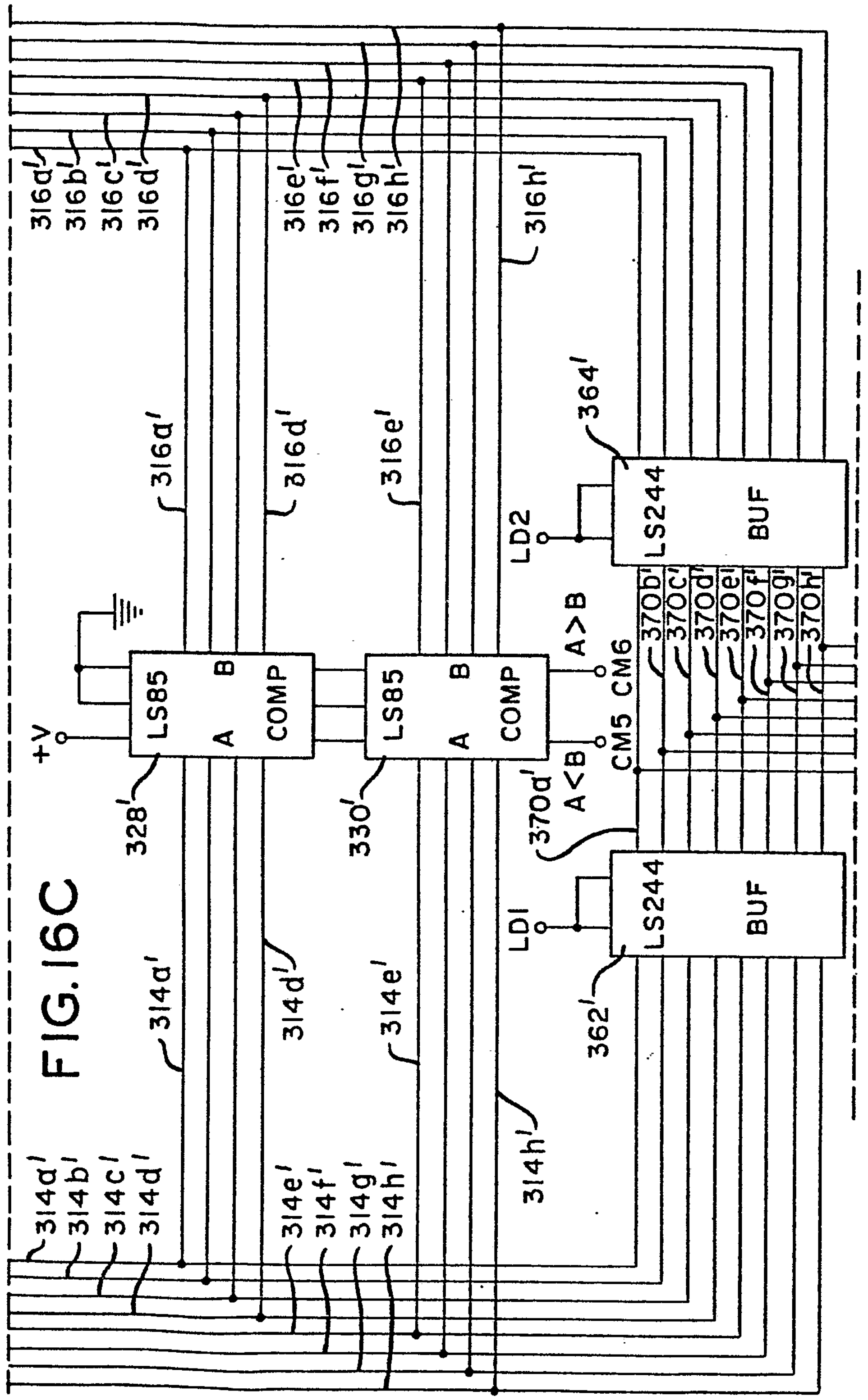
+V
LS85
A
B
COMP
328'
LS85
A
B
COMP
330'
A>B
CM6
CM5
A<B
316a'
316b'
316c'
316d'
316e'
316f'
316g'
316h'
314a'
314b'
314c'
314d'
314e'
314f'
314g'
314h'
LD2
LS244
BUF
364'
LD1
LS244
BUF
362'
370a'
370b'
370c'
370d'
370e'
370f'
370g'
370h'
FIG. 16C

FIG. 17

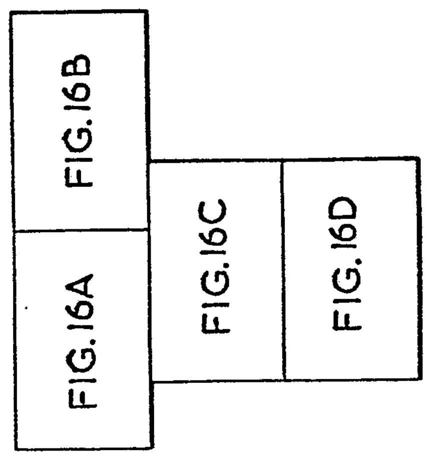


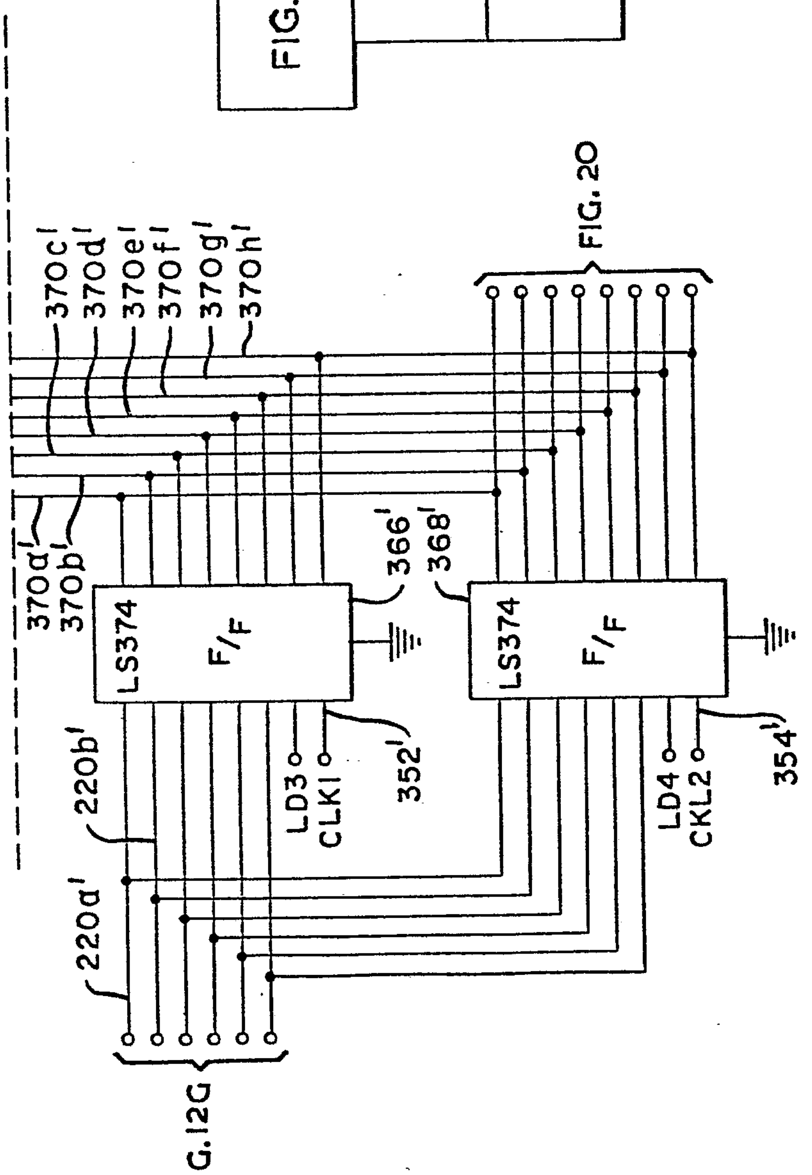


FIG. 16D

FIG. 18

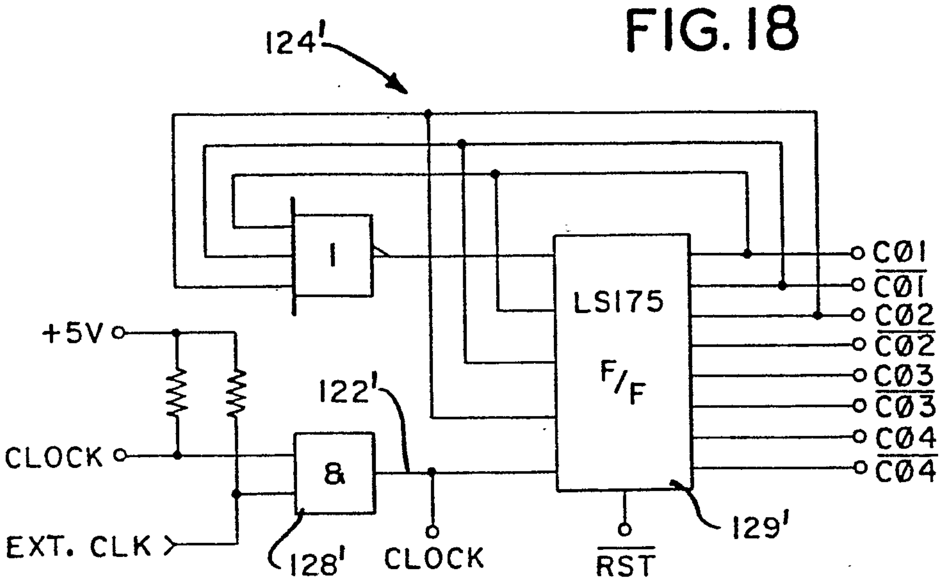
124'
1
LS175
F/F
+5V
122'
CLOCK
8
EXT. CLK
128'
CLOCK
RST
129'
CØ1
CØ1
CØ2
CØ2
CØ3
CØ3
CØ4
CØ4

FIG. 19

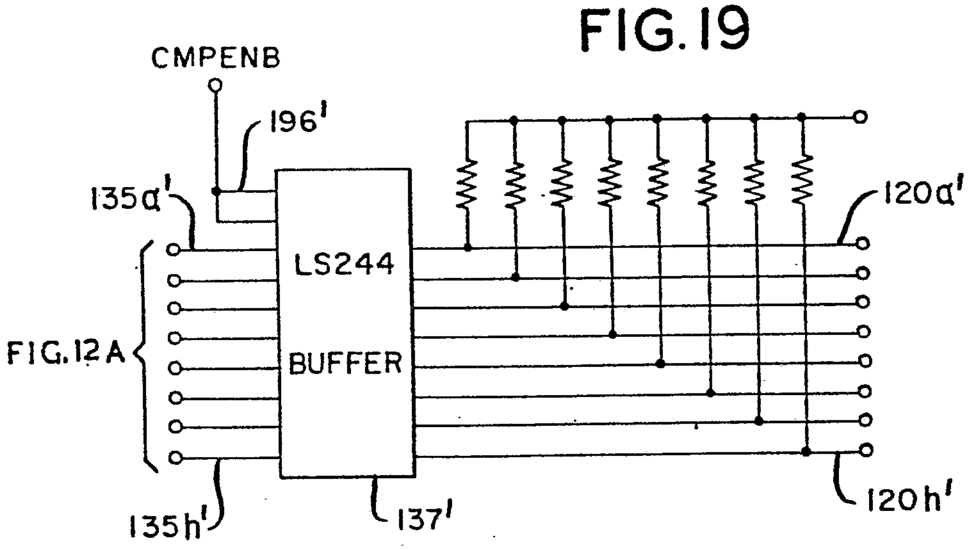
CMPENB
196'
135a'
LS244
BUFFER
FIG.12A
135h'
137'
120a'
120h'

FIG. 21

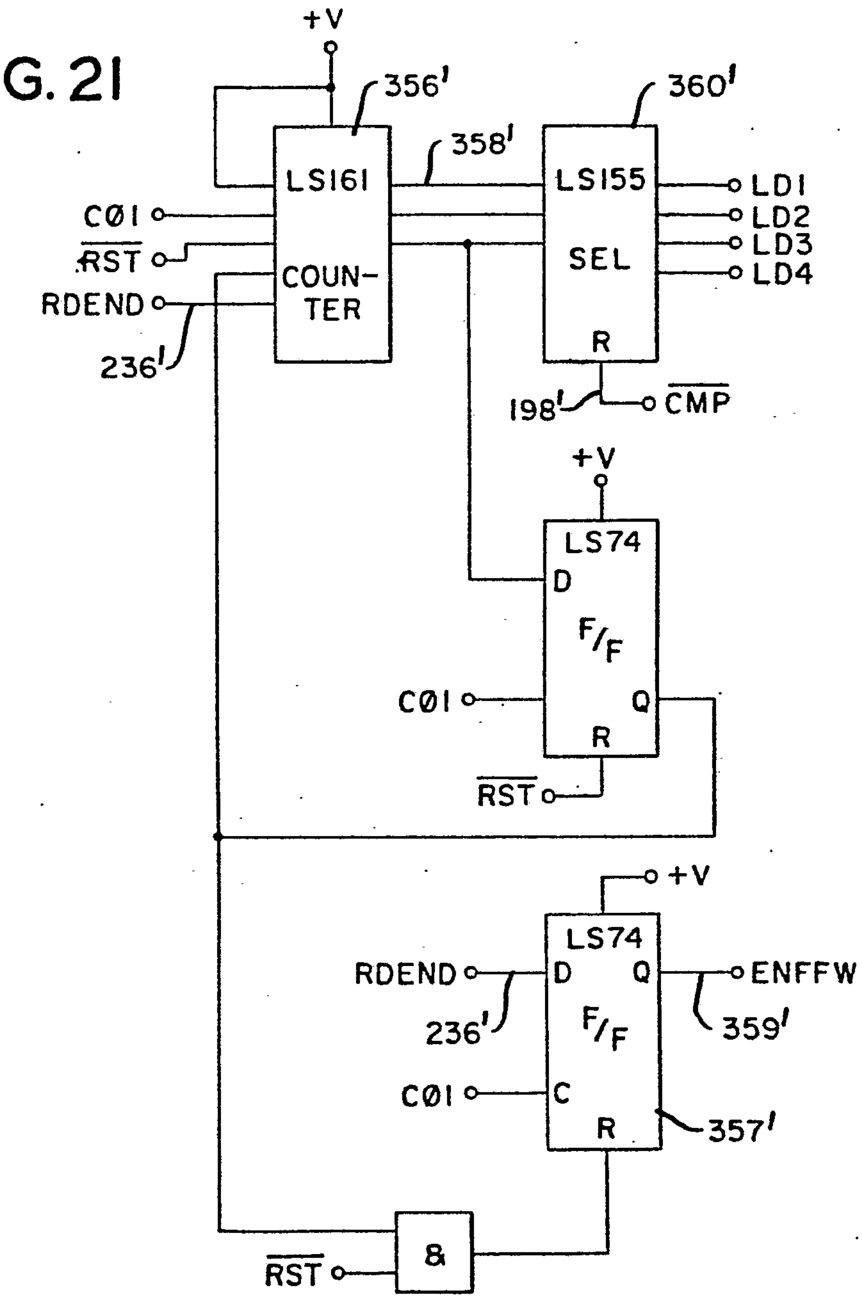

+V
356'
360'
358'
LS161
LS155
CØ1
RST
RDEND
236'
COUN-
TER
SEL
R
LD1
LD2
LD3
LD4
198'
CMP
+V
LS74
D
F/F
CØ1
Q
R
RST
+V
LS74
RDEND
D
Q
ENFFW
236'
F/F
359'
CØ1
C
R
357'
&
RST

FIG.22

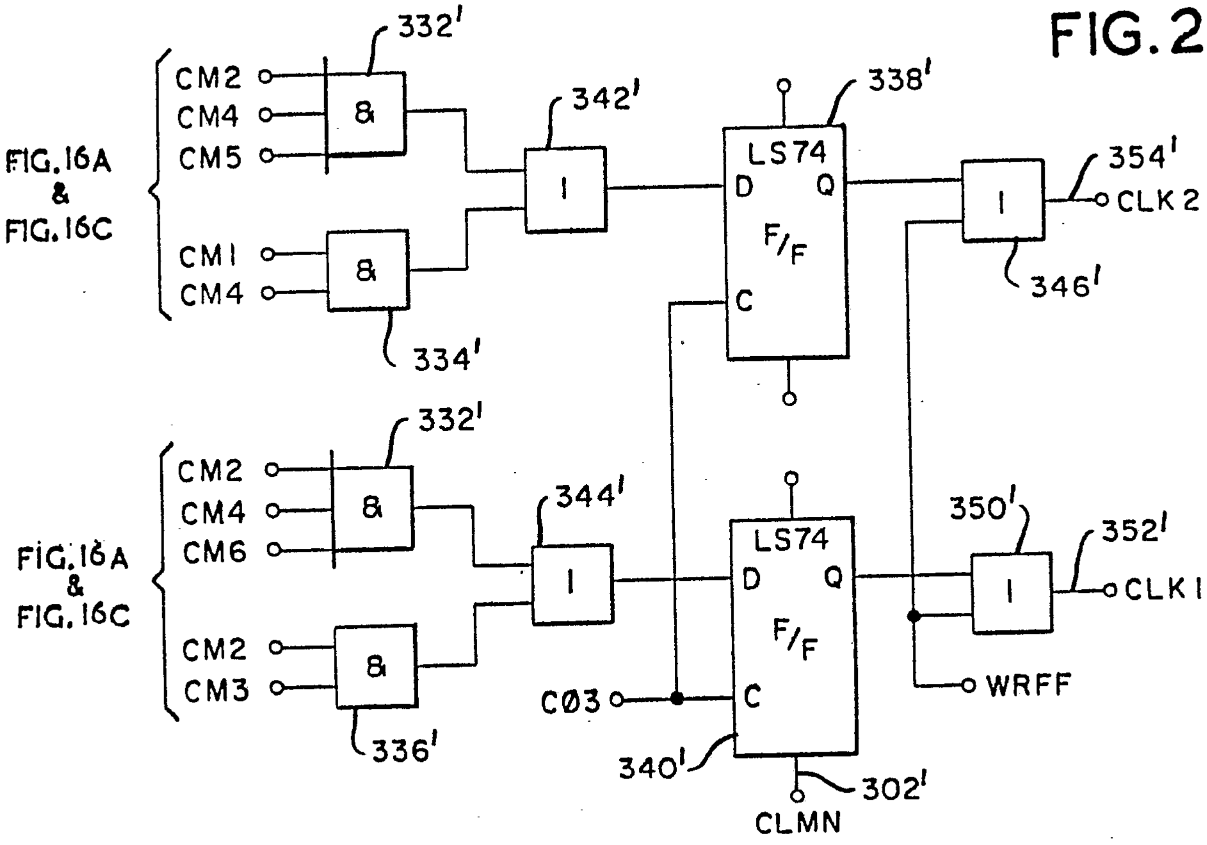

332'
CM2
CM4
CM5
&
FIG.16A & FIG.16C
CM1
CM4
&
334'
342'
1
338'
LS74
D
Q
F/F
C
354'
CLK 2
1
346'
332'
CM2
CM4
CM6
&
FIG.16A & FIG.16C
CM2
CM3
&
336'
344'
1
LS74
D
Q
F/F
C
CØ3
340'
302'
CLMN
350'
352'
1
CLK 1
WRFF

FIG. 23A

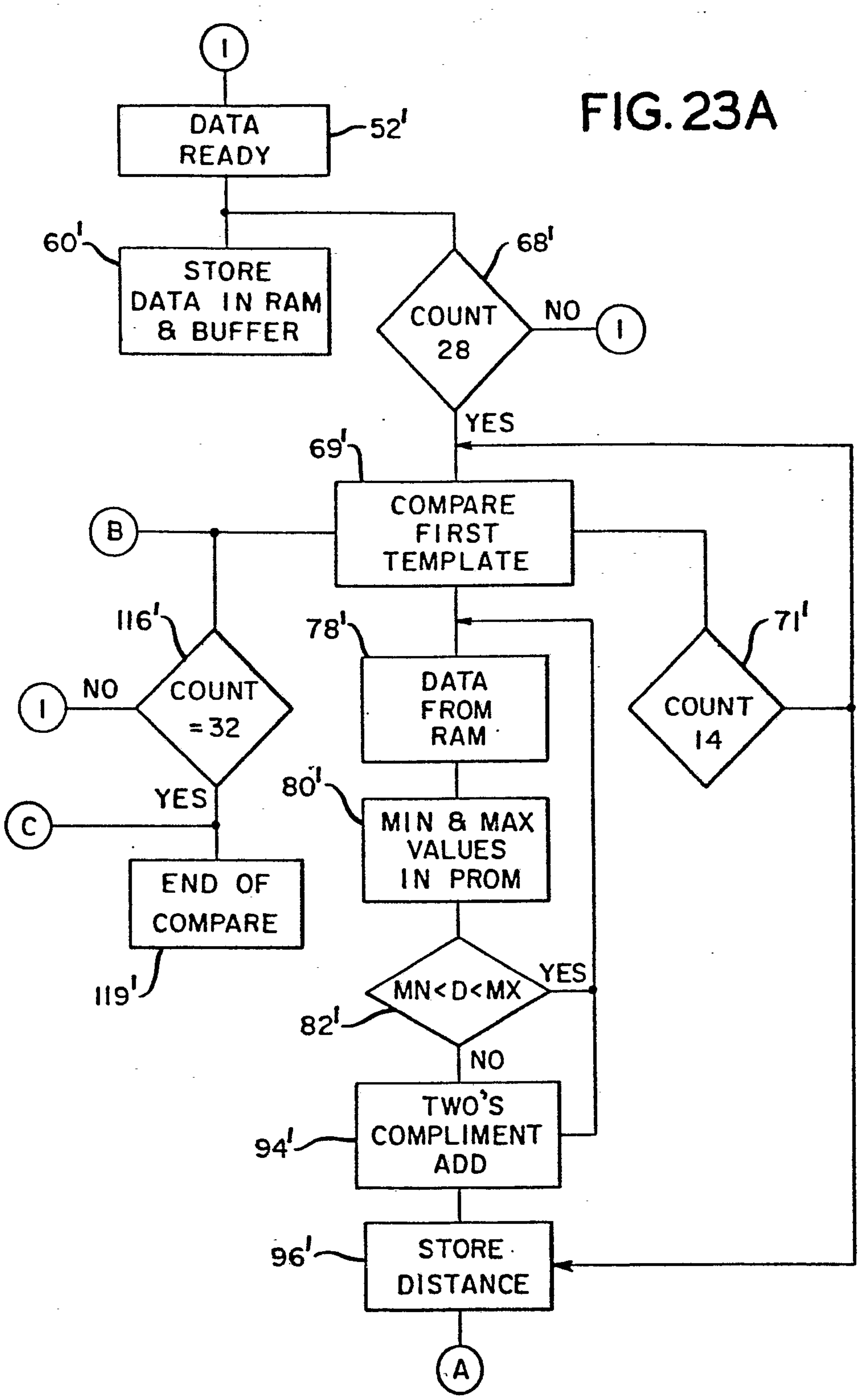

I
DATA READY
52'
60'
STORE DATA IN RAM & BUFFER
68'
COUNT 28
NO
I
YES
69'
COMPARE FIRST TEMPLATE
B
116'
COUNT =32
NO
I
YES
C
END OF COMPARE
119'
78'
DATA FROM RAM
80'
MIN & MAX VALUES IN PROM
MN<D<MX
YES
82'
NO
TWO'S COMPLIMENT ADD
94'
96'
STORE DISTANCE
A
71'
COUNT 14

FIG. 23B

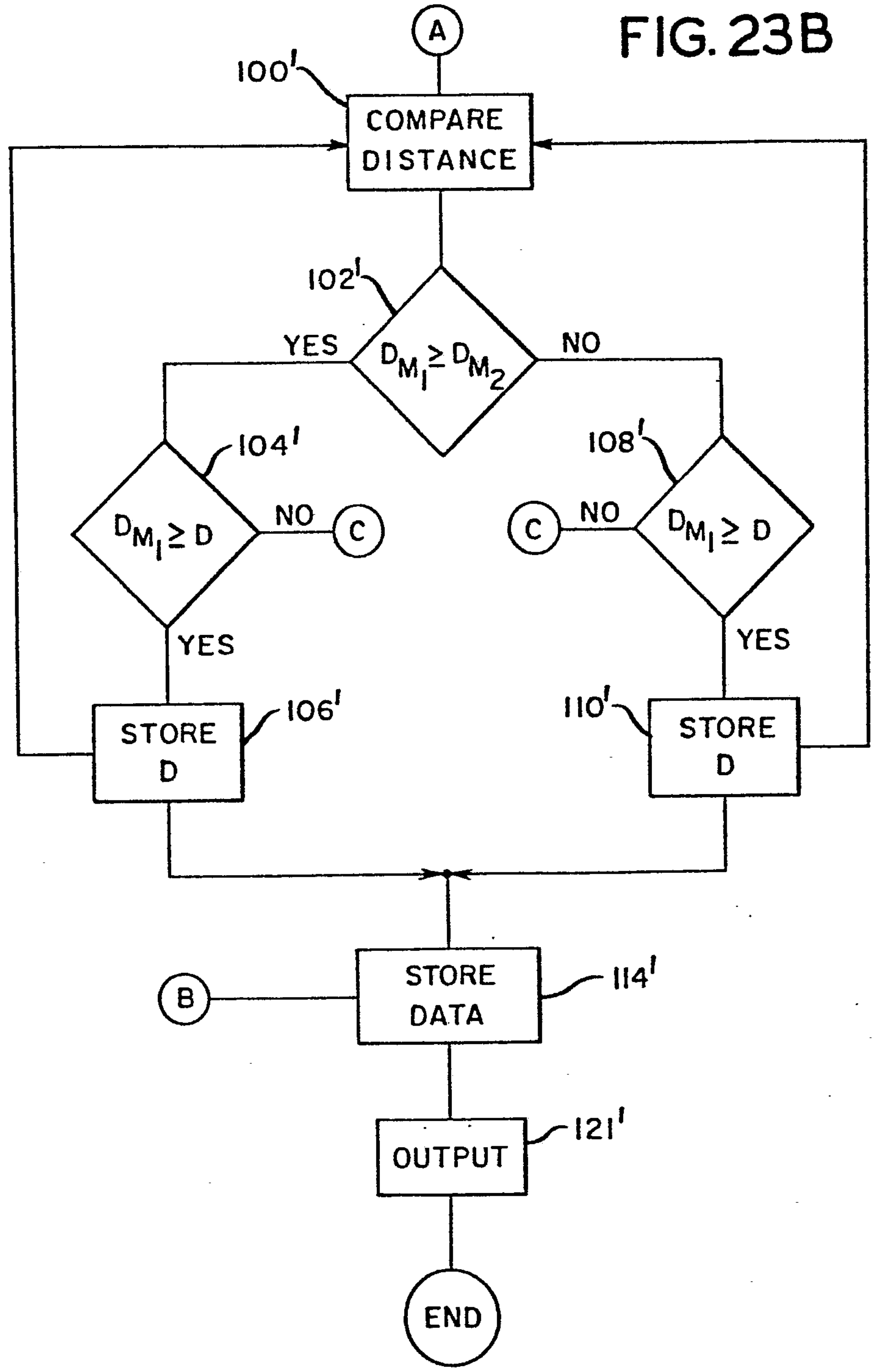
A
100'
COMPARE DISTANCE
102'
YES
$D_{M_1} \geq D_{M_2}$
NO
104'
$D_{M_1} \geq D$
NO
C
108'
C
NO
$D_{M_1} \geq D$
YES
YES
106'
STORE D
110'
STORE D
B
STORE DATA
114'
OUTPUT
121'
END

FIG.24A

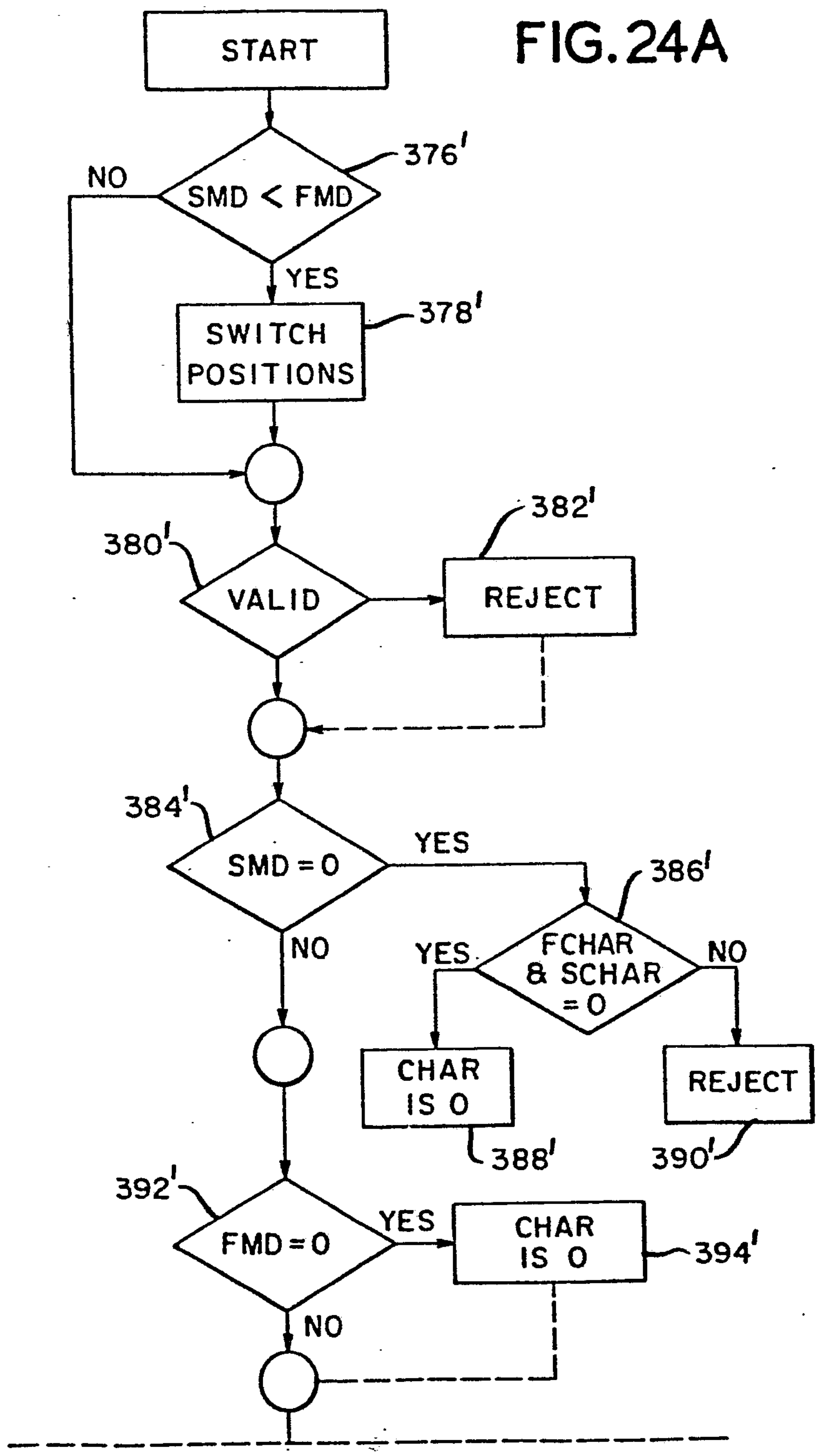
START
376'
NO
SMD < FMD
YES
SWITCH POSITIONS
378'
380'
VALID
382'
REJECT
384'
SMD = 0
YES
386'
FCHAR & SCHAR = 0
NO
YES
NO
CHAR IS O
388'
REJECT
390'
392'
FMD = 0
YES
CHAR IS O
394'
NO

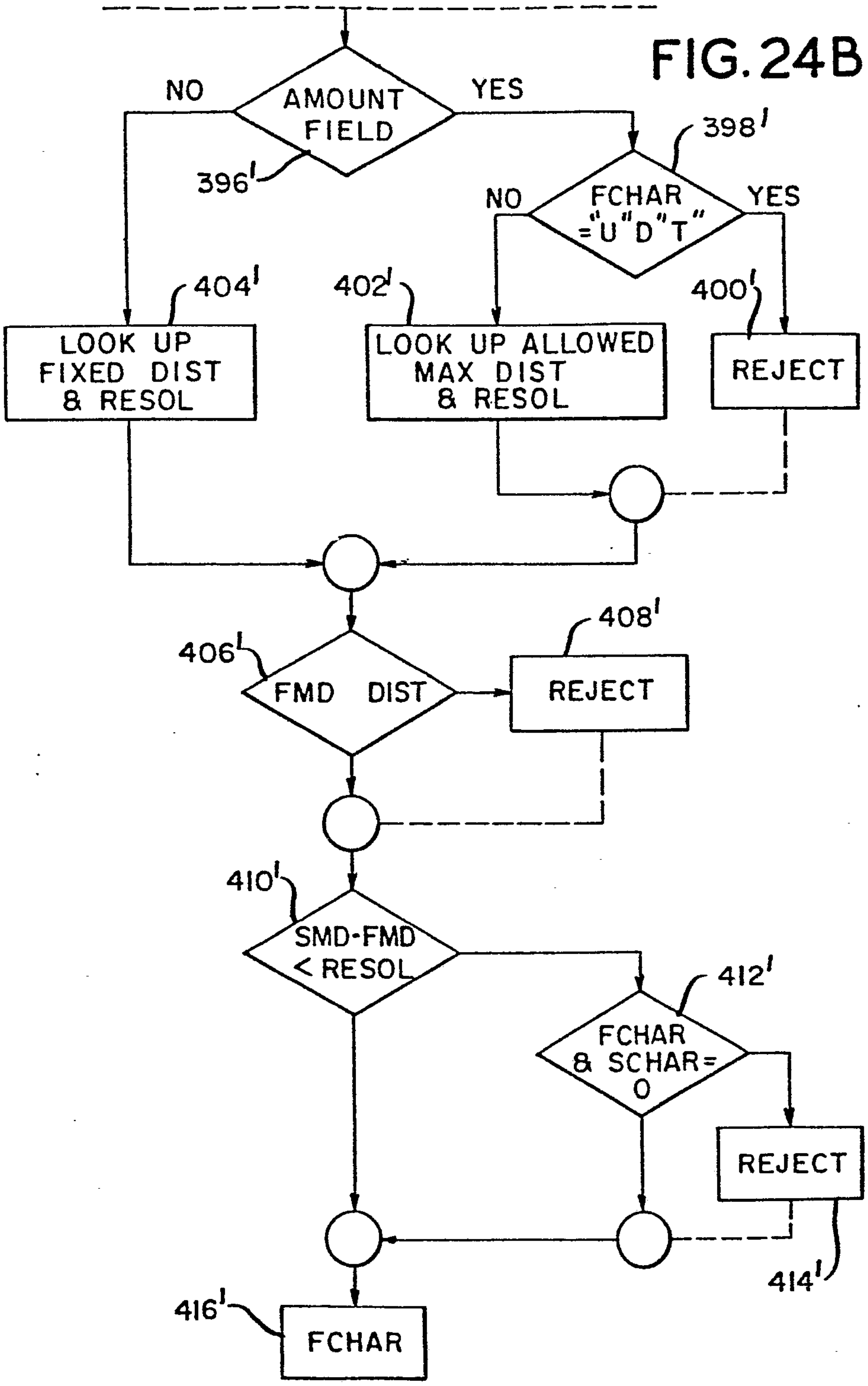
AMOUNT FIELD
NO
YES
396'
398'
FCHAR ="U"D"T"
NO
YES
404'
402'
400'
LOOK UP FIXED DIST & RESOL
LOOK UP ALLOWED MAX DIST & RESOL
REJECT
406'
FMD DIST
408'
REJECT
410'
SMD-FMD < RESOL
412'
FCHAR & SCHAR= 0
REJECT
414'
416'
FCHAR

FIG. 24B